# EUROPEAN PATENT SPECIFICATION

(11) **EP 4 075 972 B1**
(45) Date of publication and mention of the grant of the patent: **29.07.2026**
(21) Application number: 20842418.4
(22) Date of filing: 17.12.2020
(51) Int. Cl.: A01N 25/04, A01N 25/30, A01N 43/56, A01N 43/713, A01N 41/10, A01N 37/36, A01N 47/38, A01N 43/653, A01N 39/02, A01N 43/36, A01P 7/00

(54) **DIAMIDE SUSPENSION CONCENTRATE COMPOSITIONS**
DIAMID-SUSPENSIONSKONZENTRAT-ZUSAMMENSETZUNGEN
COMPOSITIONS DE CONCENTRÉ DE SUSPENSION DE DIAMIDE

(30) Priority: 19.12.2019 US 201962950251 P
(43) Date of publication of application: 26.10.2022
(60) Divisional application: 26184298.3
(73) Proprietor: FMC CORPORATION, Philadelphia, PA 19104 (US); FMC IP Technology GmbH, 8212 Neuhausen am Rheinfall (CH)
(72) Inventor: DE SOUSA, Ubiratan F., Philadelphia, PA 19104 (US); DURGIN, Forrest, Philadelphia, PA 19104 (US); PELESHANKO, Sergiy, Philadelphia, PA 19104 (US); STOEVA, Savka, Philadelphia, PA 19104 (US); TEIXEIRA, Luis, Philadelphia, PA 19104 (US)
(74) Representative: Dehns
(86) International application number: PCT/US2020/065528
(87) International publication number: WO 2021/127126

(56) References cited:
- WO-A1-2014/104153
- WO-A1-2019/195591
- CN-A- 101 961 027
- CN-A- 104 026 143
- CN-A- 107 616 176
- GB-A- 2 205 316
- JP-A- 2011 126 786
- US-A1- 2018 014 540
- US-A1- 2018 235 208

## Description

### FIELD OF DISCLOSURE

This disclosure is directed to suspension concentrate (SC) formulations comprising a pesticidal active ingredient in high strength. The claimed formulations show excellent stability and dispersibility in water, as well as low air entrapment.

### BACKGROUND

Suspension concentrate formulations comprise solid active ingredients dispersed in water. SCs have gained popularity because of their numerous benefits, including ease of use and effectiveness, elimination of dust, and elimination of solvent hazards when compared to formulation types such as emulsifiable concentrate (EC) and wettable powder (WP) formulations. To formulate a robust and stable SC formulation, the active ingredient(s) must remain insoluble in the formulation and well-dispersed under all environmental conditions.

Air entrapment is a common and critical issue in agrochemical liquid formulations. The discrepancy between real density and apparent density caused by air entrapment could be significant and lead to miscalculated active ingredients used in the crop field. Generally, increases in the active ingredient(s) strength in the formulation increase the discrepancy between real density and apparent density.

Dispersibility in water can be assessed by the spontaneity of bloom of the formulation in water. Spontaneity of bloom of the formulation in water is assessed by how easy the formulation disperses upon contact in water without any external aid such inversion or agitation. Suspension concentrates which spontaneously disperse in water are advantageous for the end user due to the ease of handling, labor saving and having a potentially shortened mixing time with tank mix partners.

WO 2014/104153 A1 discloses an agrochemical composition comprising a solid active agrochemical ingredient having an average particle size of 0.5 µm or less, and a method for producing an aqueous suspension pesticide formulation.

WO 2019/195591 A1 discloses an emulsifiable concentrate formulation comprising a succinate dehydrogenase inhibitor and a phosphoric ester, and a method for controlling phytopathogenic fungi in agricultural crops comprising applying said composition to plants, seeds or soil.

US 2018/235208 A1 discloses suspension concentrates of agrochemical active compounds and a process for their preparation.

CN 104026143 A discloses a binary insecticidal composition comprising tetrachlorantraniliprole as the first active component and a semicarbazone compound as the second active component.

CN 107616176 A discloses a composition comprising 3-(difluoromethyl)-5-fluoro-1-methyl-N-[2-(2-chloro-4-trifluoromethyl-phenoxy)phenyl]pyrazole-4-carboxamide and ryanodine receptor insecticides.

CN 101 961 027 A discloses an insecticide composition, in particular to a binary mixture containing chlorantraniliprole and beta-cypermethrin, which is used for preventing and controlling agricultural pests.

JP 2011 126786 A discloses an aqueous suspension pesticide composition which has improved dispersibility in water when added to water.

GB 2205316 A discloses substituted benzoyl-2H-pyran-3,5-(4H,6H)-diones and their use for the control of weeds.

US 2018/014540 A1 discloses an aqueous suspension agrochemical composition comprising (Z)-4-[5-(3,5-dichlorophenyl)-5-trifluoromethyl-4,5-dihydroisoxazol-3-yl]-N-(methoxyimino methyl)-2-methylbenzamide as an active ingredient.

### BRIEF DESCRIPTION

Disclosed herein are pesticidal compositions comprising suspension concentrates formulated with particulary high concentrations (high strength) of pesticidal active ingredient. These compositions exhibit spontaneity of bloom, good dispersibility in water, and reduced air entrapment. In addition, due to their high strength, the compositions disclosed herein allow for a reduced use of packaging material and water, reduced transportation costs and are associated with a reduced carbon footprint. Consequently, the pesticidal compositions disclosed herein contribute to environmental sustainability while displaying excellent pesticidal activity.

The compositions of the disclosure can be used in method of controlling phytophagous pests on plants. The method comprises applying a composition recited herein to a plurality of the plants, wherein the composition is applied to the plants via an unmanned aerial vehicle ("UAV") at a rate sufficient to achieve a total amount of applied diamide insecticide of from about 10 grams per hectare to about 500 grams per hectare, and wherein the mortality of a plurality of the sucking pests is at least 75% evaluated at three days after exposure to the active ingredient. As used herein, UAV refers generally to any unmanned or remotely piloted vehicle or system.

The compositions of the disclosure can be used in a method of controlling phytophagous pests on plants. The method comprises applying a composition recited herein to a plurality of the plants, wherein the composition is applied to the plants via an unmanned aerial vehicle at a rate sufficient to achieve a total amount of applied diamide insecticide of from about 10 grams per hectare to about 50 grams per hectare, and wherein the mortality of a plurality of the sucking pests is at least 75% evaluated at three days after exposure to the active ingredient.

The compositions of the disclosure can be used in method of controlling phytophagous pests on plants. The method comprises applying a composition recited herein to a plurality of the plants, wherein the composition is applied to the plants via an unmanned aerial vehicle at a rate sufficient to achieve a total amount of applied diamide insecticide of from about 15 grams per hectare to about 30 grams per hectare, and wherein the mortality of a plurality of the sucking pests is at least 75% evaluated at three days after exposure to the active ingredient.

The compositions of the disclosure can be used in method of controlling phytophagous pests on plants. The method comprises applying a composition recited herein to a plurality of the plants, wherein the composition is applied to the plants via an unmanned aerial vehicle at a rate sufficient to achieve a total amount of applied diamide insecticide of from about 2 grams per hectare to about 150 grams per hectare, and wherein the mortality of a plurality of the sucking pests is at least 75% evaluated at three days after exposure to the active ingredient.

In some aspect of the disclosure, the compositions disclosed herein are useful for protecting tree nuts, such as but not limited to for example, chestnut, walnuts, hazelnuts, almond, pecan, pistachio, cashew nuts and macadamia nuts.

In one aspect, the disclosure relates to an agrochemical suspension concentrate composition comprising:
(i) a pesticidal active ingredient at a concentration from about 10 wt% to about 60 wt% selected from the group consisting of chlorantraniliprole, cyantraniliprole, tetrachlorantraniliprole, bromoantraniliprole, dichlorantraniliprole, tetraniliprole, cyclaniliprole, cyhalodiamide, flubendiamide, and combinations thereof, or selected from indoxacarb, *N*-(1-methylcyclopropyl)-2-(3-pyridinyl)-2*H*-indazole-4-carboxamide, Fluindapyr, Flutriafol, Tetflupyrolimet, 5-chloro-2-[3-chloro-2-[3-(difluoromethyl)-5-isoxazolyl]phenoxy]-pyrimidine, Beflubutamide-M, Bixlozone, Sulfentrazone, and combinations thereof;
(ii) at least one dispersant at a concentration from about 0.1 wt% to about 2 wt% selected from sulfonated aromatic polymer sodium salts, alkyl naphthalene sulfonate condensate sodium salts, alkyl naphthalene sulfonates, alkyl naphthalene sulfonate salts, naphthalene sulfonate salts, naphthalene sulfonate condensates, naphthalene sulfonate-formaldehyde condensates, naphthalenesulfonic acid polymers with formaldehyde and sodium, naphthalene sulfonate condensate sodium salts, alkyl naphthalene sulfonate-formaldehyde condensates, alkyl naphthalene sulfonate-formaldehyde condensate salts, and combinations thereof, or selected from sodium lignosulfonate, calcium lignosulfonate, lignosulfonic acid sodium salt, lignosulfonic acid, and combinations thereof;
(iii) a gemini surfactant, wherein the gemini surfactant comprises two polar groups selected from alcohols, halogens, amines, phosphates, sulfates, sulfonates, and carboxylates and two hydrophobic chains selected from branched or unbranched C₁-C₁₂ alkyl, branched or unbranched C₂-C₁₂ alkenyl, and branched or unbranched C₂-C₁₂ alkynyl; and
(iv) optionally at least one adjuvant; wherein the weight ratio of the dispersant to the gemini surfactant is from about 1:1 to about 20:1 or from about 1:2 to about 1:20.

The agrochemical suspension concentration compositions may be prepared by a method (not according to the invention)
A) forming a first mixture comprising
   the pesticidal active ingredient;
   the at least one dispersant;
   the gemini surfactant; and
   optionally at least one adjuvant;
B) mixing the first mixture;
C) milling the first mixture;
D) optionally forming a second mixture comprising
   the first mixture; and
   at least one adjuvant; and
E) optionally mixing the second mixture.

### BRIEF DESCRIPTION OF THE DRAWINGS

**Fig. 1****.** Density vs time measured for compositions 1A, 1B, and 1C at T=0, 5, 15 and 30 min after shaking each composition during formulation.
**Fig. 2****.** Density vs time measured for compositions 5A, 5B, 5C, 5D, 5E, and 5F at T=0, 5, 15 and 30 min after shaking each composition during formulation.
**Fig. 3****.** Density vs time measured for compositions 5G, 5H, and 5I at T=0, 5, 15 and 30 min after shaking each composition during formulation.
**Fig. 4****.** Density vs time measured for composition 2A at T=0, 5, 15 and 30 min after shaking each composition during formulation.

### DETAILED DESCRIPTION OF THE DISCLOSURE

As used herein, the terms "comprises," "comprising," "includes," "including," "has," "having," "contains", "containing," "characterized by" or any other variation thereof, are intended to cover a non-exclusive inclusion, subject to any limitation explicitly indicated. For example, a composition, mixture, process or method that comprises a list of elements is not necessarily limited to only those elements but may include other elements not expressly listed or inherent to such composition, mixture, process or method.

The transitional phrase "consisting of" excludes any element, step, or ingredient not specified. If in the claim, such would close the claim to the inclusion of materials other than those recited except for impurities ordinarily associated therewith. When the phrase "consisting of" appears in a clause of the body of a claim, rather than immediately following the preamble, it limits only the element set forth in that clause; other elements are not excluded from the claim as a whole.

The transitional phrase "consisting essentially of" is used to define a composition or method that includes materials, steps, features, components, or elements, in addition to those literally disclosed, provided that these additional materials, steps, features, components, or elements do not materially affect the basic and novel characteristic(s) of the claimed disclosure. The term "consisting essentially of" occupies a middle ground between "comprising" and "consisting of".

Where a disclosure or a portion thereof is defined with an openended term such as "comprising," it should be readily understood that (unless otherwise stated) the description should be interpreted to also describe such an disclosure using the terms "consisting essentially of" or "consisting of."

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, the indefinite articles "a" and "an" preceding an element or component of the disclosure are intended to be nonrestrictive regarding the number of instances (i.e. occurrences) of the element or component. Therefore "a" or "an" should be read to include one or at least one, and the singular word form of the element or component also includes the plural unless the number is obviously meant to be singular.

As used herein, the term "about" means plus or minus 10% of the value.

In one embodiment, the pesticidal active ingredient is selected from chlorantraniliprole, cyantraniliprole, tetrachlorantraniliprole, bromoantraniliprole, dichlorantraniliprole, tetraniliprole, cyclaniliprole, cyhalodiamide, flubendiamide, and combinations thereof. In another embodiment, the pesticidal active ingredient is selected from chlorantraniliprole, cyantraniliprole, and combinations thereof. In another embodiment, the pesticidal active ingredient is chlorantraniliprole. In another embodiment, the pesticidal active ingredient is cyantraniliprole.

In some embodiments, the pesticidal active ingredient is present in an from about 10 wt% to about 60 wt%, from about 10 wt% to about 50 wt%, from about 20% to about 60 wt%, from about 20 wt% to about 50 wt%, from about 15 wt% to about 40 wt%, from about 20 wt% to about 35 wt%, or from about 25 wt% to about 35 wt%. In one embodiment, the pesticidal active ingredient is present in high strength. Useful amounts of the pesticidal active ingredient in a high strength formulation, include but are not limited to from about 30 wt% to about 60 wt%, from about 30 wt% to about 55 wt%, from about 35 wt% to about 50 wt%, or from about 45 wt% to about 55 wt%. In one embodiment, the pesticidal active ingredient is present in a concentration of about 600 g/L.

In one embodiment, the pesticidal active ingredient is present relative to a naphthalene sulfonate dispersant or a lignosulfonate dispersant in a weight ratio in the range of about 100:1 to about 2:1, from about 90:1 to about 3:1, from about 80:1 to about 4:1; from about 70:1 to about 5:1, form about 60:1 to about 10:1, or from about 50:1 to about 20:1.

Water may be used to dilute the suspension concentrate compositions to provide spray mixtures (not according to the invention) that can be used according to the disclosure. The concentration of active compound in the spray mixtures of the disclosure can be varied within a certain range. In general, the concentration of active compound is from about 0.0003 to about 5 per cent by weight, or from about 0.0003 to about 3 per cent by weight, or form about 0.0003 to about 2 per cent by weight, or form about 0.0003 to about 1 per cent by weight.

The spray mixtures can be prepared by conventional methods. For example, a concentrate can be prepared by combining the components required in any desired sequence. Typically, the components are combined at temperatures between 10 °C and 30 °C, mixing the batch until homogeneous, and, if appropriate, filtering the resulting mixture. To prepare aqueous spray mixtures that are ready for application, the concentrated formulation can be mixed with a quantity of water, with stirring and/or pumping if necessary to uniformly distribute the formulation in the water.

Conventional mixing apparatus and/or spray equipment suitable for the purpose can be employed for the preparation and application of the spray mixtures of the disclosure.

In one embodiment, the suspension concentrate formulation further comprises an additional pesticidal active ingredient selected from abamectin, acephate, acequinocyl, acetamiprid, acrinathrin, acynonapyr, afidopyropen ([(3S,4R,4aF,6S,6aS,12R,12aS,12bS)-3-[(cyclopropylcarbonyl)oxy]-1,3,4,4a,5,6,6a,12,12a,12b-decahydro-6,12-dihydroxy-4,6a,12b-trimethyl-11-oxo-9-(3-pyridinyl)-2H,11H-naphtho[2,1-b]pyrano[3,4-e]pyran-4-yl]methyl cyclopropanecarboxylate), amidoflumet, amitraz, avermectin, azadirachtin, azinphos methyl, benfuracarb, bensultap, benzpyrimoxan, bifenthrin, kappa-bifenthrin, bifenazate, bistrifluron, borate, broflanilide, buprofezin, cadusafos, carbaryl, carbofuran, cartap, carzol, chlorantraniliprole, chlorfenapyr, chlorfluazuron, chloroprallethrin, chlorpyrifos, chlorpyrifos-e, chlorpyrifos-methyl, chromafenozide, clofentezin, chloroprallethrin, clothianidin, cyantraniliprole, (3-bromo-1-(3-chloro-2-pyridinyl)-N-[4-cyano-2-methyl-6-[(methylamino)carbonyl]phenyl]-1H-pyrazole-5-carboxamide), cyclaniliprole (3-bromo-N-[2-bromo-4-chloro-6-[[(1-cyclopropylethyl)amino]carbonyl]phenyl]-1-(3-chloro-2-pyridinyl)-1H-pyrazole-5-carboxamide), cycloprothrin, cycloxaprid ((5S,8R)-1-[(6-chloro-3-pyridinyl)methyl]-2,3,5,6,7,8-hexahydro-9-nitro-5,8-Epoxy-1H-imidazo[1,2-a]azepine), cyenopyrafen, cyflumetofen, cyfluthrin, beta cyfluthrin, cyhalodiamide, cyhalothrin, gamma-cyhalothrin, lambda-cyhalothrin, cypermethrin, alpha-cypermethrin, zeta-cypermethrin, cyromazine, deltamethrin, diafenthiuron, diazinon, dicloromezotiaz, dieldrin, diflubenzuron, dimefluthrin, dimehypo, dimethoate, dimpropyridaz, dinotefuran, diofenolan, emamectin, emamectin benzoate, endosulfan, esfenvalerate, ethiprole, etofenprox, epsilon-metofluthrin, etoxazole, fenbutatin oxide, fenitrothion, fenothiocarb, fenoxycarb, fenpropathrin, fenvalerate, fipronil, flometoquin (2-ethyl-3,7-dimethyl-6-[4-(trifluoromethoxy)phenoxy]-4-quinolinyl methyl carbonate), flonicamid, fluazaindolizine, flubendiamide, flucythrinate, flufenerim, flufenoxuron, flufenoxystrobin (methyl (αE)-2-[[2-chloro-4-(trifluoromethyl)phenoxy]methyl]-α-(methoxymethylene)benzeneacetate), fluensulfone (5-chloro-2-[(3,4,4-trifluoro-3-buten-1-yl)sulfonyl]thiazole), fluhexafon, fluopyram, flupiprole (1-[2,6-dichloro-4-(trifluoromethyl)phenyl]-5-[(2-methyl-2-propen-1-yl)amino]-4-[(trifluoromethyl)sulfinyl]-1H-pyrazole-3-carbonitrile), flupyradifurone (4-[[(6-chloro-3-pyridinyl)methyl](2,2-difluoroethyl)amino]-2(5H)-furanone), flupyrimin, fluvalinate, tau fluvalinate, fluxametamide, fonophos, formetanate, fosthiazate, gamma-cyhalothrin, halofenozide, heptafluthrin ([2,3,5,6-tetrafluoro-4-(methoxymethyl)phenyl]methyl 2,2-dimethyl-3-[(1Z)-3,3,3-trifluoro-1-propen-1-yl]cyclopropanecarboxylate), hexaflumuron, hexythiazox, hydramethylnon, imidacloprid, indoxacarb, insecticidal soaps, isofenphos, isocycloseram, kappa-tefluthrin, lambda-cyhalothrin, lufenuron, malathion, meperfluthrin ([2,3,5,6-tetrafluoro-4-(methoxymethyl)phenyl]methyl (1R,3S)-3-(2,2-dichloroethenyl)-2,2-dimethylcyclopropanecarboxylate), metaflumizone, metaldehyde, methamidophos, methidathion, methiocarb, methomyl, methoprene, methoxychlor, metofluthrin, methoxyfenozide, epsilon-metofluthrin, epsilon-momfluorothrin, monocrotophos, monofluorothrin ([2,3,5,6-tetrafluoro-4-(methoxymethyl)phenyl]methyl 3-(2-cyano-1-propen-1-yl)-2,2-dimethylcyclopropanecarboxylate), nicotine, nitenpyram, nithiazine, novaluron, noviflumuron, *N-*[1,1-dimethyl-2-(methylthio)ethyl]-7-fluoro-2-(3-pyridinyl)-2*H*-indazole-4-carboxamide, *N*-[1,1-dimethyl-2-(methylsulfinyl)ethyl]-7-fluoro-2-(3-pyridinyl)-2*H*-indazole-4-carboxamide, *N*-[1,1-dimethyl-2-(methylsulfonyl)ethyl]-7-fluoro-2-(3-pyridinyl)-2*H*-indazole-4-carboxamide, N-(1-methylcyclopropyl)-2-(3-pyridinyl)-2H-indazole-4-carboxamide, and *N-*[1-(difluoromethyl)cyclopropyl]-2-(3-pyridinyl)-2*H*-indazole-4-carboxamide, oxamyl, oxazosulfyl, parathion, parathion methyl, permethrin, phorate, phosalone, phosmet, phosphamidon, pirimicarb, profenofos, profluthrin, propargite, protrifenbute, pyflubumide (1,3,5-trimethyl-N-(2-methyl-1-oxopropyl)-N-[3-(2-methylpropyl)-4-[2,2,2-trifluoro-1-methoxy-1-(trifluoromethyl)ethyl]phenyl]-1H-pyrazole-4-carboxamide), pymetrozine, pyrafluprole, pyrethrin, pyridaben, pyridalyl, pyrifluquinazon, pyriminostrobin (methyl (αE)-2-[[[2-[(2,4-dichlorophenyl)amino]-6-(trifluoromethyl)-4-pyrimidinyl]oxy]methyl]-α-(methoxymethylene)benzeneacetate), pydiflumetofen, pyriprole, pyriproxyfen, rotenone, ryanodine, silafluofen, spinetoram, spinosad, spirodiclofen, spiromesifen, spiropidion, spirotetramat, sulprofos, sulfoxaflor (N-[methyloxido[1-[6-(trifluoromethyl)-3-pyridinyl]ethyl]-λ4-sulfanylidene]cyanamide), tebufenozide, tebufenpyrad, teflubenzuron, tefluthrin, kappa-tefluthrin, terbufos, tetrachlorantraniliprole, tetrachlorvinphos, tetramethrin, tetramethylfluthrin ([2,3,5,6-tetrafluoro-4-(methoxymethyl)phenyl]methyl 2,2,3,3-tetramethylcyclopropanecarboxylate), tetraniliprole, thiacloprid, thiamethoxam, thiodicarb, thiosultap-sodium, tioxazafen (3-phenyl-5-(2-thienyl)-1,2,4-oxadiazole), tolfenpyrad, tralomethrin, triazamate, trichlorfon, triflumezopyrim (2,4-dioxo-1-(5-pyrimidinylmethyl)-3-[3-(trifluoromethyl)phenyl]-2H- pyrido[1,2-a]pyrimidinium inner salt), triflumuron, tyclopyrazoflor, zeta-cypermethrin, Bacillus thuringiensis delta-endotoxins, entomopathogenic bacteria, entomopathogenic viruses, entomopathogenic fungi, and combinations thereof.

The compositions of the present disclosure may optionally include one or more pest control agents selected from insecticides, herbicides, biopesticides, nematicides, bactericides, and fungicides. General references for these pest control agents (*i.e.* insecticides, fungicides, nematocides, acaricides, herbicides and biological agents) include The Pesticide Manual, 13th Edition, C. D. S. Tomlin, Ed., British Crop Protection Council, Farnham, Surrey, U.K., 2003 and The BioPesticide Manual, 2nd Edition, British Crop Protection Council, Farnham, Surrey, U.K., 2001.

Non-limiting examples of insecticides include abamectin, acephate, acequinocyl, acetamiprid, acrinathrin, acynonapyr, afidopyropen ([(3*S*,4*R*,4a*R*,6*S*,6a*S*,12*R*,12a*S*,12b*S*)-3-[(cyclopropylcarbonyl)oxy]-1,3,4,4a,5,6,6a,12,12a,12b-decahydro-6,12-dihydroxy-4,6a,12b-trimethyl-11-oxo-9-(3-pyridinyl)-2*H*,11*H-*naphtho[2,1-*b*]pyrano[3,4-*e*]pyran-4-yl]methyl cyclopropanecarboxylate), amidoflumet, amitraz, avermectin, azadirachtin, azinphos-methyl, benfuracarb, bensultap, benzpyrimoxan, bifenthrin, kappa-bifenthrin, bifenazate, bistrifluron, borate, broflanilide, buprofezin, cadusafos, carbaryl, carbofuran, cartap, carzol, chlorfenapyr, chlorfluazuron, chloroprallethrin, chlorpyrifos, chlorpyrifos-e, chlorpyrifos-methyl, chromafenozide, clofentezin, chloroprallethrin, clothianidin, cycloprothrin, cycloxaprid ((5*S*,8*R*)-1-[(6-chloro-3-pyridinyl)methyl]-2,3,5,6,7,8-hexahydro-9-nitro-5,8-Epoxy-1*H*-imidazo[1,2-*a*]azepine), cyenopyrafen, cyflumetofen, cyfluthrin, beta-cyfluthrin, cyhalothrin, gamma-cyhalothrin, lambda-cyhalothrin, cypermethrin, alpha-cypermethrin, zeta-cypermethrin, cyromazine, deltamethrin, diafenthiuron, diazinon, dicloromesotiaz, dieldrin, diflubenzuron, dimefluthrin, dimehypo, dimethoate, dimpropyridaz, dinotefuran, diofenolan, emamectin, emamectin benzoate, endosulfan, esfenvalerate, ethiprole, etofenprox, epsilon-metofluthrin, etoxazole, fenbutatin oxide, fenitrothion, fenothiocarb, fenoxycarb, fenpropathrin, fenvalerate, fipronil, flometoquin (2-ethyl-3,7-dimethyl-6-[4-(trifluoromethoxy)phenoxy]-4-quinolinyl methyl carbonate), flonicamid, fluazaindolizine, flucythrinate, flufenerim, flufenoxuron, flufenoxystrobin (methyl (α*E*)-2-[[2-chloro-4-(trifluoromethyl)phenoxy]methyl]-α-(methoxymethylene)benzeneacetate), fluensulfone (5-chloro-2-[(3,4,4-trifluoro-3-buten-1-yl)sulfonyl]thiazole), fluhexafon, fluopyram, flupiprole (1-[2,6-dichloro-4-(trifluoromethyl)phenyl]-5-[(2-methyl-2-propen-1-yl)amino]-4-[(trifluoromethyl)sulfinyl]-1*H*-pyrazole-3-carbonitrile), flupyradifurone (4-[[(6-chloro-3-pyridinyl)methyl](2,2-difluoroethyl)amino]-2(5*H*)-furanone), flupyrimin, fluvalinate, tau-fluvalinate, fluxametamide, fonophos, formetanate, fosthiazate, gamma-cyhalothrin, halofenozide, heptafluthrin ([2,3,5,6-tetrafluoro-4-(methoxymethyl)phenyl]methyl 2,2-dimethyl-3-[(12)-3,3,3-trifluoro-1-propen-1-yl]cyclopropanecarboxylate), hexaflumuron, hexythiazox, hydramethylnon, imidacloprid, indoxacarb, insecticidal soaps, isofenphos, isocycloseram, kappa-tefluthrin, lambda-cyhalothrin, lufenuron, malathion, meperfluthrin ([2,3,5,6-tetrafluoro-4-(methoxymethyl)phenyl]methyl (1*R*,3*S*)-3-(2,2-dichloroethenyl)-2,2-dimethylcyclopropanecarboxylate), metaflumizone, metaldehyde, methamidophos, methidathion, methiocarb, methomyl, methoprene, methoxychlor, metofluthrin, methoxyfenozide, epsilon-metofluthrin, epsilon-momfluorothrin, monocrotophos, monofluorothrin ([2,3,5,6-tetrafluoro-4-(methoxymethyl)phenyl]methyl 3-(2-cyano-1-propen-1-yl)-2,2-dimethylcyclopropanecarboxylate), nicotine, nitenpyram, nithiazine, novaluron, noviflumuron, *N-*[1,1-dimethyl-2-(methylthio)ethyl]-7-fluoro-2-(3-pyridinyl)-2*H-*indazole-4-carboxamide, *N-*[1,1-dimethyl-2-(methylsulfinyl)ethyl]-7-fluoro-2-(3-pyridinyl)-2*H*-indazole-4-carboxamide, *N-*[1,1-dimethyl-2-(methylsulfonyl)ethyl]-7-fluoro-2-(3-pyridinyl)-2*H*-indazole-4-carboxamide, N-(1-methylcyclopropyl)-2-(3-pyridinyl)-2H-indazole-4-carboxamide, *N*-[1-(difluoromethyl)cyclopropyl]-2-(3-pyridinyl)-2*H*-indazole-4-carboxamide, oxamyl, oxazosulfyl, parathion, parathion-methyl, permethrin, phorate, phosalone, phosmet, phosphamidon, pirimicarb, profenofos, profluthrin, propargite, protrifenbute, pyflubumide (1,3,5-trimethyl-*N*-(2-methyl-1-oxopropyl)-*N*-[3-(2-methylpropyl)-4-[2,2,2-trifluoro-1-methoxy-1-(trifluoromethyl)ethyl]phenyl]-1*H*-pyrazole-4-carboxamide), pymetrozine, pyrafluprole, pyrethrin, pyridaben, pyridalyl, pyrifluquinazon, pyriminostrobin (methyl (α*E*)-2-[[[2-[(2,4-dichlorophenyl)amino]-6-(trifluoromethyl)-4-pyrimidinyl]oxy]methyl]-α-(methoxymethylene)benzeneacetate), pyriprole, pyriproxyfen, rotenone, ryanodine, silafluofen, spinetoram, spinosad, spirodiclofen, spiromesifen, spiropidion, spirotetramat, sulprofos, sulfoxaflor (*N*-[methyloxido[1-[6-(trifluoromethyl)-3-pyridinyl]ethyl]-λ⁴-sulfanylidene]cyanamide), tebufenozide, tebufenpyrad, teflubenzuron, tefluthrin, kappa-tefluthrin, terbufos, tetrachlorvinphos, tetramethrin, tetramethylfluthrin ([2,3,5,6-tetrafluoro-4-(methoxymethyl)phenyl]methyl 2,2,3,3-tetramethylcyclopropanecarboxylate), thiacloprid, thiamethoxam, thiodicarb, thiosultap-sodium, tioxazafen (3-phenyl-5-(2-thienyl)-1,2,4-oxadiazole), tolfenpyrad, tralomethrin, triazamate, trichlorfon, triflumezopyrim (2,4-dioxo-1-(5-pyrimidinylmethyl)-3-[3-(trifluoromethyl)phenyl]-2*H*-pyrido[1,2-*a*]pyrimidinium inner salt), triflumuron, tyclopyrazoflor, zeta-cypermethrin, *Bacillus thuringiensis* delta-endotoxins, entomopathogenic bacteria, entomopathogenic viruses or entomopathogenic fungi, can combinations thereof.

Non-limiting examples of fungicides include fungicides such as acibenzolar-S-methyl, aldimorph, ametoctradin, aminopyrifen, amisulbrom, anilazine, azaconazole, azoxystrobin, benalaxyl (including benalaxyl-M), benodanil, benomyl, benthiavalicarb (including benthiavalicarb-isopropyl), benzovindiflupyr, bethoxazin, binapacryl, biphenyl, bitertanol, bixafen, blasticidin-S, boscalid, bromuconazole, bupirimate, buthiobate, carboxin, carpropamid, captafol, captan, carbendazim, chloroneb, chlorothalonil, chlozolinate, copper hydroxide, copper oxychloride, copper sulfate, coumoxystrobin, cyazofamid, cyflufenamid, cymoxanil, cyproconazole, cyprodinil, dichlobentiazox, dichlofluanid, diclocymet, diclomezine, dicloran, diethofencarb, difenoconazole, diflumetorim, dimethirimol, dimethomorph, dimoxystrobin, diniconazole (including diniconazole-M), dinocap, dipymetitrone, dithianon, dithiolanes, dodemorph, dodine, econazole, etaconazole, edifenphos, enoxastrobin (also known as enestroburin), epoxiconazole, ethaboxam, ethirimol, etridiazole, famoxadone, fenamidone, fenaminstrobin, fenarimol, fenbuconazole, fenfuram, fenhexamide, fenoxanil, fenpiclonil, fenpicoxamid, fenpropidin, fenpropimorph, fenpyrazamine, fentin acetate, fentin hydroxide, ferbam, ferimzone, flometoquin, florylpicoxamid, fluopimomide, fluazinam, fludioxonil, flufenoxystrobin, fluindapyr, flumorph, fluopicolide, fluopyram, fluoxapiprolin, fluoxastrobin, fluquinconazole, flusilazole, flusulfamide, flutianil, flutolanil, flutriafol, fluxapyroxad, folpet, fthalide (also known as phthalide), fuberidazole, furalaxyl, furametpyr, hexaconazole, hymexazole, guazatine, imazalil, imibenconazole, iminoctadine albesilate, iminoctadine triacetate, inpyrfluxam, iodicarb, ipconazole, ipfentrifluconazole, ipflufenoquin, isofetamid, iprobenfos, iprodione, iprovalicarb, isoflucypram, isoprothiolane, isopyrazam, isotianil, kasugamycin, kresoxim-methyl, lancotrione, mancozeb, mandipropamid, mandestrobin, maneb, mapanipyrin, mefentrifluconazole, mepronil, meptyldinocap, metalaxyl (including metalaxyl-M/mefenoxam), metconazole, methasulfocarb, metiram, metominostrobin, metyltetraprole, metrafenone, myclobutanil, naftitine, neo-asozin (ferric methanearsonate), nuarimol, octhilinone, ofurace, orysastrobin, oxadixyl, oxathiapiprolin, oxolinic acid, oxpoconazole, oxycarboxin, oxytetracycline, penconazole, pencycuron, penflufen, penthiopyrad, perfurazoate, phosphorous acid (including salts thereof, e.g., fosetyl-aluminm), picoxystrobin, piperalin, polyoxin, probenazole, prochloraz, procymidone, propamocarb, propiconazole, propineb, proquinazid, prothiocarb, prothioconazole, pydiflumetofen (Adepidyn^{®}), pyraclostrobin, pyrametostrobin, pyrapropoyne, pyraoxystrobin, pyraziflumid, pyrazophos, pyribencarb, pyributacarb, pyridachlometyl, pyrifenox, pyriofenone, perisoxazole, pyrimethanil, pyrifenox, pyrrolnitrin, pyroquilon, quinconazole, quinmethionate, quinofumelin, quinoxyfen, quintozene, silthiofam, sedaxane, simeconazole, spiroxamine, streptomycin, sulfur, tebuconazole, tebufloquin, teclofthalam, tecloftalam, tecnazene, terbinafine, tetraconazole, thiabendazole, thifluzamide, thiophanate, thiophanate-methyl, thiram, tiadinil, tolclofos-methyl, tolprocarb, tolyfluanid, triadimefon, triadimenol, triarimol, triazoxide, tribasic copper sulfate, triclopyricarb, tridemorph, trifloxystrobin, triflumizole, trimoprhamide tricyclazole, trifloxystrobin, triforine, triticonazole, uniconazole, validamycin, valifenalate (also known as valifenal), vinclozolin, zineb, ziram, zoxamide, 1-[4-[4-[5-(2,6-difluorophenyl)-4,5-dihydro-3-isoxazolyl]-2-thiazolyl]-1-piperidinyl]-2-[5-methyl-3-(trifluoromethyl)-1*H*-pyrazol-1-yl]ethanone, and combinations thereof.

Non-limiting examples of nematocides include fluopyram, spirotetramat, thiodicarb, fosthiazate, abamectin, iprodione, fluensulfone, dimethyl disulfide, tioxazafen, 1,3-dichloropropene (1,3-D), metam (sodium and potassium), dazomet, chloropicrin, fenamiphos, ethoprophos, cadusaphos, terbufos, imicyafos, oxamyl, carbofuran, tioxazafen, *Bacillus firmus, Pasteuria nishizawae,* and combinations thereof. A non-limiting example of a bactericide is streptomycin. Non-limiting examples of acaricides include amitraz, chinomethionat, chlorobenzilate, cyhexatin, dicofol, dienochlor, etoxazole, fenazaquin, fenbutatin oxide, fenpropathrin, fenpyroximate, hexythiazox, propargite, pyridaben, tebufenpyrad, and combinations thereof.

### Phytophagous Insects

Phytophagous insects refers to invertebrate pests causing injury to plants by feeding upon them, such as by eating foliage, stem, leaf, fruit or seed tissue or by sucking the vascular juices of plants. Leaf feeders may be external (exophytic) or they may mine the tissues, sometimes even specializing on a particular cell type. There are phytophagous insect species in the majority of insect orders, including *Hemiptera, Thysanoptera, Orthoptera, Lepidoptera, Coleoptera, Heteroptera, Hymenoptera,* and *Diptera.*

Examples of agronomic or nonagronomic invertebrate pests include eggs, larvae and adults of the order Lepidoptera, such as armyworms, cutworms, loopers, and heliothines in the family Noctuidae (e.g., pink stem borer (*Sesamia inferens* Walker), corn stalk borer (*Sesamia nonagrioides* Lefebvre), southern armyworm (*Spodoptera eridania* Cramer), fall armyworm (*Spodoptera frugiperda* J. E. Smith), beet armyworm (*Spodoptera exigua* Hübner), cotton leafworm (*Spodoptera littoralis* Boisduval), yellowstriped armyworm (*Spodoptera ornithogalli* Guenée), black cutworm (*Agrotis ipsilon* Hufnagel), velvetbean caterpillar (*Anticarsia gemmatalis* Hübner), green fruitworm (*Lithophane antennata* Walker), cabbage armyworm (*Barathra brassicae* Linnaeus), soybean looper (*Pseudoplusia includens* Walker), cabbage looper (*Trichoplusia ni* Hübner), tobacco budworm (*Heliothis virescens* Fabricius)); borers, casebearers, webworms, coneworms, cabbageworms and skeletonizers from the family Pyralidae (e.g., European corn borer (*Ostrinia nubilalis* Hübner), navel orangeworm (*Amyelois transitella* Walker), corn root webworm (*Crambus caliginosellus* Clemens), sod webworms (Pyralidae: *Crambinae*) such as sod worm (*Herpetogramma licarsisalis* Walker), sugarcane stem borer (*Chilo infuscatellus* Snellen), tomato small borer (*Neoleucinodes elegantalis* Guenée), green leafroller (*Cnaphalocrocis medinalis*)*,* grape leaffolder (*Desmiafuneralis* Hübner), melon worm (*Diaphania nitidalis* Stoll), cabbage center grub (*Helluala hydralis* Guenée), yellow stem borer (*Scirpophaga incertulas* Walker), early shoot borer (*Scirpophaga infuscatellus* Snellen), white stem borer (*Scirpophaga innotata* Walker), top shoot borer (*Scirpophaga nivella* Fabricius), dark-headed rice borer (*Chilo polychrysus* Meyrick), striped riceborer (*Chilo suppressalis* Walker), cabbage cluster caterpillar (*Crocidolomia binotalis* English)); leafrollers, budworms, seed worms, and fruit worms in the family Tortricidae (e.g., codling moth (*Cydia pomonella* Linnaeus), grape berry moth (*Endopiza viteana* Clemens), oriental fruit moth (*Grapholita molesta* Busck), citrus false codling moth (*Cryptophlebia leucotreta* Meyrick), citrus borer (*Ecdytolopha aurantiana* Lima), redbanded leafroller (*Argyrotaenia velutinana* Walker), obliquebanded leafroller (*Choristoneura rosaceana* Harris), light brown apple moth (*Epiphyas postvittana* Walker), European grape berry moth (*Eupoecilia ambiguella* Hübner), apple bud moth (*Pandemis pyrusana* Kearfott), omnivorous leafroller (*Platynota stultana* Walsingham), barred fruit-tree tortrix (*Pandemis cerasana* Hübner), apple brown tortrix (*Pandemis heparana* Denis & Schiffermüller)); and many other economically important lepidoptera (e.g., diamond back moth (*Plutella xylostella* Linnaeus), pink bollworm (*Pectinophora gossypiella* Saunders), gypsy moth (*Lymantria dispar* Linnaeus), peach fruit borer (*Carposina niponensis* Walsingham), peach twig borer (*Anarsia lineatella* Zeller), potato tuberworm (*Phthorimaea operculella* Zeller), spotted teniform leafminer (*Lithocolletis blancardella* Fabricius), Asiatic apple leafminer (*Lithocolletis ringoniella* Matsumura), rice leaffolder (*Lerodea eufala* Edwards), apple leafminer (*Leucoptera scitella* Zeller)); eggs, nymphs and adults of the order Blattodea including cockroaches from the families Blattellidae and Blattidae (e.g., oriental cockroach (*Blatta orientalis* Linnaeus), Asian cockroach (*Blatella asahinai* Mizukubo), German cockroach (*Blattella germanica* Linnaeus), brownbanded cockroach (*Supella longipalpa* Fabricius), American cockroach (*Periplaneta americana* Linnaeus), brown cockroach (*Periplaneta brunnea* Burmeister), Madeira cockroach (*Leucophaea maderae* Fabricius)), smoky brown cockroach (*Periplaneta fuliginosa* Service), Australian Cockroach (*Periplaneta australasiae* Fabr.), lobster cockroach (*Nauphoeta cinerea* Olivier) and smooth cockroach (*Symploce pallens* Stephens)); eggs, foliar feeding, fruit feeding, root feeding, seed feeding and vesicular tissue feeding larvae and adults of the order Coleoptera including weevils from the families Anthribidae, Bruchidae, and Curculionidae (e.g., boll weevil (*Anthonomus grandis* Boheman), rice water weevil (*Lissorhoptrus oryzophilus* Kuschel), granary weevil (*Sitophilus granarius* Linnaeus), rice weevil (*Sitophilus oryzae* Linnaeus)), annual bluegrass weevil (*Listronotus maculicollis* Dietz), bluegrass billbug (*Sphenophorus parvulus* Gyllenhal), hunting billbug (*Sphenophorus venatus vestitus*)*,* Denver billbug (*Sphenophorus cicatristriatus* Fahraeus)); flea beetles, cucumber beetles, rootworms, leaf beetles, potato beetles, and leafminers in the family Chrysomelidae (e.g., Colorado potato beetle (*Leptinotarsa decemlineata* Say), western corn rootworm (*Diabrotica virgifera* LeConte)); chafers and other beetles from the family Scarabaeidae (e.g., Japanese beetle (*Popilliajaponica* Newman), oriental beetle (*Anomala orientalis* Waterhouse, *Exomala orientalis* (Waterhouse) Baraud), northern masked chafer (*Cyclocephala borealis* Arrow), southern masked chafer (*Cyclocephala immaculata* Olivier or C. *lurida* Bland), dung beetle and white grub (Aphodius spp.), black turfgrass ataenius (*Ataenius spretulus* Haldeman), green June beetle (*Cotinis nitida* Linnaeus), Asiatic garden beetle (*Maladera castanea* Arrow), May/June beetles (*Phyllophaga* spp.) and European chafer (*Rhizotrogus majalis* Razoumowsky)); carpet beetles from the family Dermestidae; wireworms from the family Elateridae; bark beetles from the family Scolytidae and flour beetles from the family Tenebrionidae.

In addition, agronomic and nonagronomic pests include: eggs, adults and larvae of the order Dermaptera including earwigs from the family Forficulidae (e.g., European earwig (*Forficula auricularia* Linnaeus), black earwig (*Chelisoches morio* Fabricius)); eggs, immatures, adults and nymphs of the orders Hemiptera and Homoptera such as, plant bugs from the family Miridae, cicadas from the family Cicadidae, leafhoppers (e.g. *Empoasca* spp.) from the family Cicadellidae, potato leafhoppers, bed bugs (e.g., *Cimex lectularius* Linnaeus) from the family Cimicidae, planthoppers from the families Fulgoroidae and Delphacidae, treehoppers from the family Membracidae, psyllids from the family Psyllidae, whiteflies from the family Aleyrodidae, aphids from the family Aphididae, phylloxera from the family Phylloxeridae, mealybugs from the family Pseudococcidae, scales from the families Coccidae, Diaspididae and Margarodidae, lace bugs from the family Tingidae, stink bugs from the family Pentatomidae, chinch bugs (e.g., hairy chinch bug (*Blissus leucopterus hirtus* Montandon) and southern chinch bug (*Blissus insularis* Barber)) and other seed bugs from the family Lygaeidae, spittlebugs from the family Cercopidae squash bugs from the family Coreidae, and red bugs and cotton stainers from the family Pyrrhocoridae.

Agronomic and nonagronomic pests also include: eggs, larvae, nymphs and adults of the order Acari (mites) such as spider mites and red mites in the family Tetranychidae (e.g., European red mite (*Panonychus ulmi* Koch), two spotted spider mite (*Tetranychus urticae* Koch), McDaniel mite (*Tetranychus mcdanieli* McGregor)); flat mites in the family Tenuipalpidae (e.g., citrus flat mite (*Brevipalpus lewisi* McGregor)); rust and bud mites in the family Eriophyidae and other foliar feeding mites and mites important in human and animal health, i.e. dust mites in the family Epidermoptidae, follicle mites in the family Demodicidae, grain mites in the family Glycyphagidae; ticks in the family Ixodidae, commonly known as hard ticks (e.g., deer tick (*Ixodes scapularis* Say), Australian paralysis tick (*Ixodes holocyclus* Neumann), American dog tick (*Dermacentor variabilis* Say), lone star tick (*Amblyomma americanum* Linnaeus)) and ticks in the family Argasidae, commonly known as soft ticks (e.g., relapsing fever tick (*Ornithodoros turicata*)*,* common fowl tick (*Argas radiatus*))*;* scab and itch mites in the families Psoroptidae, Pyemotidae, and Sarcoptidae; eggs, adults and immatures of the order Orthoptera including grasshoppers, locusts and crickets (e.g., migratory grasshoppers (e.g., *Melanoplus sanguinipes* Fabricius, *M. differentialis* Thomas), American grasshoppers (e.g., *Schistocerca americana* Drury), desert locust (*Schistocerca gregaria* Forskal), migratory locust (*Locusta migratoria* Linnaeus), bush locust (*Zonocerus* spp.), house cricket (*Acheta domesticus* Linnaeus), mole crickets (e.g., tawny mole cricket (*Scapteriscus vicinus* Scudder) and southern mole cricket (*Scapteriscus borellii* Giglio-Tos)); eggs, adults and immatures of the order Diptera including leafminers (e.g., *Liriomyza* spp. such as serpentine vegetable leafminer (*Liriomyza sativae* Blanchard)), midges, fruit flies (Tephritidae), frit flies (e.g., *Oscinellafrit* Linnaeus), soil maggots, house flies (e.g., *Musca domestica* Linnaeus), lesser house flies (e.g., *Fannia canicularis* Linnaeus, *F. femoralis* Stein), stable flies (e.g., *Stomoxys calcitrans* Linnaeus), face flies, horn flies, blow flies (e.g., *Chrysomya* spp., *Phormia* spp.), and other muscoid fly pests, horse flies (e.g., *Tabanus* spp.), bot flies (e.g., *Gastrophilus* spp., *Oestrus* spp.), cattle grubs (e.g., *Hypoderma* spp.), deer flies (e.g., *Chrysops* spp.), keds (e.g., *Melophagus ovinus* Linnaeus) and other Brachycera, mosquitoes (e.g., *Aedes* spp., *Anopheles* spp., *Culex* spp.), black flies (e.g., *Prosimulium* spp., *Simulium* spp.), biting midges, sand flies, sciarids, and other Nematocera; eggs, adults and immatures of the order Thysanoptera including onion thrips (*Thrips tabaci* Lindeman), flower thrips (*Frankliniella* spp.), and other foliar feeding thrips; insect pests of the order Hymenoptera including ants of the Family Formicidae including the Florida carpenter ant (*Camponotus floridanus* Buckley), red carpenter ant (*Camponotus ferrugineus* Fabricius), black carpenter ant (*Camponotus pennsylvanicus* De Geer), white-footed ant (*Technomyrmex albipes* fr. Smith), big headed ants (*Pheidole* sp.), ghost ant (*Tapinoma melanocephalum* Fabricius); Pharaoh ant (*Monomorium pharaonis* Linnaeus), little fire ant (*Wasmannia auropunctata* Roger), fire ant (*Solenopsis geminata* Fabricius), red imported fire ant (*Solenopsis invicta* Buren), Argentine ant (*Iridomyrmex humilis* Mayr), crazy ant (*Paratrechina longicornis* Latreille), pavement ant (*Tetramorium caespitum* Linnaeus), cornfield ant (*Lasius alienus* Förster) and odorous house ant (*Tapinoma sessile* Say). Other Hymenoptera including bees (including carpenter bees), hornets, yellow jackets, wasps, and sawflies (*Neodiprion* spp.; *Cephus* spp.); insect pests of the order Isoptera including termites in the Termitidae (e.g., *Macrotermes* sp., *Odontotermes obesus* Rambur), Kalotermitidae (e.g., *Cryptotermes* sp.), and Rhinotermitidae (e.g., *Reticulitermes* sp., *Coptotermes* sp., *Heterotermes tenuis* Hagen) families, the eastern subterranean termite (*Reticulitermes flavipes* Kollar), western subterranean termite (*Reticulitermes hesperus* Banks), Formosan subterranean termite (*Coptotermesformosanus* Shiraki), West Indian drywood termite (*Incisitermes immigrans* Snyder), powder post termite (*Cryptotermes brevis* Walker), drywood termite (*Incisitermes snyderi* Light), southeastern subterranean termite (*Reticulitermes virginicus* Banks), western drywood termite (*Incisitermes minor* Hagen), arboreal termites such as *Nasutitermes* sp. and other termites of economic importance; insect pests of the order Thysanura such as silverfish (*Lepisma saccharina* Linnaeus) and firebrat (*Thermobia domestica* Packard); insect pests of the order Mallophaga and including the head louse (*Pediculus humanus capitis* De Geer), body louse (*Pediculus humanus* Linnaeus), chicken body louse (*Menacanthus stramineus* Nitszch), dog biting louse (*Trichodectes canis* De Geer), fluff louse (*Goniocotes gallinae* De Geer), sheep body louse (*Bovicola ovis* Schrank), short-nosed cattle louse (*Haematopinus eurysternus* Nitzsch), long-nosed cattle louse (*Linognathus vituli* Linnaeus) and other sucking and chewing parasitic lice that attack man and animals; insect pests of the order Siphonoptera including the oriental rat flea (*Xenopsylla cheopis* Rothschild), cat flea (*Ctenocephalides felis* Bouche), dog flea (*Ctenocephalides canis* Curtis), hen flea (*Ceratophyllus gallinae* Schrank), sticktight flea (*Echidnophaga gallinacea* Westwood), human flea (*Pulex irritans* Linnaeus) and other fleas afflicting mammals and birds. Additional arthropod pests covered include: spiders in the order Araneae such as the brown recluse spider (*Loxosceles reclusa* Gertsch & Mulaik) and the black widow spider (*Latrodectus mactans* Fabricius), and centipedes in the order Scutigeromorpha such as the house centipede (*Scutigera coleoptrata* Linnaeus).

Examples of invertebrate pests of stored grain include larger grain borer (*Prostephanus truncatus*)*,* lesser grain borer (*Rhyzopertha dominica*)*,* rice weevil (*Stiophilus oryzae*)*,* maize weevil (*Stiophilus zeamais*)*,* cowpea weevil (*Callosobruchus maculatus*)*,* red flour beetle (*Tribolium castaneum*)*,* granary weevil (*Stiophilus granarius*)*,* Indian meal moth (*Plodia interpunctella*)*,* Mediterranean flour beetle (*Ephestia kuhniella*) and flat or rusty grain beetle (*Cryptolestis ferrugineus*)*.*

Compositions of the present disclosure may have activity on members of the Classes Nematoda, Cestoda, Trematoda, and Acanthocephala including economically important members of the orders Strongylida, Ascaridida, Oxyurida, Rhabditida, Spirurida, and Enoplida such as but not limited to economically important agricultural pests (i.e. root knot nematodes in the genus *Meloidogyne,* lesion nematodes in the genus *Pratylenchus,* stubby root nematodes in the genus *Trichodorus,* etc.) and animal and human health pests (i.e. all economically important flukes, tapeworms, and roundworms, such as *Strongylus vulgaris* in horses, *Toxocara canis* in dogs, *Haemonchus contortus* in sheep, *Dirofilaria immitis* Leidy in dogs, *Anoplocephala perfoliata* in horses, *Fasciola hepatica* Linnaeus in ruminants, etc.).

Compositions of the disclosure may have activity against pests in the order Lepidoptera (e.g., *Alabama argillacea* Hübner (cotton leaf worm), *Archips argyrospila* Walker (fruit tree leaf roller), *A. rosana* Linnaeus (European leaf roller) and other *Archips* species, *Chilo suppressalis* Walker (rice stem borer), *Cnaphalocrosis medinalis* Guenée (rice leaf roller), *Crambus caliginosellus* Clemens (corn root webworm), *Crambus teterrellus* Zincken (bluegrass webworm), *Cydia pomonella* Linnaeus (codling moth), *Earias insulana* Boisduval (spiny bollworm), *Earias vittella* Fabricius (spotted bollworm), *Helicoverpa armigera* Hübner (American bollworm), *Helicoverpa zea* Boddie (corn earworm), *Heliothis virescens* Fabricius (tobacco budworm), *Herpetogramma licarsisalis* Walker (sod webworm), *Lobesia botrana* Denis & Schiffermüller (grape berry moth), *Pectinophora gossypiella* Saunders (pink bollworm), *Phyllocnistis citrella* Stainton (citrus leafminer), *Pieris brassicae* Linnaeus (large white butterfly), *Pieris rapae* Linnaeus (small white butterfly), *Plutella xylostella* Linnaeus (diamond back moth), *Spodoptera exigua* Hübner (beet armyworm), *Spodoptera litura* Fabricius (tobacco cutworm, cluster caterpillar), *Spodoptera frugiperda* J. E. Smith (fall armyworm), *Trichoplusia ni* Hübner (cabbage looper) and *Tuta absoluta* Meyrick (tomato leafminer)).

Compositions of the disclosure may have significant activity on members from the order Homoptera including: *Acyrthosiphon pisum* Harris (pea aphid), *Aphis craccivora* Koch (cowpea aphid), *Aphis fabae* Scopoli (black bean aphid), *Aphis gossypii* Glover (cotton aphid, melon aphid), *Aphis pomi* De Geer (apple aphid), *Aphis spiraecola* Patch (spirea aphid), *Aulacorthum solani* Kaltenbach (foxglove aphid), *Chaetosiphon fragaefolii* Cockerell (strawberry aphid), *Diuraphis noxia* Kurdjumov/Mordvilko (Russian wheat aphid), *Dysaphis plantaginea* Paaserini (rosy apple aphid), *Eriosoma lanigerum* Hausmann (woolly apple aphid), *Hyalopterus pruni* Geoffroy (mealy plum aphid), *Lipaphis erysimi* Kaltenbach (turnip aphid), *Metopolophium dirrhodum* Walker (cereal aphid), *Macrosiphum euphorbiae* Thomas (potato aphid), *Myzus persicae* Sulzer (peach-potato aphid, green peach aphid), *Nasonovia ribisnigri* Mosley (lettuce aphid), *Pemphigus* spp. (root aphids and gall aphids), *Rhopalosiphum maidis* Fitch (corn leaf aphid), *Rhopalosiphum padi* Linnaeus (bird cherry-oat aphid), *Schizaphis graminum* Rondani (greenbug), *Sitobion avenae* Fabricius (English grain aphid), *Therioaphis maculata* Buckton (spotted alfalfa aphid), *Toxoptera aurantii* Boyer de Fonscolombe (black citrus aphid), and *Toxoptera citricida* Kirkaldy (brown citrus aphid); *Adelges* spp. (adelgids); *Phylloxera devastatrix* Pergande (pecan phylloxera); *Bemisia tabaci* Gennadius (tobacco whitefly, sweetpotato whitefly), *Bemisia argentifolii* Bellows & Perring (silverleaf whitefly), *Dialeurodes citri* Ashmead (citrus whitefly) and *Trialeurodes vaporariorum* Westwood (greenhouse whitefly); *Empoasca fabae* Harris (potato leafhopper), *Laodelphax striatellus* Fallen (smaller brown planthopper), *Macrolestes quadrilineatus* Forbes (aster leafhopper), *Nephotettix cinticeps* Uhler (green leafhopper), *Nephotettix nigropictus* Stål (rice leafhopper), *Nilaparvata lugens* Stål (brown planthopper), *Peregrinus maidis* Ashmead (corn planthopper), *Sogatella furcifera* Horvath (white-backed planthopper), *Sogatodes orizicola* Muir (rice delphacid), *Typhlocyba pomaria* McAtee white apple leafhopper, *Erythroneoura* spp. (grape leafhoppers); *Magicidada septendecim* Linnaeus (periodical cicada); *Icerya purchasi* Maskell (cottony cushion scale), *Quadraspidiotus perniciosus* Comstock (San Jose scale); *Planococcus citri* Risso (citrus mealybug); *Pseudococcus* spp. (other mealybug complex); *Cacopsylla pyricola* Foerster (pear psylla), *Trioza diospyri* Ashmead (persimmon psylla).

Compositions of this disclosure also may have activity on members from the order Hemiptera including: *Acrosternum hilare* Say (green stink bug), *Anasa tristis* De Geer (squash bug), *Blissus leucopterus* Say (chinch bug), *Cimex lectularius* Linnaeus (bed bug) *Corythuca gossypii* Fabricius (cotton lace bug), *Cyrtopeltis modesta* Distant (tomato bug), *Dysdercus suturellus* Herrich-Schaffer (cotton stainer), *Euchistus servus* Say (brown stink bug), *Euchistus variolarius* Palisot de Beauvois (one-spotted stink bug), *Graptosthetus* spp. (complex of seed bugs), *Halymorpha halys* Stål (brown marmorated stink bug), *Leptoglossus corculus* Say (leaf-footed pine seed bug), *Lygus lineolaris* Palisot de Beauvois (tarnished plant bug), *Nezara viridula* Linnaeus (southern green stink bug), *Oebalus pugnax* Fabricius (rice stink bug), *Oncopeltus fasciatus* Dallas (large milkweed bug), *Pseudatomoscelis seriatus* Reuter (cotton fleahopper). Other insect orders controlled by compounds of the disclosure include Thysanoptera (e.g., *Frankliniella occidentalis* Pergande (western flower thrips), *Scirthothrips citri* Moulton (citrus thrips), *Sericothrips variabilis* Beach (soybean thrips), and *Thrips tabaci* Lindeman (onion thrips); and the order Coleoptera (e.g., *Leptinotarsa decemlineata* Say (Colorado potato beetle), *Epilachna varivestis* Mulsant (Mexican bean beetle) and wireworms of the genera *Agriotes, Athous* or *Limonius*)*.*

In some aspects, the compositions of the disclosure are useful for controlling Western Flower Thrips (*Frankliniella occidentalis*)*.* In some aspects, the compositions of the disclosure are useful for controlling potato leafhopper (*Empoasca fabae*)*.* In some aspects, the compositions of the disclosure are useful for controlling cotton melon aphid (*Aphis gossypii*)*.* In some aspects, the compositions of the disclosure are useful for controlling diamond backmoth (*Plutella xylostella* L.). In some aspects, the compositions of the disclosure are useful for controlling Silverleaf Whitefly (*Bemisia argentifolii* Bellows & Perring).

In cyantraniliprole aspects of the disclosure, the compositions of the disclosure are effective against Coleoptera, Chrysomelidae, Cerotoma trifurcata bean leaf beetle, Chaetocnema concinna beet flea beetle, Epilachna varivestis Mexican bean beetle, Epitrix cucumeris potato flea beetle, Leptinotarsa decemlineata Colorado potato beetle, Oulema melanopus cereal leaf beetle, Oulema oryzae rice leaf beetle, Phyllotreta cruciiferae cabbage flea beetle, Phyllotreta striolata striped flea beetle, Psylliodes spp. flea beetles, Curculionidae, Anthonomus eugenii pepper weevil, Ceutorhynchus napi cabbage stem weevil, Ceutorhynchus quadridens cabbage seed-stalk curculio, Conotrachelus nenuphar plum curculio, Hypera bruneipennis Egyptian alfalfa weevil, Hypera postica alfalfa weevil, Lissorhoptrus oryzophilus rice water weevil, Nitidulidae, Meligethes aeneus pollen beetle, blossom beetle, Scarabaeidae, Cotinis nitida green June beetle, Phyllophaga spp. June beetles, grubs, Popillia japonica Japanese beetle, Diptera, Agromyzidae, Liromyza chinensis stone leek leafminer, Liromyza huidobrensis pea leafminer, Liriomyza sativae serpentine/vegetable leafminer, Liromyza trifolii American serpentine leafminer, Anthomyiidae, Delia antiqua onion fly, Delia platura seedcorn maggot, Muscidae, Atherigona oryzae rice seedling fly, Psilidae, Psila rosae carrot fly, Tephritidae, Anastrepha fraterculus South American fruit fly, Anastrepha ludens Mexican fruit fly, Anasterpha striata guava fruit fly, Bactrocera cucurbitae melon fly, Bactrocera dorsalis oriental fruit fly, Bactrocera oleae olive fly, Ceratitis capitata Mediterranean fruit fly, Chromatomyia horticola garden pea leafminer, Rhagoletis cerasi cherry fruit fly, Rhagoletis cingulata cherry fruit fly, Rhagoletis indifferens western cherry fruit fly, Rhagoletis pomonella apple maggot, Hemiptera, Aleyrodidae, Aleyrodes proletella cabbage whitefly, Bemisia tabaci sweet potato whitefly, cotton whitefly, Dialeurodes citri citrus whitefly, Trialeurodes vaporariorum, greenhouse whitefly, Aphididae, Acyrthosiphon pisum pea aphid, Aphis craccivora cowpea aphid, Aphis fabae black bean aphid, Aphis glycines soybean aphid, Aphis gossypii cotton aphid, melon aphid, Aphis nasturtii buckthorn aphid, Aphis pomi green apple aphid, Aphis spiraceola spirea aphid, Aulacorthum solani foxglove aphid, Brachycaudus persicae black peach aphid, Brevicoryne brassicae cabbage aphid, Chromaphis juglandicola European walnut aphid, Dysaphis plantaginea rosy apple aphid, Hyalopterus pruni mealy plum aphid, Lipaphis erysimi mustard aphid, turnip aphid, Macrosiphum euphorbiae potato aphid, Myzus persicae green peach aphid, peach potato aphid, Rhopalosiphum padi bird cherry oat aphid, Rhopalosiphum nymphaeae plum aphid, Schizaphis graminum greenbug, Sitobion avenae English grain aphid, Therioaphis maculata spotted alfalfa aphid, Toxoptera citricida brown citrus aphid, oriental citrus aphid, Cicadellidae, Empoasca fabae leafhopper/jassid complex, Empoasca vitis green frogfly, Hortensia similis common green leafhopper, Idioscopus spp. mango leafhopper, Jacobiasca lybica cotton jassid, Nephotettix spp. rice green leafhopper complex, Typhlocyba rosae rose leafhopper, Typhlocyba pomaria white apple leafhopper, Coreidae Leptocorisa oratorius rice bug, rice ear bug, paddy bug, Delphacidae, Nilaparvata lugens rice brown planthopper, Diaspididae, Aonidiella aurantii citrus scale, Flatidae, Metcalfa pruinosa citrus flatid planthopper, Pentatomidae, Euschistus spp. brown stinkbugs, Edessa spp. stink bugs, Psyllidae, Diaphorina citri Asian citrus psyllid, Paratrioza cockerelli potato psyllid, tomato psyllid, Trioza eugeniae eugenia psyllid, lillypilly psyllid, Hymenoptera Tenthredinidae, Hoplocampa testudinea European apple sawfly, Lepidoptera, Crambidae, Scirpophaga incertulas yellow (rice) stemborer, Gelechiidae, Anarsia lineatella peach twig borer, Keiferia lycopersicella tomato pinworm, Pectinophora gossypiella pink bollworm, Tuta absoluta tomato leafminer, Gracillariidae, Gracillaria theivora tea leafroller, Phyllonorycter blancardella spotted tentiform leafminer, Phyllonorycter coryfoliella nut leaf blister moth, Phyllonorycter crataegella apple blotch leafminer, Phyllonorycter ringoniella apple leafminer, Phyllonorycter elmaella western tentiform leafminer, Hesperiidae, Borbo cinara rice leafroller, Lyonetiidae, Leucoptera coffeella white coffee leafminer, Leucoptera scitella pear leaf blister moth, Lyonetia clerkella peach, leaf miner, Noctuidae, Agrotis segetum common cutworm, Alabama argillacea cotton leafworn, Autographa californica alfalfa looper, Barathra brassicae cabbage armyworm, Chrysodeixis chalcites green garden looper, Chrysodeixis eriosoma green semi-looper, Earias insulana Egyptian bollworm, Earias vittella northern rough bollworm, Feltia subterranea granulate cutworm, Helicoverpa armigera American bollworm, cotton bollworm, Helicoverpa punctigera climbing cutworm, Heliothis virescens tobacco budworm, Helicoverpa zea corn earworm, Prodenia ornithogalli yellow-striped armyworm, Pseudaletia unipuncta true armyworm, Pseudoplusia includens soybean looper, Sesamia inferens pink (rice) stemborer, Spodoptera eridania southern armyworm, Spodoptera exigua beet armyworm, Spodoptera frugiperda fall armyworm, Spodoptera littoralis cotton leafworm, Spodoptera litura cluster caterpillar, Thermesia gemmatalis velvetbean caterpillar, Trichoplusia ni cabbage looper, Phyllocnistidae, Phyllocnistis citrella citrus leafminer, Pieridae, Colias eurytheme alfalfa caterpillar, Leptophobia aripa green-eyed white, Pieris brassicae cabbage butterfly, large white,Pieris rapae imported cabbage worm, cabbage white, Plutellidae, Plutella xylostella diamondback moth, Pyralidae, Chilo suppressalis Asiatic rice stemborer, Cnaphalocerus medinalis rice leaffolder, Crocidolomia binotalis cabbage caterpillar, Desmia funeralis grape leaffolder, Diaphania indica cotton caterpillar, Diaphania nitidaltis melonworm, Hellula hydralis cabbage center grub, Hellula undalis cabbage webworm, Lerodea eufala rice leaffolder, Leucinodes orbonalis brinjal fruit borer, Maruca testulalis bean pod borer, Neoleucinodes elegantalis small tomato borer, Nymphula depunctalis rice caseworm, Ostrinia furnicalis Asian corn borer, Ostrinia nubilalis European corn borer, Sphingidae, Manduca sexta tomato hornworm, tobacco hornworm, Smerinthus spp. sphinx moths, Tortricidae, Adoxophyes orana summer fruit tortrix, Argyrotaenia pulchellana grape tortrix, Argyrotaenia velutinana red-banded leafroller, Choristoneura rosaceana oblique-banded leafroller, Eupoecilia ambiguella grape berry moth, Cydia pomonella codling moth, Cydia prunivora lesser apple worm, Grapholita molesta oriental fruit moth, Lobesia botrana grape vine moth, Pandemis heparana apple brown tortrix, Pandemis limitata three-lined leaf roller, Paramyelois transitella navel orangeworm, Platynota idaeusalis tufted apple bud moth, Platynota stultana omnivorus leafroller, Thysanoptera, Thripidae, Enneothrips flavens, Frankliniella fusca tobacco thrips, Frankliniella intonsa European flower thrips, Frankliniella occidentalis western flower thrips, Frankliniella schultzei common blossom thrips, Frankliniella tritici eastern flower thrips, Megalurothrips sjostedti cowpea thrips, Megalurothrips usitatus bean blossom thrips, Scirthothrips citri citrus thrips, Scirthothrips dorsalis yellow tea thrips, chilli thrips, Sericothrips variabilis soybean thrips, Stenchaetothrips biformis oriental rice thrips, Thrips arizonensis cotton thrips, Thrips meridionalis peach thrips, Thrips palmi melon thrips, and Thrips tabaci onion thrips, common cotton thrips.

In some cyantraniliprole aspects, of the disclosure, the compositions of the disclosure are effective against Leptinotarsa decemlineata Colorado potato beetle, Oulema oryzae rice leaf beetle, Phyllotreta cruciiferae cabbage flea beetle, Phyllotreta striolata striped flea beetle, Psylliodes spp. flea beetles, Anthonomus eugenii pepper weevil, Conotrachelus nenuphar plum curculio, Lissorhoptrus oryzophilus rice water weevil, Meligethes aeneus pollen beetle, blossom beetle, Liromyza chinensis stone leek leafminer, Liromyza huidobrensis pea leafminer, Liriomyza sativae serpentine/vegetable leafminer, Liromyza trifolii American serpentine leafminer, Delia antiqua onion fly, Delia platura seedcorn maggot, Psila rosae carrot fly, Bactrocera dorsalis oriental fruit fly, Bactrocera oleae olive fly, Ceratitis capitata Mediterranean fruit fly, Rhagoletis indifferens western cherry fruit fly, Rhagoletis pomonella apple maggot, Bemisia tabaci sweet potato whitefly, cotton whitefly, Trialeurodes vaporariorum, greenhouse whitefly, Acyrthosiphon pisum pea aphid, Aphis craccivora cowpea aphid, Aphis fabae black bean aphid, Aphis gossypii cotton aphid, melon aphid, Aphis pomi green apple aphid, Aphis spiraceola spirea aphid, Aulacorthum solani foxglove aphid, Brevicoryne brassicae cabbage aphid, Dysaphis plantaginea rosy apple aphid, Lipaphis erysimi mustard aphid, turnip aphid, Macrosiphum euphorbiae potato aphid, Myzus persicae green peach aphid, peach potato aphid, Rhopalosiphum padi bird cherry oat aphid, Schizaphis graminum greenbug, Sitobion avenae English grain aphid, Toxoptera citricida brown citrus aphid, oriental citrus aphid, Empoasca vitis green frogfly, Idioscopus spp. mango leafhopper, Nilaparvata lugens rice brown planthopper, Aonidiella aurantii citrus scale, Euschistus spp. brown stinkbugs, Diaphorina citri Asian citrus psyllid, Paratrioza cockerelli potato psyllid, tomato psyllid, Scirpophaga incertulas yellow (rice) stemborer, Anarsia lineatella peach twig borer, Tuta absoluta tomato leafminer, Leucoptera coffeella white coffee leafminer, Alabama argillacea cotton leafworn, Helicoverpa armigera American bollworm, cotton bollworm, Helicoverpa punctigera climbing cutworm, Heliothis virescens tobacco budworm, Helicoverpa zea corn earworm, Pseudoplusia includens soybean looper, Sesamia inferens pink (rice) stemborer, Spodoptera eridania southern armyworm, Spodoptera exigua beet armyworm, Spodoptera frugiperda fall armyworm, Spodoptera littoralis cotton leafworm, Spodoptera litura cluster caterpillar, Thermesia gemmatalis velvetbean caterpillar, Trichoplusia ni cabbage looper, Phyllocnistis citrella citrus leafminer, Pieris brassicae cabbage butterfly, large white,Pieris rapae imported cabbage worm, cabbage white, Plutella xylostella diamondback moth, Chilo suppressalis Asiatic rice stemborer, Cnaphalocerus medinalis rice leaffolder, Leucinodes orbonalis brinjal fruit borer, Ostrinia furnicalis Asian corn borer, Ostrinia nubilalis European corn borer, Choristoneura rosaceana oblique-banded leafroller, Eupoecilia ambiguella grape berry moth, Cydia pomonella codling moth, Grapholita molesta oriental fruit moth, Lobesia botrana grape vine moth, Frankliniella fusca tobacco thrips, Frankliniella intonsa European flower thrips, Frankliniella occidentalis western flower thrips, Scirthothrips citri citrus thrips, Scirthothrips dorsalis yellow tea thrips, chilli thrips, Thrips palmi melon thrips, and Thrips tabaci onion thrips, common cotton thrips.

In some cyantraniliprole aspects of the disclosure, the compositions of the disclosure are effective against Conotrachelus nenuphar plum curculio, Liromyza huidobrensis pea leafminer, Liriomyza sativae serpentine/vegetable leafminer, Liromyza trifolii American serpentine leafminer, Bemisia tabaci sweet potato whitefly, cotton whitefly, Trialeurodes vaporariorum, greenhouse whitefly, Acyrthosiphon pisum pea aphid, Aphis craccivora cowpea aphid, Aphis gossypii cotton aphid, melon aphid, Brevicoryne brassicae cabbage aphid, Dysaphis plantaginea rosy apple aphid, Myzus persicae green peach aphid, peach potato aphid, Diaphorina citri Asian citrus psyllid, Paratrioza cockerelli potato psyllid, tomato psyllid, Scirpophaga incertulas yellow (rice) stemborer, Anarsia lineatella peach twig borer, Tuta absoluta tomato leafminer, Leucoptera coffeella white coffee leafminer, Alabama argillacea cotton leafworn, Helicoverpa armigera American bollworm, cotton bollworm, Helicoverpa punctigera climbing cutworm, Heliothis virescens tobacco budworm, Helicoverpa zea corn earworm, Pseudoplusia includens soybean looper, Sesamia inferens pink (rice) stemborer, Spodoptera eridania southern armyworm, Spodoptera exigua beet armyworm, Spodoptera frugiperda fall armyworm, Spodoptera littoralis cotton leafworm, Spodoptera litura cluster caterpillar, Phyllocnistis citrella citrus leafminer, Plutella xylostella diamondback moth, Chilo suppressalis Asiatic rice stemborer, Cnaphalocerus medinalis rice leaffolder, Choristoneura rosaceana oblique-banded leafroller, Eupoecilia ambiguella grape berry moth, Cydia pomonella codling moth, Grapholita molesta oriental fruit moth, Lobesia botrana grape vine moth, Frankliniella fusca tobacco thrips, Frankliniella occidentalis western flower thrips, Scirthothrips dorsalis yellow tea thrips, chilli thrips, Thrips palmi melon thrips, and Thrips tabaci onion thrips, common cotton thrips.

In chlorantraniliprole aspects of the disclosure, the compositions of the disclosure are effective against: Coleoptera (Chrysomelida, Leptinotarsa decemlineata Colorado potato beetle, Curculionidae, Lissorhoptrus oryzophilus rice water weevil, Listronotus maculicollis annual bluegrass weevil, Oryzophagus oryzae rice water weevil, Sphenophorus spp. Billbug, Scarabaeidae Ataenius spretulus black turfgrass ataenius, Aphodius spp. scarab beetles, Cotinis nitida green June beetle, Cyclocephala spp. masked chafers, Exomala orientalis oriental beetle grub, Maladera castanea Asiatic garden beetle, Phyllophaga spp. June beetles, Popillia japonica Japanese beetle, and Rhizotrogus majalis European chafer); Diptera (Agromyzidae, Chromatomyia horticola garden pea leafminer, and Liriomyza spp. Leafminers); Hemiptera (Aleyrodidae, Bemisia spp. Whitefly, Trialeurodes abutiloneus bandedwinged whitefly, Cicadellidae, and Typhlocyba pomaria white apple leafhopper); Isoptera (Rhinotermitidae, Heterotermes tenuis sugarcane termite, Termitidae, Microtermes obesi sugarcane termite, and Odontotermes obesus sugarcane termite); and Lepidoptera (Arctiidae, Estigmene acrea saltmarsh caterpillar, Crambidae, Achyra rantalis garden webworm, Desmia funeralis grape leaffolder, Ostrinia nubilalis European corn borer, Gelechiidae, Anarsia lineatella peach twig borer, Keiferia lycopersicella tomato pinworm, Phthorimaea operculella potato tuberworm, Tuta absoluta S. American tomato pinworm, Geometridae, Operophthera brumata winter moth, Gracilaridae, Phyllocnistis citrella citrus leafminer, Lithocolletis ringoniella apple leafminer, Phyllonorycter blancardella spotted tentiform leafminer, Lyonetidae, Leucoptera spp. (ie: malifoliella, coffeella) coffee leafminer, pear leaf blister moth, Noctuidae, Agrotis ipsilon black cutworm, Alabama argillacea cotton leafworm, Amphipyra pyramidoides humped green fruitworm, Anticarsia gemmatalis velvetbean caterpillar, Autographa gamma common silver Y moth, Barathra brassicae cabbage armyworm, Earias spp. (ie: huegeliana, insulana, vitella) rough, spiny, northern rough bollworm, Helicoverpa spp. (ie: armigera, punctigera, zea) bollworms/budworms/fruitworms, Heliothis virescens tobacco budworm, Lithophane antennata green fruitworm, Mamestra brassicae cabbage moth, Orthosia hibisci green fruitworm, Phalaenoides glycinae grape vine moth, Phytometra acuta tomato semi-looper, Pseudoplusia includens soybean looper, Spodoptera spp. (ie: exigua, frugiperda, littoralis) beet armyworm, fall armyworm, Egyptian cotton leafworm, Trichoplusia ni cabbage looper, Pieridae, Pieris spp. (ie: brassica, rapae) large white, imported cabbageworm, Plutellidae, Plutella xylostella diamondback moth, Pyralidae, Amyelois transitella navel orangeworm, Chilo spp. (ie: infuscatellus, polychrysus, suppressalis) sugarcane/rice stem borers, Cnaphalocrocis medinalis rice leafroller, Crambus spp. sod webworm, Crocidolomia binotalis cabbage cluster caterpillar, Diaphania spp. (ie: hyalinata, nitidalis) melonworm, pickleworm, Diatraea saccharalis, Brazilian sugarcane borer, Elasmopalpus lignosellus lesser stalk borer, Evergestis rimosalis cross-stripped cabbageworm, Hedylepta indicata soybean leaffolder,Hellula spp. (ie: hydralis, undalis) cabbage centre-grub, cabbage webworm, Leucinodes orbonalis eggplant shoot and fruit borer, Maruca spp. pod borer, Neoleucinodes elegantalis tomato small borer, Scirpophaga spp. sugarcane/rice stem borer, Sesamia spp. (ie: inferens, nonagrioides) pink stem borer/corn stalk borer, Sphingidae, Manduca spp. (ie: quinquemaculata, sexta) tomato/tobacco hornworm, Tortricidae, Adoxophyes orana summer fruit tortrix, Argyrotaenia spp. (ie: pulchellana, velutinana) grape tortrix, redbanded leafroller, Bonagota cranaodes Brazilian apple leafroller, Carposina spp. (ie: niponensis, sasaki) peach fruit borer, peach fruit moth, Choristoneura rosaceana obliquebanded leafroller,Cryptophlebia leucotreta false codling moth, Cydia pomonella codling moth, Ecdytolopha aurantiana citrus borer, Endopiza vitana grape berry moth, Epiphyas postvittana light brown apple moth, Eupoecilia ambiguella European grape berry moth, Grapholita molesta oriental fruit moth, Lobesia botrana European grapevine moth, Pandemis spp. (ie: cerasana, heparana, barred fruit tree tortrix, limitata, pyrusana) apple brown tortrix, three-lined leafroller, apple pandemic, Platynota spp. (ie: idaeusalis, stultana) tufted apple bud moth, omnivorous leafroller, Zygaenidae, and Harrisina spp. (ie: americana, brillians) grapeleaf/western grapeleaf skeletonizer).

In some chlorantraniliprole aspects of the disclosure, the compositions of the disclosure are effective against: Leptinotarsa decemlineata Colorado potato beetle, Liriomyza spp. Leafminers, Bemisia spp. Whitefly, Trialeurodes abutiloneus bandedwinged whitefly, Heterotermes tenuis sugarcane termite, Microtermes obesi sugarcane termite, and Odontotermes obesus sugarcane termite), Ostrinia nubilalis European corn borer, Anarsia lineatella peach twig borer, Phthorimaea operculella potato tuberworm, Tuta absoluta S. American tomato pinworm, Phyllocnistis citrella citrus leafminer, Phyllonorycter blancardella spotted tentiform leafminer, Leucoptera spp. (ie: malifoliella, coffeella) coffee leafminer, Agrotis ipsilon black cutworm, Alabama argillacea cotton leafworm, Anticarsia gemmatalis velvetbean caterpillar, Helicoverpa spp. (ie: armigera, punctigera, zea) bollworms/budworms/fruitworms, Heliothis virescens tobacco budworm, Pseudoplusia includens soybean looper, Spodoptera spp. (ie: exigua, frugiperda, littoralis) beet armyworm, fall armyworm, Egyptian cotton leafworm, Trichoplusia ni cabbage looper, Pieris spp. (ie: brassica, rapae) large white, imported cabbageworm, Plutella xylostella diamondback moth, Amyelois transitella navel orangeworm, Chilo spp. (ie: infuscatellus, polychrysus, suppressalis) sugarcane/rice stem borers, Cnaphalocrocis medinalis rice leafroller, Diatraea saccharalis, Brazilian sugarcane borer, Leucinodes orbonalis eggplant shoot and fruit borer, Scirpophaga spp. sugarcane/rice stem borer, Sesamia spp. (ie: inferens, nonagrioides) pink stem borer/corn stalk borer, Carposina spp. (ie: niponensis, sasaki) peach fruit borer, peach fruit moth, Choristoneura rosaceana obliquebanded leafroller, Cydia pomonella codling moth, Eupoecilia ambiguella European grape berry moth, Grapholita molesta oriental fruit moth, and Lobesia botrana European grapevine moth.

In some chlorantraniliprole aspects of the disclosure, the compositions of the disclosure are effective against: Liriomyza spp. Leafminers, Bemisia spp. Whitefly, Trialeurodes abutiloneus bandedwinged whitefly, Heterotermes tenuis sugarcane termite, Microtermes obesi sugarcane termite, and Odontotermes obesus sugarcane termite), Ostrinia nubilalis European corn borer, Anarsia lineatella peach twig borer, Tuta absoluta S. American tomato pinworm, Anticarsia gemmatalis velvetbean caterpillar, Helicoverpa spp. (ie: armigera, punctigera, zea) bollworms/budworms/fruitworms, Heliothis virescens tobacco budworm, Pseudoplusia includens soybean looper, Spodoptera spp. (ie: exigua, frugiperda, littoralis) beet armyworm, fall armyworm, Egyptian cotton leafworm, Plutella xylostella diamondback moth, Amyelois transitella navel orangeworm, Chilo spp. (ie: infuscatellus, polychrysus, suppressalis) sugarcane/rice stem borers, Cnaphalocrocis medinalis rice leafroller, Diatraea saccharalis, Brazilian sugarcane borer, Scirpophaga spp. sugarcane/rice stem borer, Sesamia spp. (ie: inferens, nonagrioides) pink stem borer/corn stalk borer, Cydia pomonella codling moth, Grapholita molesta oriental fruit moth, and Lobesia botrana European grapevine moth.

### Plants

The compositions of the disclosure are thus useful for protecting agronomic field crops, other non-agronomic horticultural crops and plants from phytophagous invertebrate pests. This utility includes protecting crops and other plants (i.e. both agronomic and nonagronomic) that contain genetic material introduced by genetic engineering (i.e. transgenic) or modified by mutagenesis to provide advantageous traits. Examples of such traits include tolerance to herbicides, resistance to phytophagous pests (e.g., insects, mites, aphids, spiders, nematodes, snails, plant-pathogenic fungi, bacteria and viruses), improved plant growth, increased tolerance of adverse growing conditions such as high or low temperatures, low or high soil moisture, and high salinity, increased flowering or fruiting, greater harvest yields, more rapid maturation, higher quality and/or nutritional value of the harvested product, or improved storage or process properties of the harvested products. Transgenic plants can be modified to express multiple traits. Examples of plants containing traits provided by genetic engineering or mutagenesis include varieties of corn, cotton, soybean and potato expressing an insecticidal *Bacillus thuringiensis* toxin such as YIELD GARD^{®}, KNOCKOUT^{®}, STARLINK^{®}, BOLLGARD^{®}, NuCOTN^{®} and NEWLEAF^{®}, INVICTA RR2 PRO^{™}, and herbicide-tolerant varieties of corn, cotton, soybean and rapeseed such as ROUNDUP READY^{®}, LIBERTY LINK^{®}, IMI^{®}, STS^{®} and CLEARFIELD^{®}, as well as crops expressing *N*-acetyltransferase (GAT) to provide resistance to glyphosate herbicide, or crops containing the HRA gene providing resistance to herbicides inhibiting acetolactate synthase (ALS). The present compositions may interact synergistically with traits introduced by genetic engineering or modified by mutagenesis, thus enhancing phenotypic expression or effectiveness of the traits or increasing the invertebrate pest control effectiveness of the present compounds and compositions. In particular, the present compositions may interact synergistically with the phenotypic expression of proteins or other natural products toxic to invertebrate pests to provide greater-than-additive control of these pests, i.e. produce a combined effect greater than the sum of their separate effects.

Plants within the scope of the present disclosure include crops, vegetables, fruits, trees other than fruit trees, lawn, and other uses (flowers, biofuel plants and ornamental foliage). Crops include: corn, rice, wheat, barley, rye, oat, sorghum, cotton, soybean, peanut, buckwheat, beet, rapeseed, sunflower, sugar cane, tobacco, and others known in the art. Vegetables include: solanaceous vegetables (for example, eggplant, tomato, pimento, pepper and potato); cucurbitaceous vegetables (for example, cucumber, pumpkin, zucchini, water melon, and melon); cruciferous vegetables (for example, Japanese radish, white turnip, horseradish, kohlrabi, Chinese cabbage, cabbage, leaf mustard, broccoli, and cauliflower); asteraceous vegetables (for example, burdock, crown daisy, artichoke and lettuce); liliaceous vegetables (for example, green onion, onion, garlic and asparagus); ammiaceous vegetables (for example, carrot, parsley, celery and parsnip); chenopodiaceous vegetables (for example, spinach and Swiss chard); and lamiaceous vegetables (for example, Perilla frutescens, mint and basil). Fruits include: pomaceous fruits (for example, apple, pear, Japanese pear, Chinese quince and quince); stone fleshy fruits (for example, peach, plum, nectarine, Prunus mume, cherry fruit, apricot and prune); citrus fruits (for example, Citrus unshiu, orange, lemon, lime and grapefruit); nuts (for example, chestnut, walnuts, hazelnuts, almond, pecan, pistachio, cashew nuts and macadamia nuts); berry fruits (for example, blueberry, cranberry, blackberry, strawberry, and raspberry); grape; kaki; persimmon; olive; Japanese plum; banana; coffee; date palm; coconuts; and oil palm. Trees other than fruit trees include: tea; mulberry; and other trees (for example, ash, birch, dogwood, Eucalyptus, Ginkgo biloba, lilac, maple, Quercus, poplar, Judas tree, Liquidambar formosana, plane tree, zelkova, Japanese arborvitae, fir wood, hemlock, juniper, Pinus, Picea, Taxus cuspidate, elm and Japanese horse chestnut), Sweet viburnum, Podocarpus macrophyllus, Japanese cedar, Japanese cypress, croton, Japanese spindletree, and Photinia glabra). Lawn uses include: sods (for example, Zoysia japonica, Zoysia matrella); bermudagrasses; bent grasses; festucae; ryegrasses. Flower uses include: rose, carnation, chrysanthemum, Eustoma, gypsophila, gerbera, marigold, salvia, petunia, verbena, tulip, aster, gentian, lily, pansy, cyclamen, orchid, lily of the valley, lavender, stock, ornamental cabbage, primula, poinsettia, gladiolus, cattleya, daisy, cymbidium and begonia. Bio-fuel plants include: jatropha, safflower, Camelina, switch grass, Miscanthus giganteus, Phalaris arundinacea, Arundo donax, kenaf, cassava, and willow.

### Non-Agronomic Uses

### (not according to the invention)

Non-agronomic uses refer to invertebrate pest control in the areas other than fields of crop plants. Nonagronomic uses of the present compositions include control of invertebrate pests in stored grains, beans and other foodstuffs, and in textiles such as clothing and carpets. Nonagronomic uses of the present compositions also include invertebrate pest control in ornamental plants, forests, in yards, along roadsides and railroad rights of way, and on turf such as lawns, golf courses and pastures. Nonagronomic uses of the present compositions also include invertebrate pest control in houses and other buildings which may be occupied by humans and/or companion, farm, ranch, zoo or other animals. Nonagronomic uses of the present compositions also include the control of pests such as termites that can damage wood or other structural materials used in buildings.

Nonagronomic uses of the present compositions also include protecting human and animal health by controlling invertebrate pests that are parasitic or transmit infectious diseases. The controlling of animal parasites includes controlling external parasites that are parasitic to the surface of the body of the host animal (e.g., shoulders, armpits, abdomen, inner part of the thighs) and internal parasites that are parasitic to the inside of the body of the host animal (e.g., stomach, intestine, lung, veins, under the skin, lymphatic tissue). External parasitic or disease transmitting pests include, for example, chiggers, ticks, lice, mosquitoes, flies, mites and fleas. Internal parasites include heartworms, hookworms and helminths. Compositions of the present disclosure are suitable for systemic and/or non-systemic control of infestation or infection by parasites on animals. Compositions of the present disclosure are particularly suitable for combating external parasitic or disease transmitting pests. Compositions of the present disclosure are suitable for combating parasites that infest agricultural working animals, such as cattle, sheep, goats, horses, pigs, donkeys, camels, buffalos, rabbits, hens, turkeys, ducks, geese and bees; pet animals and domestic animals such as dogs, cats, pet birds and aquarium fish; as well as so-called experimental animals, such as hamsters, guinea pigs, rats and mice. By combating these parasites, fatalities and performance reduction (in terms of meat, milk, wool, skins, eggs, honey, etc.) are reduced, so that applying a composition of the present disclosure allows more economic and simple husbandry of animals.

Water is optionally used as a medium. In one embodiment water is essentially absent. In one embodiment, water is present in an amount of at least about 30 wt%. In one embodiment, water is present in an amount of at least about 35 wt%.

A dispersant can disperse active ingredients in the formulation and prevent agglomeration after dispersal in water.

In one embodiment, the dispersant is selected from sulfonated aromatic polymer sodium salts, alkyl naphthalene sulfonate condensate sodium salts, alkyl naphthalene sulfonates, alkyl naphthalene sulfonate salts, naphthalene sulfonate salts, naphthalene sulfonate condensates, naphthalene sulfonate-formaldehyde condensates, naphthalenesulfonic acid polymers with formaldehyde and sodium, naphthalene sulfonate condensate sodium salts, alkyl naphthalene sulfonate-formaldehyde condensates, alkyl naphthalene sulfonate-formaldehyde condensate salts, and combinations thereof. In another embodiment, the dispersant is selected from sulfonated aromatic polymer sodium salts, alkyl naphthalene sulfonate condensate sodium salts, naphthalene sulfonate condensates, naphthalene sulfonate-formaldehyde condensates, naphthalenesulfonic acid polymers with formaldehyde and sodium, naphthalene sulfonate condensate sodium salts, alkyl naphthalene sulfonate-formaldehyde condensate salts, and combinations thereof. In another embodiment, the dispersant is selected from sodium lignosulfonate, calcium lignosulfonate, lignosulfonic acid sodium salt, lignosulfonic acid, and combinations thereof.

According to the disclosure the dispersant is present in an amount in the range of about 0.1 wt% to about 2 wt%.

A wetting agent can aid in the milling process. In one embodiment, the wetting agent is a gemini surfactant comprising two polar groups selected from alcohols, halogens, amines, phosphates, sulfates, sulfonates, and carboxylates and two hydrophobic chains selected from branched or unbranched C₁-C₁₂ alkyl, branched or unbranched C₂-C₁₂ alkenyl, and branched or unbranched C₂-C₁₂ alkynyl. In another embodiment, the wetting agent is a gemini surfactant comprising a spacer selected from C₁-C₁₂ alkyl, C₂-C₁₂ alkenyl, and C₂-C₁₂ alkynyl. In another embodiment, the wetting agent is 2,4,7,9-tetramethyldec-5-yne-4,7-diol (Surfynol 104). In another embodiment, the wetting agent is 2, 5, 8,11 tetramethyl 6 dodecyn-5,8 diol ethoxylate (Dynol 607).

In one embodiment, the gemini surfactant is present in an amount in the range of about 0.01 wt% to about 5 wt%. In another embodiment, the gemini surfactant is present in an amount in the range of about 0.1 wt% to about 1 wt%. The gemini surfactant may be present as a wetting agent, a molecular defoamer, or a combination thereof.

According to the disclosure the ratio of the dispersant to the gemini surfactant is present in an amount in the range of about 1:1 to about 20:1. In another embodiment, the ratio of the dispersant to the gemini surfactant is present in an amount in the range of about 1:1 to about 10:1. In another embodiment, the ratio of the dispersant to the gemini surfactant is present in an amount in the range of about 3:1 to about 6:1. In one other embodiment, the ratio of the dispersant to the gemini surfactant is about 4:1.

The compositions of the present disclosure may further comprise one or more wetting agents from the group of nonionic surfactants.

### Nonionic surfactants

Non-limiting examples of nonionic surfactants include alkoxylates, fatty alcohol alkoxylates, siloxanes/silicones, alkylphenol alkoxylates, fatty acid alkoxylates, alkoxylated amines, alkoxylated fatty acid amides, terminally blocked alkoxylates, fatty acid esters of polyhydroxy compounds, fatty acid esters of glycerol, fatty acid esters of sorbitol, fatty acid esters of sucrose, alkylpolyglucosides, amine oxide, and combinations thereof. Alkoxy groups may suitably be ethoxy, propoxy, or a combination of ethoxy and propoxy groups in random or block configuration.

In more detail, non-limiting examples of nonionic surfactants include: alcohol alkoxylates (such as alcohol alkoxylates based on natural and synthetic alcohols (which may be branched or linear) and prepared from the alcohols and ethylene oxide, propylene oxide, butylene oxide or mixtures thereof); amine ethoxylates, alkanolamides and ethoxylated alkanolamides; alkoxylated triglycerides (such as ethoxylated soybean, castor and rapeseed oils); alkylphenol alkoxylates (e.g., octyl- (such as the Triton^{®} X series), nonyl- (such as the Tergitol^{®} HP series), dinonyl-, or dodecyl-)); ethoxylated fatty acids; ethoxylated fatty esters and oils (such as Break Thru^{®} SP 133); ethoxylated methyl esters; ethoxylated tristyrylphenol (including those prepared from ethylene oxide, propylene oxide, butylene oxide or mixtures thereof); fatty acid esters, glycerol esters, lanolin-based derivatives, polyethoxylate esters such as polyethoxylated sorbitan fatty acid esters, polyethoxylated sorbitol fatty acid esters and polyethoxylated glycerol fatty acid esters; other sorbitan derivatives such as sorbitan esters; polymeric surfactants such as random copolymers, block copolymers (such as block polymers prepared from ethylene oxide or propylene oxide and reverse block polymers where the terminal blocks are prepared from propylene oxide; ethoxylated fatty acids), alkyd PEG (polyethylene glycol) resins, alkyd type copolyesters, graft or comb polymers, and star polymers; polyethylene glycols (PEG); polyethylene glycol fatty acid esters; silicone-based surfactants; sugar-derivatives such as sucrose esters, alkyl polyglycosides and alkyl polysaccharides; and combinations thereof. In one embodiment, the nonionic surfactant is Agnique PG 9116.

The nonionic surfactant component may comprise at least one nonionic surfactant selected from sorbitan fatty acid esters, polyethoxylated sorbitan fatty acid esters, sorbitol ethoxylate esters and combinations thereof. Non-limiting examples of sorbitan fatty acid esters include sorbitan monolaurates (*e.g.,* Span^{™} 20), sorbitan monopalmitates (*e.g.,* Span^{™} 40), sorbitan monostearates (*e.g.,* Span^{™} 60), sorbitan tristearates (*e.g.,* Span^{™} 65), sorbitan monooleates (*e.g.,* Span^{™} 80), sorbitan trioleates (*e.g.,* Span^{™} 85), and combinations thereof. Non-limiting examples of polyethoxylated sorbitan fatty acid esters include Tween^{®} 20, Tween^{®} 21, Tween^{®} 40, Tween^{®} 60, Tween^{®} 80, and Surfonic^{®} L24-4. Non-limiting examples of sorbitol ethoxylate esters that may be suitable for the biopesticides described herein include polyoxyethylene sorbitol oleates (*e.g.,* Arlatone^{®} TV), polyoxyethylene sorbitol hexaoleates (*e.g.,* Cirrasol^{®} G-1086), polyoxyethylene sorbitol hexaoleates (*e.g.*, Cirrasol^{®} G-1096), polyoxyethylene oleate-laurates (*e.g*., Atlox 1045AR^{®}), and combinations thereof. Polyethoxylated sorbitan fatty acid esters and sorbitol ethoxylate esters having a degree of ethoxylation of 20, 30, 40, 50, 60, 70 or 80 are generally suitable.

The nonionic surfactant component may comprise at least one organosilicone surfactant. Non-limiting examples of organosilicone surfactants within the scope of the present disclosure include: polyether siloxanes (*e.g*., Break Thru^{®} OE441); polyether trisiloxanes (*e.g.*, Break Thru^{®} S240, Break Thru^{®} S233); polyoxyethylene dimethylsiloxanes (*e.g*., Dyne-Amic^{®} (a mixture with methylated seed oil)); polyoxyethylene methylpolysiloxanes (*e.g.,* KF-640 manufactured by Shin-Etsu Chemical Co., Ltd.); polyalkylene oxide-modified polymethylsiloxane (*e.g*., Kinetic manufactured by Helena Chemical); polyoxyethylene propylheptamethyltrisiloxanes (*e.g.,* Masil^{®} SF19); polyether-modified polysiloxanes (*e.g.,* Quark (a mixture with an alkyl phenol ethoxylate)); hydroxypropyl heptamethyltrisiloxanes (*e.g.,* Silflow^{®} (a mixture with ethoxylated acetate, polyethylene glycol monoallyl ether acetate and polyethylene glycol diacetate); polyalkylene oxide-modified heptamethyltrisiloxanes (*e.g.,* Silwet^{®} L77); polyether/polymethylsiloxane copolymers (*e.g.,* Syl-Coat^{®}); polyoxyethylene-modified polydimethylsiloxanes (e.g., Xiameter^{®}); polyoxyalkylene oxypropylheptamethyltrisiloxanes; siloxane/polyalkylene oxide copolymers (*e.g.,* Vestis^{™} (a mixture with polyalkylene oxide)). The organosilicone surfactant may be a polyether trisiloxane such as, for instance, Break Thru^{®} S240 (a mixture of a polyether trisiloxane and an alcohol ethoxylate (CAS 9043-30-5)), Break Thru^{®} S321, Break Thru^{®} S200, Break Thru^{®} OE 441, Break Thru^{®} S278, Break Thru^{®} S243, Break Thru^{®} S233, Silwet^{®} L-77, Silwet^{®} 408, Silwet^{®} HS 429, Silwet^{®} HS 312, Silwet^{®} Y-12808, Silwet^{®} L-7607, Silwet^{®} L-7602, Silwet^{®} L-7210, Silwet^{®} L-7002, Silwet^{®} L-720, and Silwet^{®} L-7200, Sylgard^{®} 309, and Silibase^{®} 2848, and combinations thereof. The organosilicone surfactant may be Break Thru^{®} S240. The organosilicone surfactant may be Silwet^{®} HS 312.

The nonionic surfactant component may comprise at least one alcohol alkoxylate surfactant, at least one alkylphenol alkoxylate surfactant, at least seed oil alkoxylate surfactant (*e.g.,* Ecosurf^{®} SA-4, Ecosurf^{®} SA-7, Ecosurf^{®} SA-9, and Ecosurf^{®} SA-15), at least one alkylamine alkoxylate surfactant, at least one tallow amine alkoxylate surfactant, at last one fatty acid alkoxylate surfactant, and combinations thereof. The alkoxylates may be end capped. Alcohol alkoxylates generally comprise a hydrophobic alkyl chain attached by an ether linkage to a hydrophilic alkoxy chain and have the general formula R-(OC₂₋₄)ₙ-OH. R may be C₆₋₁₈ straight or branched chain alkyl. The alkoxy moiety (OC₂₋₄) may be ethoxy, *n*-propyl, *i*-propyl, *n*-butyl, *i-*butyl or *tert*-butyl. The alkoxy moiety may be a block co-polymer of a polymeric ethoxy and polymeric propoxy or polymeric butoxy, and n may suitably be an integer of from 2 to 100. Suitable alcohol alkoxylates include linear alcohol alkoxylates, branched alcohol alkoxylates, secondary alcohol alkoxylates, and mixtures thereof. Non-limiting examples of alcohol alkoxylates include: Plurafac^{®} SL-42 (C₆₋₁₀-(PO)₃(EO)₆); Plurafac^{®} SL-62 (C₆₋₁₀-(PO)₃(EO)₈); Lutensol^{®} XL series of the general structure Guerbet C₁₀-(PO)ₐ(EO)_{b} including without limitation Lutensol^{®} XL-40, Lutensol^{®} XL-50, Lutensol^{®} XL-60, Lutensol^{®} XL-70, Lutensol^{®} XL-79, Lutensol^{®} XL-80, Lutensol^{®} XL-89, Lutensol^{®} XL-90, Lutensol^{®} XL-99, Lutensol^{®} XL-100, and Lutensol^{®} XL-140; Lutensol^{®} XP series of the general structure Guerbet C₁₀-(EO)ₐ, including without limitation Lutensol^{®} XP-40, Lutensol^{®} XP-50, Lutensol^{®} XP-60, Lutensol^{®} XP-70, Lutensol^{®} XP-79, Lutensol^{®} XP-80, Lutensol^{®} XP-89, Lutensol^{®} XP-90, Lutensol^{®} XP-99, Lutensol^{®} XP-100; Lutensol^{®} ON series of the general structure oxo C₁₀-(EO)ₐ, including without limitation Lutensol^{®} ON-30, Lutensol^{®} ON-50, Lutensol^{®} ON-60, Lutensol^{®} ON-70, Lutensol^{®} ON-80, Lutensol^{®} ON-110; Lutensol^{®} AO series of the general structure oxo C_{13/15}-(EO)ₐ, including without limitation Lutensol^{®} AO-3, Lutensol^{®} AO-5, Lutensol^{®} AO-7, Lutensol^{®} AO-79, Lutensol^{®} AO-8, Lutensol^{®} AO-11; Lutensol^{®} TO series of the general structure oxo C₁₃-(EO)ₐ, including without limitation Lutensol^{®} TO-6, Lutensol^{®} TO-65, Lutensol^{®} TO-7, Lutensol^{®} TO-79, Lutensol^{®} TO-8, Lutensol^{®} TO-89, Lutensol^{®} TO-10, Lutensol^{®} TO-109, Lutensol^{®} TO-12, Lutensol^{®} TO-129, Lutensol^{®} TO-15, Lutensol^{®} TO-20; Lutensol^{®} TDA series of the general structure oxo C₁₁₋C₁₄₋- C₁₃ rich (EO)ₐ, including without limitation Lutensol^{®} TDA-6, Lutensol^{®} TDA 8, Lutensol^{®} TDA-9, Lutensol^{®} TDA-10; Ecosurf^{®} EH series of the general structure 2-ethyl hexyl (PO)ₘ(EO)ₙ including Ecosurf^{®} EH-3, Ecosurf^{®} EH-6, and Ecosurf^{®} EH-9; Ecosurf^{®} SA series including Ecosurf^{®} SA-4 (C₆₋₁₂-(PO)₃₋₄(EO)₄), Ecosurf^{®} SA-7 (C₆₋₁₂-(PO)₃₋₄(EO)₇, and Ecosurf^{®} SA-9 (C₆₋₁₂-(PO)₃₋₄(EO)₉); Tergitol^{®} 15-S-3, Tergitol^{®} 15-S-5, Tergitol^{®} 15-S-7, Tergitol^{®} 15-S-9, Tergitol^{®} 15-S-12, Tergitol^{®} 15-S-15, Tergitol^{®} 15-S-20, Tergitol^{®} 15-S-30, and Tergitol^{®} 15-S-40; Tergitol^{®} L-61, Tergitol^{®} L-62, Tergitol^{®} L-64, Tergitol^{®} L-81, and Tergitol^{®} L-101; Tergitol^{®} TMN-3, Tergitol^{®} TMN-6, and Tergitol^{®} TMN-10), and combinations thereof. The alcohol alkoxylate may be Lutensol^{®} TDA 6. The alcohol alkoxylate may be Lutensol^{®} TO 6. The alcohol alkoxylate may be Lutensol^{®} TO 8.

The nonionic surfactant component may comprise at least one polymeric surfactant. Polymeric surfactants fall into several categories including, but not limited to, block copolymers, random copolymers, graft copolymer and star polymers. Non-limiting examples of polymer monomeric units include ethylene oxide, propylene oxide, acrylic, styrene, methacrylic, hydroxystearate, and ester (*e.g.,* alkyd). Examples include, without limitation, EO/PO block copolymers, acrylic/styrene copolymers, methacrylic copolymers, poly hydroxystearate derivatives, alkyd PEG resin derivatives, and combinations thereof. Non-limiting examples of block copolymers include Atlas^{™} G-5000 and Atlas^{™} G-5002L (butyl block copolymers). A non-limiting example of a graft copolymer is Atlox^{®} 4913 (a methyl methacrylate graft copolymer backbone having PEG extending therefrom). The nonionic surfactant component may comprise Atlox^{®} 4913. The nonionic surfactant component may comprise Atlas^{™} G-5000. The nonionic surfactant component may comprise Atlox^{®} 4913, Atlas^{™} G-5000 and Lutensol^{®} TDA 6.

The non-gemini noninonic surfactant may be present in an amount in the range of about 0.01 wt% to about 10 wt%. The non-gemini noninonic surfactant may be present in an amount in the range of about 0.1 wt% to about 5 wt%. The non-gemini noninonic surfactant may be present in an amount in the range of about 0.1 wt% to about 2 wt%. The non-gemini noninonic surfactant may be present in an amount in the range of about 0.1 wt% to about 1 wt%.

### Anionic surfactant component

The compositions of the present disclosure may further comprise one or more anionic surfactants. Non-limiting examples of anionic surfactants include: alkylaryl sulfonic acids and their salts; carboxylated alcohols; diphenyl sulfonate derivatives; olefin sulfonates; phosphate esters such as phosphate esters of alcohol alkoxylates, phosphate esters of alkylphenol alkoxylates and phosphate esters of styryl phenol ethoxylates; protein-based surfactants; sarcosine derivatives; styryl phenol ether sulfate; sulfates and sulfonates of oils and fatty acids; sulfates and sulfonates of ethoxylated alkylphenols; sulfates of alcohols; salts of sulfates of alkoxylated alcohols; sulfonates of amines and amides such as *N,N*-alkyltaurates; sulfonates of benzene, cumene, toluene, xylene, and dodecyl and tridecylbenzenes; sulfonates of naphthalene and alkyl naphthalene; sulfonates of fractionated petroleum; sulfosuccinamates; sulfosuccinates and their derivatives such as dialkyl sulfosuccinate salts; and combinations thereof. Non-limiting examples of cationic counterions of the anionic surfactants in salt form may include, but are not limited to, alkali metal, alkaline-earth metal, ammonium, or (C₁₋₆) alkyl ammonium cation.

Non-limiting examples of anionic surfactants within the scope of the present disclosure include: ammonium lauryl sulfate; magnesium lauryl sulfate; sodium 2-ethylhexyl sulfate; sodium octyl sulfate; sodium oleyl sulfate; sodium tridecyl sulfate; triethanolamine lauryl sulfate; ammonium nonylphenol ether sulfate; ammonium monoxynol-4-sulfate sulfo succinamates; tetrasodium N-(1,2-dicarboxyethyl)-N-octadecylsulfo-succinamate; diamyl ester of sodium sulfosuccinic acid; dihexyl ester of sodium sulfosuccinic acid; dioctyl esters of sodium sulfosuccinic acid; dihexyl ester of sodium sulfosuccinic acid; dioctyl esters of sodium sulfosuccinic acid (Aerosol OT 75 PG); calcium naphthalene sulfonates (DAXAD^{®} 19LCAD); sodium methyl oleyl taurate (Geropon^{®} T-77); sodium dodecylbenzene sulfonate; N-oleyl N-methyl taurate; 1,4-dioctoxy-1,4-dioxo-butane-2-sulfonic acid; sodium lauryl sulphate; sodium lauryl ether sulfate (Steol CS-370); calcium dodecylbenzenesulfonate (Rhodacal^{®} 60 BE and 70 B); isopropyl amine dodecylbenzenesulfonate (Bio-Soft^{®} N-411); and sodium diisopropyl naphthalenesulfonate (Morwet^{®} IP). The anionic surfactant may be Aerosol OT 75 PG.

The suspension concentrate compositions may further comprise a mixture of at least one nonionic surfactant and at least one anionic surfactant.

The non-gemini anionic surfactant may be present in an amount in the range of about 0.01 wt% to about 10 wt%. The non-gemini noninonic surfactant may be present in an amount in the range of about 0.1 wt% to about 5 wt%. The non-gemini noninonic surfactant may be present in an amount in the range of about 0.1 wt% to about 2 wt%. The non-gemini noninonic surfactant may be present in an amount in the range of about 0.1 wt% to about 1 wt%.

### Other Surfactants

The suspension concentrate compositions may optionally further comprise at least one cationic surfactant. Non-limiting examples of cationic surfactants include: amides and ethoxylated amides; amines (such as *N*-alkyl propanediamines, tripropylenetriamines and dipropylenetetramines); ethoxylated amines, ethoxylated diamines and propoxylated amines (prepared from the amines and ethylene oxide, propylene oxide, butylene oxide or mixtures thereof); amine salts such as amine acetates and diamine salts; quaternary ammonium salts such as quaternary salts, ethoxylated quaternary salts and diquaternary salts; amine oxides such as alkyldimethylamine oxides and bis-(2-hydroxyethyl)-alkylamine oxides; and combinations thereof.

The suspension concentrate compositions may optionally further comprise at least one zwitterionic (ampholytic) surfactant. Non-limiting examples of Zwitterionic (amphoteric) surfactants include betaines, N-alkyl glycines, N-alkyl propionic acids, N-alkylaminobutyric acids, N-alkyliminodipropionic acids, N-hydroxyethyl-N-alkylamidopropyl glycines, N-alkyl taurines, N-alkyl sarcosines, 2-alkylaminopropionic acids, alkylaminoacetic acids containing a C₈₋₁₈ alkyl group, and combinations thereof.

The total surfactant content in the concentrate compositions of the present disclosure may suitably be about 5 wt.%, about 10 wt.%, about 15 wt.%, about 20 wt.%, about 25 wt.%. The weight ratio of surfactant to pesticidal active is suitably about 10:1, about 7.5:1 about 5:1, about 2.5:1, about 2:1 about 1.5:1, about 1.25:1, about 1.1:1, about 1:1, about 1:1.1, about 1:1.25, about 1:1.5, about 1:2 about 1:2.5, about 1:5 about 1:7.5 or about 1:10, and ranges constructed therefrom, such as from about 10:1 to about 1:10, from about 5:1 to about 1:5, from about 2.5:1 to about 1:2.5, from about 1.1:1 to about 1:1.1, from about 1:1 to about 1:1.25, from about 1:1 to about 1:1.2, from about 1:1 to about 1:1.5, or from about 1:1 to about 1:1.1.

If the suspension concentrate composition comprises one or more nonionic surfactant and one or more anionic surfactants, the weight ratio of total nonionic surfactant to total anionic surfactant may be suitably about 5:1, about 4:1, about 3.5:1, about 3.25:1, about 3:1, about 2.75:1, about 2.5:1, about 2.25:1, about 2:1, about 1.75:1, about 1.5:1, about 1.25:1, or about 1:1, and ranges constructed therefrom, such as from about 5:1 to about 1:1, from about 3.5:1 to about 1:1, from about 3.5:1 to about 1.5:1, from about 3.25:1 to about 1.75:1, from about 3:1 to about 1.75:1, from about 2.75:1 to about 1.75:1, or from about 2.75:1 to about 1.5:1. The total nonionic surfactant content in the concentrate compositions may be suitably about 2 wt.%, about 5 wt.%, about 10 wt.%, about 12.5 wt.%, about 15 wt.%, about 17.5 wt.%, about 20 wt.%, about 22.5 wt.%, about 25 wt.%, about 30 wt.%, or about 35 wt.%, and ranges constructed therefrom, such as from about 2 wt.% to about 35 wt.%, from about 5 wt.% to about 30 wt.%, from about 10 wt.% to about 25 wt.%, from about 12.5 wt.% to about 20 wt.%, or from about 12.5 wt.% to about 17.5 wt.%. The total anionic surfactant content in the concentrate compositions may be suitably about 0.1 wt%, about 0.2 wt%, about 0.3 wt%, about 0.4 wt%. about 0.5 wt%. about 0.75 wt%, about 1 wt%, about 1.5 wt%, about 2 wt.%, about 2.5 wt.%, about 5 wt.%, about 6 wt.%, about 7wt.%, about 8 wt.%, about 9 wt.%, about 10 wt.%, about 12.5 wt.%, about 15 wt.%, about 20 wt.%, or about 25 wt.%, and ranges constructed therefrom, such as from about 2 wt.% to about 25 wt.%, from about 2.5 wt.% to about 20 wt.%, from about 2.5 wt.% to about 15 wt.%, from about 2.5 wt.% to about 10 wt.%, or from about 5 wt.% to about 10 wt.%.

### Adjuvants

In some aspects, one or more adjuvants may be used. In some aspects, the adjuvant is selected from dispersants, surfactants, biocides, antifoamers, antifreeze agents, rheology modifiers, wetting agents, solvents, and combinations thereof.

The amount of adjuvants added to tank mixes generally does not exceed about 2.5% by volume, and more typically the amount is from about 0.1 to about 1% by volume. The application rates of adjuvants added to tank mixes are typically between about 1 to 5 L per hectare.

For aerial applications, in some embodiments, the amount of adjuvants added to tank mixes generally does not exceed about 2.5% by volume, typically the amount is from about 0.25 to about 1% by volume, and more typically the amount is from about 0.125 to about 0.5% by volume. The application rates of adjuvants added to tank mixes are typically between about 1 to 5 L per hectare.

An antifreeze agent can prevent the formulation from freezing. In one embodiment, the antifreeze agent is selected from propylene glycol, glycerol, urea, and combinations thereof. In some aspects of the present disclosure, the antifreeze agent is propylene glycol. In some aspects of the present disclosure, the antifreeze agent is glycerol. In some aspects of the present disclosure, the antifreeze agent is a mixture of propylene glycol and glycerol.

A biocide can prevent bacteria from growing. Suitable biocides include, but are not limited to bactericides such as Legend^{™} MK (mixture of 5-chloro-2-methyl-3(2*H*)-isothiazolone with 2-methyl-3(2*H*)-isothiazolone), EDTA (ethylenediaminetetraacetic acid), formaldehyde, benzoic acid, or 1,2-benzisothiazol-3(2*H*)-one or its salts, e.g., Proxel^{®} BD or Proxel^{®} GXL (Arch), Acticide LA 1209, Acticide SPX, Proxel GXL, KathonCG/ICP and KathonCG/ICPII. In one embodiment, the biocide is selected from 2-Bromo-2-nitropropane-1, 3-diol, 5-Chloro-2-methyl-2H-isothiazol-3-one, 2-Methyl-2H-isothiazol-3-one, and combinations thereof.

In one embodiment, the biocide is present in an amount in the range of about 0.01 wt% to about 2 wt%. In another embodiment, the biocide is present in an amount in the range of about 0.01 wt% to about 1 wt%. In another embodiment, the non-gemini noninonic surfactant is present in an amount in the range of about 0.01 wt% to about 0.5 wt%. In another embodiment, the biocdie is present in an amount in the range of about 0.01 wt% to about 0.1 wt%.

Antifoamers can prevent foaming during manufacturing and handling of the product. In one embodiment, the antifoamer is selected from silicone-based emulsions (e.g Xiameter AFE 0100, SAG 1572, Agnique DFM 111S, Break Thru AF 9903). In one embodiment, the antifoamer is Agnique DFM 111S. In another embodiment, the antifoamer is Dowsil AFE 3101.

In one embodiment, the antifoamer is present in an amount in the range of about 0.01 wt% to about 2 wt%. In another embodiment, the antifoamer is present in an amount in the range of about 0.01 wt% to about 1 wt%. In another embodiment, the antifoamer is present in an amount in the range of about 0.01 wt% to about 0.5 wt%.

A rheology modifier can prevent settling and sedimentation. In one embodiment, the rheology modifier is selected from hydrated magnesium aluminosilicate, xantham gum, and combinations thereof. In one aspect, suitable commercially available rheology modifiers include for example Van Gel B, Veegum K, Veegum HS, Veegum T, Veegum Pure, Veegum R, Acti-gel 208, Rhodopol 23, Aerosil, AEROSIL^{®} R 202, AEROSIL^{®} R 805, AEROSIL^{®} R 812 S, AEROSIL^{®} R 816, AEROSIL^{®} R 972, AEROSIL^{®} R 974, AEROSIL^{®} 200, AEROSIL^{®} 300, AEROSIL^{®} 380, and Bentonite (e.g Vanatural). In another aspect, suitable organic thickeners are sodium carboxymethylcellulose, hydroxyethyl cellulose, hydroxypropyl cellulose and hydroxypropylmethyl cellulose. In one embodiment, the rheology modifier is Acti-Gel 208. In another embodiment, the rheology modifier is Rhodopol 23. In another embodiment, the rheology modifier is a combination of Acti-Gel 208 and Rhodopol 23.

In one embodiment, the rheology modifier is present in an amount in the range of about 0.01 wt% to about 5 wt%. In another embodiment, the rheology modifier is present in an amount in the range of about 0.01 wt% to about 4 wt%. In another embodiment, the rheology modifier is present in an amount in the range of about 0.01 wt% to about 3 wt%. In another embodiment, the rheology modifier is present in an amount in the range of about 0.01 wt% to about 2 wt%. In another embodiment, the rheology modifier is present in an amount in the range of about 0.01 wt% to about 1 wt%. In another embodiment, the rheology modifier is present in an amount in the range of about 0.01 wt% to about 0.5 wt%. In another embodiment, the rheology modifier is present in an amount in the range of about 0.01 wt% to about 0.25 wt%. In another embodiment, the rheology modifier is present in an amount in the range of about 0.01 wt% to about 0.1 wt%.

In an optional step, the dispersion may be wet milled to reduce the average median particle size D50 (50^{th} percentile of cumulative size distribution) to less than about 10 µm and average particle size D90 (90^{th} percentile of cumulative size distribution) to less than about 30 µm. Particle size Dx means that x% of the particles have a particle size smaller than the number indicated. Particle size can be measured by a laser diffraction instrument known to those skilled in the art. Wet milling may be done in process equipment known in the art such as ball mills or colloid mills. In one embodiment, the D50 particle size is less than about 10 µm and the D90 particle size is less than about 30 µm. In another embodiment, the D50 particle size is less than about 5 µm and the D90 particle size is less than about 10 µm. In another embodiment, the D50 particle size is less than about 2 µm and the D90 particle size is less than about 5 µm.

One object of the present disclosure is to minimize the difference between real density and apparent density of SC formulations. The real density of the SC formulation is the density in the absence of aeration. The real density is generally measured by a dilution method such as CIPAC MT 3.3.1 method (Cipac Handbook, Volume F, Physico-Chemical Methods for Technical and Formualted Pesticides, 1995, page 18). The apparent density of the formulation is the density measured right after agitation or shaking. In a typical procedure, the tested formulation is placed in a 250 mL Nalgene bottle such that approximately 50% head space is left in the bottle. The bottle is capped and placed on a wrist shaker and shaken for 10 min. The formulation is then immediately poured into a pre-tared cylinder to the 50^{th} mL mark and the weight recorded. The recorded weigth is divided by the volume (in this case 50 mL) and the result is the apparent density at T=0 min. Afterwards, the volume is recorded on the 5^{th}, 15^{th} and 30^{th} minutes. The apparent density is calculated at each timepoint, which indicates how quickly the air escapes from the formulation. The different data points for the apparent density are then plotted on a graph whose X axis is time and Y axis is apparent density. The best results are achieved when the apparent density at T=0 min is closest to the real density. In one embodiment, the real density is 1.255 g/cc. When the real density of the formulation is 1.255 g/cc, any apparent density at T=0 min lower than 1.150 g/cc is considered unacceptable. When the real density of the formulation is 1.255 g/cc, any apparent density at T=0 min higher than 1.150 g/cc is considered acceptable. Reduction in air entrapment can also be expressed by substracting the apparent density from the real density and dividing the result by the real density. In one embodiment air entrapment is less than about 10%, less than about 9%, less than about 8%, less than about 7%, less than about 6%, less than about 5%, less than about 4%, less than about 3%, less than about 2%, or less than about 1%. In one embodiment air entrapment of less than 10% is acceptable.

In the present disclosure, dispersibility in water is assessed by the spontaneity of bloom of the formulation in water. Spontaneity of bloom of the formulation in water is visually evaluated by adding an aliquot of about 0.5 ml concentrate to about 50 ml water such as Cipac D (342 ppm hardness) in a narrow glass tube with an average diameter of about 2 cm. The glass tube is not disturbed or agitated during the test. The goal is to evaluate the quality of dispersion of the concentrate in water without the help of any external aid such as inversion or shaking or agitation. The spontaneity of bloom is assessed as good or poor. "Good" is when the majority of the concentrate is self-dispersed and "poor" is when no dispersion is observed without the help of an external aid such as agitation or inversion.

The process for preparing the SC compositions of the present disclosure (not according to the invention) comprises the following steps.

The first step generally involves preparation of a concentrated suspension concentrate (SC) of the active ingredient which may be done in process equipment known to those skilled in the art, such as an overhead agitator, a high shear mixer, high shear mill (*e.g.,* a colloid mill) or a homogenizer. The active ingredient is dispersed in water, optionally in the presence of a dispersant. Additional active ingredients may optionally be added to the water phase. In one aspect, the active ingredient(s) can be added to a mixture of all non-biologically active components of the composition. For instance, in some aspects, the dispersant may be a sodium alkylnaphthalenesulfonate, formaldehyde condensate (e.g. Morwet D 425) or sodium or calcium lignonsulfonate (e.g. Reax 88B or Borresperse NA). The dispersant concentration may suitably be about 0.1 wt%. to about 2 wt%. In one aspect, one or more additional dispersant(s) may be added. When present, the additional dispersant concentration may suitably be about 0.5 wt%, about 1 wt.%, about 2 wt.%, about 3 wt.%, about 4 wt.%. about 5 wt.%, about 6 wt.%, about 7 wt.%, about 8 wt.%, about 9 wt.% or about 10 wt.%, or about 11 wt%, or about 12 wt%, or about 13 wt%, or about 14 wt%, or about 15 wt% or in a range constructed from any of those values. For instance, in some aspects, the additional dispersant may be a butyl block copolymer (e.g., Atlas^{®} G 5000). Other additives such as surfactants, pH adjusters, rheology modifiers, anti-freeze agents, biocides, and/or defoaming agents may be added. In one aspect, the surfactant can be a gemini surfactant (e.g. Surfynol 104 PG 50). In one aspect, the surfactants can be both an alkoxylated alchohol (e.g. Lutensol TDA 6) and a gemini surfactant (e.g. Surfynol 104 PG 50).

In an optional second step, the suspension from step 1 may be wet milled to reduce the average median particle size D50 to less than about 10 µm and average particle size D90 to less than about 30 µm. Particle size can be measured by a laser diffraction instrument known to those skilled in the art. Wet milling may be done in process equipment known in the art such as ball mills or colloid mills.

In a third step, the concentrated SC is diluted to a desired strength of the active ingredient or the active ingredients by adding the withheld components from the first step. Generally, the withheld components may be a portion of the antifoam, biocide, any of the surfactants, or the rheology modifier such as xanthan gum. Generally, the xanthan gum is added as a slurry in propylene glycol or as a premade hydrated stock in both water and propylene glycol. In one aspect, the premade hydrated stock may contain xanthan gum, propylene glycol, water and biocide. The withheld components from step 1 are generally added to the concentrated SC under agitation such as an overhead agitator or a high shear mixer.

All plants or any part of a plant can be treated in accordance with the disclosure. The term "plants" as used herein is to be understood as all plants and plant populations such as, for example, desired and undesired wild plants or crop plants (including naturally occurring crop plants). Crop plants can be plants that can be obtained by conventional breeding and optimization methods or by biotechnological and genetic engineering methods or by combinations of these methods, including transgenic plants and including plant cultivars which can or cannot be protected by plant breeders' rights. Plant parts are to be understood as meaning all parts and organs of plants above and below the ground, such as shoot, leaf, flower and root, examples which may be mentioned being leaves, needles, stalks, stems, flowers, fruit bodies, fruits and seeds, as well as roots, tubers and rhizomes. The plant parts also include harvested material, and vegetative and generative propagation material, for example cuttings, tubers, rhizomes, offshoots and seeds.

Treatment of the plants and plant parts with the compositions according to the present disclosure is carried out by direct contact with the plant or plant part, or by action on the plant's environment, habitat or storage space using customary treatment methods. For example, treatment as described herein can be by dipping, spraying, evaporating, atomizing, broadcasting, spreading-on, injecting and, in the case of propagation material -- particularly in the case of seeds -- by applying a layer of a coating comprising the composition, optionally with additional layers.

Compositions of the present disclosure may be aerially delivered to plants. Compositions of the present disclosure may be delivered by an unmanned aerial vehicle (UAV). The planted area may be a crop-containing area. The crop may be selected from a monocot or dicot. The crop may be selected form rice, corn, barley, sobean, wheat, vegetable, tobacco, tea tree, fruit tree and sugar cane. The compositions disclosed herein may be formulated for spraying at an ultra-low volume. Products applied by drones may use water or oil as the spray carrier. Typical spray volume (including product) used for drone applications globally is appromixately 5.0 liters/ha - 100 liters/ha (approximately 0.5-10 gpa). This includes the range of ultra low spray volume (ULV) to low spray volume (LV). Although not common, there may be situations where even lower spray volumes could be used as low as 1.0 liter/ha (0.1 gpa).

Tank mix adjuvants may affect the droplet density and/or spray coverage of a composition dislosed herein, when applied to plants via an aerial delivery system. Suitable tank mix adjuvants include but are not limited to organisilicones, such as Y-20079 (manufactured by Momentive Trading Co. Ltd., Shanghai, China). Other examples include but are not limited to the vegetable oil Maifei, manufactured by Grand AgroChem Co., Ltd., Beijing, China. Other examples include but are not limited to the vegetable oil Beidatong, manufactured by Hebei Mingshun Agricultural Technology Co. Ltd., Shijiazhuang, China. Other examples include but are not limited to the high molecular weight polymer Nongjianfei, manufactured by Guilin Jiqi Group Co. Ltd., Guilin, China. Other examples include but are not limited to the high molecular weight polymer Star Guar X, manufactured by Solvay Chemical Shanhai Co., Ltd., Shanghai, China.

Other examples of tank mix adjuvants suitable for use in an aerial delivery system include deposition enhancing agents, water conditioners, pH modifiers, crop oils, petroleum or paraffinic oils, vegetable oils, methylated seed oils, agents that reduce evaporation, and combinations thereof.

Examples of methods suitable to deliver the liquid formulation compositions disclosed via unmanned aerial vehicles may be found in Wang et al, Int. J. Precis. Agric. Aviat., Vol 3, No.2 pg 65-72 (2020).

Another example of a method suitable to deliver the liquid formulation compositions disclosed via unmanned aerial vehicles may be found in Li et al., Pest Management Science, 19 Aug 2020.

Wild plant species and plant cultivars, or those obtained by conventional biological breeding methods, such as crossing or protoplast fusion, and parts thereof, may be treated. Also, transgenic plants and plant cultivars obtained by genetic engineering methods, if appropriate in combination with conventional methods (Genetically Modified Organisms), and parts thereof may be treated. Plants of the plant cultivars that are in each case commercially available or in use may be treated according to the disclosure. Plant cultivars are to be understood as meaning plants having novel properties ("traits") which have been obtained by conventional breeding, by mutagenesis or by recombinant DNA techniques. These can be cultivars, biotypes or genotypes.

The transgenic plants or plant cultivars (obtained by genetic engineering) that may be treated according to the disclosure include all plants which, by the genetic modification, received genetic material which imparted particular advantageous, useful traits to these plants. Examples of such traits are better plant growth, increased tolerance to high or low temperatures, increased tolerance to drought or to water or soil salt content, increased flowering performance, easier harvesting, accelerated maturation, higher harvest yields, higher quality and/or a higher nutritional value of the harvested products, better storage stability and/or processability of the harvested products. Further and particularly emphasized examples of such traits are a better defense of the plants against animal and microbial pests, such as against insects, mites, phytopathogenic fungi, bacteria and/or viruses, and increased tolerance of the plants to certain herbicidally active compounds. Examples of transgenic plants include the important crop plants, such as cereals (wheat, rice), maize, soybeans, potatoes, sugar beet, tomatoes, peas and other vegetable varieties, cotton, tobacco, oilseed rape and fruit plants (with the fruits apples, pears, citrus fruits and grapes), and emphasis is given to maize, soybeans, potatoes, cotton, tobacco and oilseed rape. Traits include the increased defense of the plants against insects, arachnids, nematodes and slugs and snails by toxins formed in the plants, particularly those formed in the plants by the genetic material from Bacillus thuringiensis (for example by the genes CryIA(a), CryIA(b), CryIA(c), CryIIA, CryIIIA, CryIIIB2, Cry9c, Cry2Ab, Cry3Bb and CryIF and also combinations thereof) ("Bt plants"). Other traits are the increased defense of plants against fungi, bacteria and viruses by systemic acquired resistance (SAR), systemin, phytoalexins, elicitors and resistance genes and correspondingly expressed proteins and toxins. Traits also include the increased tolerance of the plants to certain herbicidally active compounds, for example imidazolinones, sulfonylureas, glyphosate or phosphinotricin (for example the "PAT" gene). The genes which impart the desired traits in question can also be present in combinations with one another in the transgenic plants. Examples of "Bt plants" include maize varieties, cotton varieties, soybean varieties and potato varieties which are sold under the trade names YIELD GARD^{®} (for example maize, cotton, soybeans), KnockOut^{®} (for example maize), StarLink^{®} (for example maize), Bollgard^{®} (cotton), Nucotn^{®} (cotton) and NewLeaf^{®} (potato). Examples of herbicide-tolerant plants are maize varieties, cotton varieties and soybean varieties that are sold under the trade names Roundup Ready^{®} (tolerance to glyphosate, for example maize, cotton, soybean). Liberty Link^{®} (tolerance to phosphinotricin, for example oilseed rape), IMI^{®} (tolerance to imidazolinones) and STS^{®} (tolerance to sulfonylureas, for example maize). Herbicide-resistant plants (plants bred in a conventional manner for herbicide tolerance) include the varieties sold under the name Clearfield^{®} (for example maize). The agricultural crops are selected from the group consisting of cereals, fruit trees, citrus fruits, legumes, horticultural crops, cucurbits, oleaginous plants, tobacco, coffee, tea, cocoa, sugar beet, sugar cane, and cotton.

Depending on the plant species or plant cultivars, their location and growth conditions (soils, climate, vegetation period, diet), the treatment according to the disclosure may also result in superadditive ("synergistic") effects. Thus, for example, reduced application rates and/or a widening of the activity spectrum and/or an increase in the activity of the substances and compositions which can be used according to the disclosure, better plant growth, increased tolerance to high or low temperatures, increased tolerance to drought or to water or soil salt content, increased flowering performance, easier harvesting, accelerated maturation, higher harvest yields, higher quality and/or a higher nutritional value of the harvested products, better storage stability and/or processability of the harvested products are possible, which exceed the effects which were actually to be expected.

Crops that can be protected with the compositions according to this disclosure, for example, comprise cereals (wheat, barley, rye, oats, rice, maize, sorghum, etc.), fruit trees (apples, pears, plums, peaches, almonds, cherries, bananas, grapes, strawberries, raspberries, blackberries, etc.), citrus trees (oranges, lemons, mandarins, grapefruit, etc.), legumes (beans, peas, lentils, soybean, etc.), vegetables (spinach, lettuce, asparagus, cabbage, carrots, onions, tomatoes, potatoes, eggplants, peppers, etc.), cucurbitaceae (pumpkins, zucchini, cucumbers, melons, watermelons, etc.), oleaginous plants (sunflower, rape, peanut, castor, coconut, etc.), tobacco, coffee, tea, cocoa, sugar beet, sugar cane, and cotton.

To protect the agricultural crops, the compositions of this disclosure can be applied to any part of the plant, or on the seeds before sowing, or on the soil in which the plant grows.

The embodiments of this disclosure include:
Embodiment 2. An agrochemical suspension concentrate composition comprising:
   (i) a pesticidal active ingredient at a concentration from about 10 wt% to about 60 wt% selected from the group consisting of chlorantraniliprole, cyantraniliprole, tetrachlorantraniliprole, bromoantraniliprole, dichlorantraniliprole, tetraniliprole, cyclaniliprole, cyhalodiamide, flubendiamide, and combinations thereof, or selected from indoxacarb, N-(1-methylcyclopropyl)-2-(3-pyridinyl)-2H-indazole-4-carboxamide, Fluindapyr, Flutriafol, Tetflupyrolimet, 5-chloro-2-[3-chloro-2-[3-(difluoromethyl)-5-isoxazolyl]phenoxy]-pyrimidine, Beflubutamide-M, Bixlozone, Sulfentrazone, and combinations thereof;
   (ii) at least one dispersant at a concentration from about 0.1 wt% to about 2 wt% selected from sulfonated aromatic polymer sodium salts, alkyl naphthalene sulfonate condensate sodium salts, alkyl naphthalene sulfonates, alkyl naphthalene sulfonate salts, naphthalene sulfonate salts, naphthalene sulfonate condensates, naphthalene sulfonate-formaldehyde condensates, naphthalenesulfonic acid polymers with formaldehyde and sodium, naphthalene sulfonate condensate sodium salts, alkyl naphthalene sulfonate-formaldehyde condensates, alkyl naphthalene sulfonate-formaldehyde condensate salts, and combinations thereof, or selected from sodium lignosulfonate, calcium lignosulfonate, lignosulfonic acid sodium salt, lignosulfonic acid, and combinations thereof;
   (iii) a gemini surfactant, wherein the gemini surfactant comprises two polar groups selected from alcohols, halogens, amines, phosphates, sulfates, sulfonates, and carboxylates and two hydrophobic chains selected from branched or unbranched C₁-C₁₂ alkyl, branched or unbranched C₂-C₁₂ alkenyl, and branched or unbranched C₂-C₁₂ alkynyl; and
   (iv) optionally at least one adjuvant;
   wherein the weight ratio of the dispersant to the gemini surfactant is from about 1:1 to about 20:1 or from about 1:2 to about 1:20.
Embodiment 3. The composition of embodiment 2 wherein the concentration of the pesticidal active ingredient is from about 30 wt% to about 60 wt%, or from about 45 wt% to about 55 wt%.
Embodiment 4. The composition of embodiment 2 or 3 wherein the weight ratio of the dispersant to the gemini surfactant is from about 4:1 to about 15:1, or from about 1:4 to about 1:15.
Embodiment 8. The composition of embodiment 2, wherein the pesticidal active ingredient is selected from chlorantraniliprole, cyantraniliprole, tetrachlorantraniliprole, bromoantraniliprole, dichlorantraniliprole, tetraniliprole, cyclaniliprole, cyhalodiamide, flubendiamide, and combinations thereof.
Embodiment 9. The composition of embodiment 8, wherein the pesticidal active ingredient is chlorantraniliprole.
Embodiment 10. The composition of embodiment 8, wherein the pesticidal active ingredient is cyantraniliprole.
Embodiment 11. The composition of any of embodiments 2 to 10, wherein the composition further comprises an additional pesticidal active ingredient selected from abamectin, acephate, acequinocyl, acetamiprid, acrinathrin, acynonapyr, afidopyropen,
   ([(3S,4R,4aR,6S,6aS,12R,12aS,12bS)-3-[(cyclopropylcarbonyl)oxy]-1,3,4,4a,5,6,6a,12,12a,12b-decahydro-6,12-dihydroxy-4,6a,12b-trimethyl-11-oxo-9-(3-pyridinyl)-2H,11H-naphtho[2,1-b]pyrano[3,4-e]pyran-4-yl]methyl cyclopropanecarboxylate), amidoflumet, amitraz, avermectin, azadirachtin, azinphos methyl, benfuracarb, bensultap, benzpyrimoxan, bifenthrin, kappa-bifenthrin, bifenazate, bistrifluron, borate, broflanilide, buprofezin, cadusafos, carbaryl, carbofuran, cartap, carzol, chlorantraniliprole, chlorfenapyr, chlorfluazuron, chloroprallethrin, chlorpyrifos, chlorpyrifos-e, chlorpyrifos-methyl, chromafenozide, clofentezin, chloroprallethrin, clothianidin, cyantraniliprole, (3-bromo-1-(3-chloro-2-pyridinyl)-N-[4-cyano-2-methyl-6-[(methylamino)carbonyl]phenyl]-1H-pyrazole-5-carboxamide), cyclaniliprole (3-bromo-N-[2-bromo-4-chloro-6-[[(1-cyclopropylethyl)amino]carbonyl]phenyl]-1-(3-chloro-2-pyridinyl)-1H-pyrazole-5-carboxamide), cycloprothrin, cycloxaprid ((5S,8R)-1-[(6-chloro-3-pyridinyl)methyl]-2,3,5,6,7,8-hexahydro-9-nitro-5,8-Epoxy-1H-imidazo[1,2-a]azepine), cyenopyrafen, cyflumetofen, cyfluthrin, beta cyfluthrin, cyhalodiamide, cyhalothrin, gamma-cyhalothrin, lambda-cyhalothrin, cypermethrin, alpha-cypermethrin, zeta-cypermethrin, cyromazine, deltamethrin, diafenthiuron, diazinon, dicloromezotiaz, dieldrin, diflubenzuron, dimefluthrin, dimehypo, dimethoate, dimpropyridaz, dinotefuran, diofenolan, emamectin, emamectin benzoate, endosulfan, esfenvalerate, ethiprole, etofenprox, epsilon-metofluthrin, etoxazole, fenbutatin oxide, fenitrothion, fenothiocarb, fenoxycarb, fenpropathrin, fenvalerate, fipronil, flometoquin (2-ethyl-3,7-dimethyl-6-[4-(trifluoromethoxy)phenoxy]-4-quinolinyl methyl carbonate), flonicamid, fluazaindolizine, flubendiamide, flucythrinate, flufenerim, flufenoxuron, flufenoxystrobin (methyl (αE)-2-[[2-chloro-4-(trifluoromethyl)phenoxy]methyl]-α-(methoxymethylene)benzeneacetate), fluensulfone (5-chloro-2-[(3,4,4-trifluoro-3-buten-1-yl)sulfonyl]thiazole), fluhexafon, fluopyram, flupiprole (1-[2,6-dichloro-4-(trifluoromethyl)phenyl]-5-[(2-methyl-2-propen-1-yl)amino]-4-[(trifluoromethyl)sulfinyl]-1H-pyrazole-3-carbonitrile), flupyradifurone (4-[[(6-chloro-3-pyridinyl)methyl](2,2-difluoroethyl)amino]-2(5H)-furanone), flupyrimin, fluvalinate, tau fluvalinate, fluxametamide, fonophos, formetanate, fosthiazate, gamma-cyhalothrin, halofenozide, heptafluthrin ([2,3,5,6-tetrafluoro-4-(methoxymethyl)phenyl]methyl 2,2-dimethyl-3-[(1Z)-3,3,3-trifluoro-1-propen-1-yl]cyclopropanecarboxylate), hexaflumuron, hexythiazox, hydramethylnon, imidacloprid, indoxacarb, insecticidal soaps, isofenphos, isocycloseram, kappa-tefluthrin, lambda-cyhalothrin, lufenuron, malathion, meperfluthrin ([2,3,5,6-tetrafluoro-4-(methoxymethyl)phenyl]methyl (1R,3S)-3-(2,2-dichloroethenyl)-2,2-dimethylcyclopropanecarboxylate), metaflumizone, metaldehyde, methamidophos, methidathion, methiocarb, methomyl, methoprene, methoxychlor, metofluthrin, methoxyfenozide, epsilon-metofluthrin, epsilon-momfluorothrin, monocrotophos, monofluorothrin ([2,3,5,6-tetrafluoro-4-(methoxymethyl)phenyl]methyl 3-(2-cyano-1-propen-1-yl)-2,2-dimethylcyclopropanecarboxylate), nicotine, nitenpyram, nithiazine, novaluron, noviflumuron, *N-*[1,1-dimethyl-2-(methylthio)ethyl]-7-fluoro-2-(3-pyridinyl)-2*H*-indazole-4-carboxamide, *N*-[1,1-dimethyl-2-(methylsulfinyl)ethyl]-7-fluoro-2-(3-pyridinyl)-2*H*-indazole-4-carboxamide, *N*-[1,1-dimethyl-2-(methylsulfonyl)ethyl]-7-fluoro-2-(3-pyridinyl)-2*H*-indazole-4-carboxamide, *N*-(1-methylcyclopropyl)-2-(3-pyridinyl)-2H-indazole-4-carboxamide, and *N*-[1-(difluoromethyl)cyclopropyl]-2-(3-pyridinyl)-2*H*-indazole-4-carboxamide, oxamyl, oxazosulfyl, parathion, parathion methyl, permethrin, phorate, phosalone, phosmet, phosphamidon, pirimicarb, profenofos, profluthrin, propargite, protrifenbute, pyflubumide (1,3,5-trimethyl-N-(2-methyl-1-oxopropyl)-N-[3-(2-methylpropyl)-4-[2,2,2-trifluoro-1-methoxy-1-(trifluoromethyl)ethyl]phenyl]-1H-pyrazole-4-carboxamide), pymetrozine, pyrafluprole, pyrethrin, pyridaben, pyridalyl, pyrifluquinazon, pyriminostrobin (methyl (αE)-2-[[[2-[(2,4-dichlorophenyl)amino]-6-(trifluoromethyl)-4-pyrimidinyl]oxy]methyl]-α-(methoxymethylene)benzeneacetate), pydiflumetofen, pyriprole, pyriproxyfen, rotenone, ryanodine, silafluofen, spinetoram, spinosad, spirodiclofen, spiromesifen, spiropidion, spirotetramat, sulprofos, sulfoxaflor (N-[methyloxido[1-[6-(trifluoromethyl)-3-pyridinyl]ethyl]-λ4-sulfanylidene]cyanamide), tebufenozide, tebufenpyrad, teflubenzuron, tefluthrin, kappa-tefluthrin, terbufos, tetrachlorantraniliprole, tetrachlorvinphos, tetramethrin, tetramethylfluthrin ([2,3,5,6-tetrafluoro-4-(methoxymethyl)phenyl]methyl 2,2,3,3-tetramethylcyclopropanecarboxylate), tetraniliprole, thiacloprid, thiamethoxam, thiodicarb, thiosultap-sodium, tioxazafen (3-phenyl-5-(2-thienyl)-1,2,4-oxadiazole), tolfenpyrad, tralomethrin, triazamate, trichlorfon, triflumezopyrim (2,4-dioxo-1-(5-pyrimidinylmethyl)-3-[3-(trifluoromethyl)phenyl]-2H- pyrido[1,2-a]pyrimidinium inner salt), triflumuron, tyclopyrazoflor, zeta-cypermethrin, Bacillus thuringiensis delta-endotoxins, entomopathogenic bacteria, entomopathogenic viruses, entomopathogenic fungi, and combinations thereof.
Embodiment 13. The composition of any of embodiments 2 to 11, wherein the dispersant is selected from sulfonated aromatic polymer sodium salts, alkyl naphthalene sulfonate condensate sodium salts, alkyl naphthalene sulfonates, alkyl naphthalene sulfonate salts, naphthalene sulfonate salts, naphthalene sulfonate condensates, naphthalene sulfonate-formaldehyde condensates, naphthalenesulfonic acid polymers with formaldehyde and sodium, naphthalene sulfonate condensate sodium salts, alkyl naphthalene sulfonate-formaldehyde condensates, alkyl naphthalene sulfonate-formaldehyde condensate salts, and combinations thereof.
Embodiment 14. The composition of embodiment 13, wherein the dispersant is a sodium alkyl naphthalene sulfonate-formaldehyde condensate.
Embodiment 15. The composition of any of embodiments 2 to 11, wherein the dispersant is selected from sodium lignosulfonate, calcium lignosulfonate, lignosulfonic acid sodium salt, lignosulfonic acid, and combinations thereof.
Embodiment 16. The composition of embodiment 2, or any one of embodiments 3-13 wherein the weight ratio of the pesticidal active ingredient to the dispersant is from about 1:1 to about 25:1.
Embodiment 19. The composition of any of embodiments 2 to 18 wherein the gemini surfactant comprises a spacer selected from C₁-C₁₂ alkyl, C₂-C₁₂ alkenyl, and C₂-C₁₂ alkynyl.
Embodiment 20. The composition of any of embodiments 2 to 19 wherein the gemini surfactant is 2,4,7,9-tetramethyldec-5-yne-4,7-diol.
Embodiment 21. The composition of any of embodiments 2 to 20, wherein the gemini surfactant is present at a concentration from about 0.01 wt% to about 5 wt%.
Embodiment 22. The composition of any of embodiments 2 to 21, wherein the gemini surfactant is present at a concentration from about 0.1 wt% to about 1 wt%.
Embodiment 23. The composition of any of embodiments 2 to 22, wherein the composition further comprises a surfactant that is not a gemini surfactant.
Embodiment 24. The composition of any of embodiments 2 to 23, wherein the composition further comprises water.
Embodiment 25. The composition of embodiment 24, wherein the water is present in an amount of at least about 30 wt%.
Embodiment 26. The composition of any of embodiments 24 or 25, wherein the water is present in an amount of at least about 35 wt%.
Embodiment 27. The composition of any of embodiments 2 to 26, wherein the at least one adjuvant is selected from dispersants, surfactants, biocides, antifoamers, antifreeze agents, rheology modifiers, wetting agents, solvents, and combinations thereof.
Embodiment 28. The composition of any of embodiments 2 to 27, wherein the at least one adjuvant is a surfactant or a wetting agent.
Embodiment 29. The composition of any of embodiments 2 to 28, wherein the composition disperses in water without agitation.
Embodiment 30. The composition of any of embodiments 2 to 29, wherein the difference between real density and apparent density is less than about 15%.
Embodiment 31. The composition of any one of embodiments 2 to 30, wherein the air entrapment is less than about 10%.
Embodiment 32. The composition of any of embodiments 2 to 31, wherein the D50 particle size is less than about 10 µm and the D90 particle size is less than about 30 µm.
Embodiment 33. The composition of any of embodiments 2 to 32, wherein the D50 particle size is less than about 5 µm and the D90 particle size is less than about 10 µm.

### EXAMPLES

Without further elaboration, it is believed that one skilled in the art using the preceding description can utilize the present disclosure to its fullest extent. The following Examples are, therefore, to be construed as merely illustrative, and not limiting of the disclosure in any way whatsoever.

The identities and purposes of the ingredients named in the examples are briefly described below.

Chlorantraniliprole is a pesticidal active ingredient.

Propylene glycol and glycerol are antifreeze agents.

Atlox 4913 is a methyl methacrylate ethoxylated graft copolymer and acts as a dispersant.

Morwet D-425 is a sodium alkylnaphthalenesulfonate formaldehyde condensate and acts as a dispersant.

Atlas G 5000 is a polyalkylene oxide block copolymer and acts as a dispersant.

Surfynol 104PG-50 is 2,4,7,9-tetramethyldec-5-yne-4,7-diol and acts as a wetting agent.

Lutensol TDA 6 is a mixture of C₁₁-C₁₄-iso, C₁₃-rich, ethoxylated alochols and acts as a wetting agent.

Acticide SPX is a mixture of 5-Chloro-2-methyl-2H-isothiazol-3-one and 2-Methyl-2H-isothiazol-3-one and acts as a biocide.

Acticide LA 1209 is a mixture of 2-Bromo-2-nitropropane-1, 3-diol, 5-Chloro-2-methyl-2H-isothiazol-3-one, and 2-Methyl-2H-isothiazol-3-one and acts as a biocide.

Agnique DFM 111S is an aqueous solution based on hydrocarbons and modified organopolysiloxanes and acts as an antifoamer.

Acti-gel 208 is a hydrated aluminum magnesium silicate and acts as a rheology modifier.

Veegum R is a magnesium aluminum silicate.

Rhodopol 23 is xantham gum and acts as a rheology modifier.

Agnique PG 9116 is a alkylpolyglucoside and acst as a wetting agent.

Dowsil AFE 3101 is a silicone-based emulsion and acts an antifoamers.

Morwet D-400 is a sodium alkylnaphthalenesulfonate formaldehyde condensate and acts as a dispersant.

Morwet D-809 is a sodium alkylnaphthalenesulfonate formaldehyde condensate and acts as a dispersant.

Morwet D-360 is a blend of lignin and naphthalene sulfonates and acts as a dispersant.

Morwet D-390 is a blend of lignin and naphthalene sulfonates and acts as a dispersant.

Morwet D-500 is a blend of Morwet D-425 and block copolymer and acts as a dispersant.

Reax 88B is a lignin sulfonate and acts as a dispersant.

Polyfon F is a lignin sulfonate and acts as a dispersant.

Agnique DDL is a blend of alkyl polyglucoside and lignin sulfonate and it acts as a dispersant.

Vultamol DN is a sodium phenol sulfonate condensate and acts as a dispersant.

Agrilan 789 is a sodium polyacrylate polymer and acts as a dispersant.

Agrilan 700 is a sodium polyacrylate polymer and acts as a dispersant.

Dispersogen ACP 120 is a polyacrylate graft copolymer and acts as a dispersant.

Hostapon TPHC is sodium salt of fatty acid methyl tauride and acts as a dispersant.

Dispersogen 1494 is a sodium salt of of a cresol-formaldehyde condensation product and acts as a dispersant.

Atlox^{™} Metasperse 550S is a styrene acrylic copolymer and acts as a dispersant.

Crodafos C10/5A is alkoxylate cetyl phosphate and acts as a dispersant.

Dextrol OC-180 is a potassium salt of ethoxylated aliphatic alchohol phosphate ester and acts as a dispersant.

Soprophor FLK is a potassium salt of ethoxylates tristyrylphenol phosphate and acts as a dispersant.

Soprophor 4D384 is an ammonium salt of ethoxylated tristyrylphenol sulfate and acts as a dispersant.

Sokalan^{®} CP 5 is a maleic acid/acrylic acid copolymer and acts as a dispersant.

Sokalan^{®} CP 7 is a maleic acid/acrylic acid copolymer and acts as a dispersant.

Sokalan^{®} CP 9 is a sodium salt of maleic acid/olefin copolymer and acts as a dispersant.

EasySperse^{™} P-20 is a blend of polyvinyl pyrrolidone (PVP) and methyl vinyl ether/maleic acid half ester and can act as a dispersant.

Suspension concentrate (SC) compositions comprising Chlorantraniliprole were prepared as summarized in the Tables below, wherein all amounts are reported as percent of the total formulation (% w/w). All compositions were made according to the procedures described herein.

### Example 1 (Reference). Formulation compositions not containing Surfynol 104PG50.

**Table 1. Formulation compositions 1A-1C.**

| | **1 A** | **1B** | **1C** |
|---|---|---|---|
| **Component** | | | |
| Chlorantraniliprole | 47.80 | 47.85 | 47.85 |
| Propylene Glycol | 3.00 | 3.00 | 3.00 |
| Glycerol | 3.00 | 3.00 | 3.00 |
| Atlox 4913 | 4.00 | 4.00 | -- |
| Atlas G 5000 | 2.00 | 2.00 | 2.00 |
| Morwet D-425 | -- | 6.00 | 6.00 |
| Surfynol 104PG-50 | -- | -- | -- |
| Lutensol TDA 6 | 0.30 | 0.30 | 0.30 |
| Biocide* | 0.10 | 0.10 | 0.10 |
| Agnique DFM 111S | 0.50 | 0.50 | 0.50 |
| Acti-Gel 208 | 0.50 | 0.50 | 0.50 |
| Rhodopol 23 | 0.10 | 0.10 | 0.10 |
| Water | 38.70 | 32.65 | 32.65 |
| Spontaneity of Bloom | Good | Good | Good |
| Air Entrapment | Unacceptable | Acceptable | Acceptable |

| | | | |
|---|---|---|---|
| *The biocide was either Acticide LA 1209 or Acticide SPX. | | | |

Composition 1A (comparative) exhibited unacceptable air entrapment and did not contain Morwet D425 and Surfynol 104PG50. Compositions 1B and 1C exhibited acceptable air entrapment and contained Morwet D425 added as a co-dispersant, but did not contain Surfynol 104PG50. All formulations showed good spontaneity of bloom.

Spontaneity of bloom of the formulation in water is visually evaluated in all formulations by adding an aliquot of about 0.5 ml concentrate to about 50 ml water such as Cipac D (342 ppm hardness) in a narrow glass tube with an average diameter of about 2 cm. The glass tube is not disturbed during the test. The goal is to evaluate the quality of dispersion of the concentrate in water without the help of any external aid such as inversion or shaking or agitation. The spontaneity of bloom is assessed as good or poor. "Good" is when the majority of the concentrate is self-dispersed and "poor" is when no dispersion is observed without the help of an external aid such as agitation or inversion.

The air entrapment of all formulations is measured by calculating the difference between real density and apparent density. The real density of the SC formulation is the density in the absence of aeration. The real density is generally measured by a dilution method such as CIPAC MT 3.3.1 method (Cipac Handbook, Volume F, Physico-Chemical Methods for Technical and Formualted Pesticides, 1995, page 18). The apparent density of the formulation is the density measured right after agitation or shaking. In a typical procedure, the tested formulation is placed in a 250 mL Nalgene bottle such that approximately 50% head space is left in the bottle. The bottle is capped and placed on a wrist shaker and shaken for 10 min. The formulation is then immediately poured into a pre-tared cylinder to the 50^{th} mL mark and the weight recorded. The recorded weigth is divided by the volume (in this case 50 mL) and the result is the apparent density at T=0 min. Afterwards, the volume is recorded on the 5^{th}, 15^{th} and 30^{th} minutes. The apparent density is calculated at each timepoint, which indicates how quickly the air escapes from the formulation. The different data points for the apparent density are then plotted on a graph whose X axis is time and Y axis is apparent density. When the real density of the formulation is 1.255 g/cc, any apparent density at T=0 min lower than 1.130 g/cc is considered unacceptable. When the real density of the formulation is 1.255 g/cc, any apparent density at T=0 min higher than 1.130 g/cc is considered acceptable, corresponding to less than 10% air entrapment.

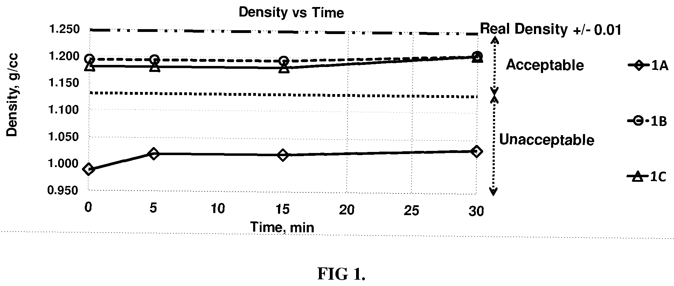

The air entrapment results are presented in Figure 1. The air entrapment was not acceptable when neither Morwet D425, nor Surfynol 104PG50 were in the formulation (composition 1A). Surprisingly, 6 wt% of Morwet D425 in compositions 1B and 1C, reduced the air entrapment to acceptable levels in both formulations. The acceptable range shown in Figure 1 is chosen to be within less than 10% of the real density. The most critical air entrapment data for formulation occur at the T=0 min and T=5 min data points, i.e. the density right after shaking and after 5 min after shaking, respectively.

### Example 2. Formulation compositions containing Surfynol 104PG50.

**Table 2. Formulation compositions 5A-5F.**

| | **5A** (Reference) | **5B** (Reference) | **5C** | **5D** | **5E** | **5F** |
|---|---|---|---|---|---|---|
| **Component** | | | | | | |
| Chlorantraniliprole | 47.80 | 47.85 | 47.85 | 47.90 | 47.85 | 47.85 |
| Propylene Glycol | 3.00 | 3.00 | 3.00 | 3.00 | 3.00 | 3.00 |
| Glycerol | 3.00 | 3.00 | 3.00 | 3.00 | 3.00 | 3.00 |
| Atlox 4913 | 4.00 | 4.00 | 4.00 | 4.00 | 4.00 | 4.00 |
| Atlas G 5000 | 2.00 | 2.00 | 2.00 | 1.00 | 1.00 | 1.50 |
| Morwet D425 | 2.00 | -- | 2.00 | 2.00 | 2.00 | 2.00 |
| Surfynol 104PG-50 | -- | 0.50 | 0.50 | 0.50 | 0.50 | 0.50 |
| Agnique PG 9116 | -- | -- | -- | 0.75 | -- | -- |
| Lutensol TDA 6 | 0.30 | 0.30 | 0.30 | -- | 0.30 | 0.30 |
| Biocide* | 0.10 | 0.10 | 0.10 | 0.10 | 0.10 | 0.10 |
| Agnique DFM 111S | 0.50 | 0.50 | 0.50 | 0.50 | 0.50 | 0.50 |
| Acti-Gel 208 | 0.50 | 0.50 | 0.50 | 0.50 | 0.50 | 0.50 |
| Rhodopol 23 | 0.10 | 0.10 | 0.10 | 0.10 | 0.10 | 0.10 |
| Water | 36.70 | 38.15 | 36.15 | 36.65 | 37.15 | 36.65 |
| Spontaneity of Bloom | Good | Good | Good | Good | Good | Good |
| Air Entrapment | Unacceptable | Unacceptable | Acceptable | Acceptable | Acceptable | Acceptable |

| | | | | | | |
|---|---|---|---|---|---|---|
| *The biocide was either Acticide LA 1209 or Acticide SPX. | | | | | | |

**Table 3. Formulation compositions 5G-5I.**

| | **5G** | **5H** | **5I** |
|---|---|---|---|
| **Component** | | | |
| Chlorantraniliprole | 47.85 | 47.90 | 47.90 |
| Propylene Glycol | 3.00 | 3.00 | 3.00 |
| Glycerol | 3.00 | 3.00 | 3.00 |
| Atlox 4913 | 4.00 | 4.00 | 4.00 |
| Atlas G 5000 | 1.00 | 1.50 | 1.00 |
| Morwet D425 | 2.00 | 2.00 | 2.00 |
| Surfynol 104PG-50 | 0.50 | 0.50 | 0.50 |
| Agnique PG 9116 | -- | -- | 0.75 |
| Dowsil AFE 3101 | -- | -- | 0.3 |
| Lutensol TDA 6 | 1.00 | 0.30 | -- |
| Biocide* | 0.10 | 0.10 | 0.10 |
| Agnique DFM 111S | 0.50 | 0.50 | 0.50 |
| Acti-Gel 208 | 0.50 | 0.50 | 0.50 |
| Rhodopol 23 | 0.10 | 0.10 | 0.10 |
| Water | 36.45 | 36.60 | 36.85 |
| Spontaneity of Bloom | Good | Good | Good |
| Air Entrapment | Acceptable | Acceptable | Acceptable |

| | | | |
|---|---|---|---|
| *The biocide was either Acticide LA 1209 or Acticide SPX. | | | |

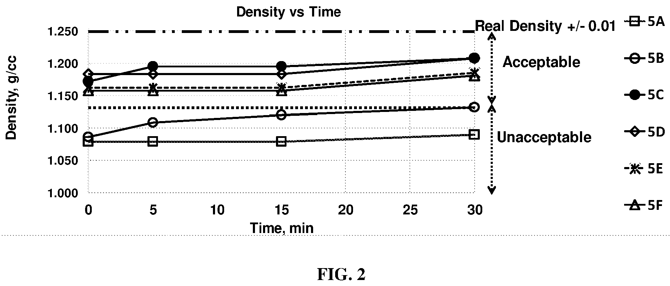

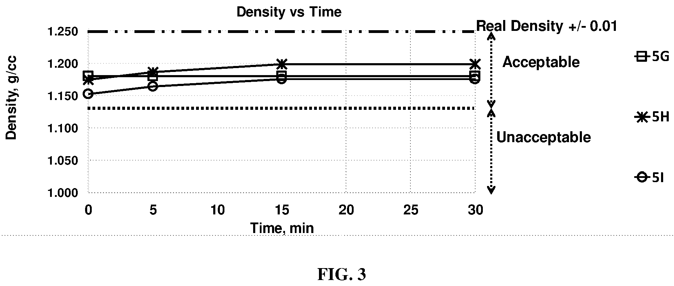

Composition 5A exhibited unacceptable air entrapment, and contained Morwet D425 at lower w/w% than in compositions 1B and 1C, but did not contain Surfynol 104PG50. Composition 5B contained Surfynol 104PG50, but did not contain Morwet D425. Composition 5C-5I contained both Morwet D425 and Surfynol 104PG50 at the same w/w% as in compositions 5A and 5B, respectively. Spontaneity of bloom and air entrapment were evaluated using the procedures described in Example 1. All formulations showed good spontaneity of bloom. The air entrapment results are presented in Figures 2 and 3. Compositions 5C-5I had acceptable air entrapment compared to compositions 5A and 5B which had unacceptable air entrapment. The air entrapment was not acceptable when either Morwet D425 or Surfynol 104PG50 alone was present in the formulation (compositions 5A and 5B, respectively). Surprisingly, the combination of 2 wt% Morwet D425 and 0.5 wt% of Surfynol 104PG50 led to acceptable air entrapment (compositions 5C-5I). The acceptable range in Figures 2 and 3 is chosen to be within less than 10% of the real density.

### Example 3 (Reference). Formulation composition containing two active ingredients.

**Table 4. Formulation composition 2A.**

| | **2A** |
|---|---|
| **Component** | |
| Chlorantraniliprole | 16.50 |
| Indoxacarb | 33.00 |
| Propylene Glycol | 3.00 |
| Glycerol | 3.00 |
| Atlox 4913 | 4.00 |
| Atlas G 5000 | 2.00 |
| Morwet D-425 | 6.00 |
| Surfynol 104PG-50 | -- |
| Lutensol TDA 6 | 0.30 |
| Acticide SPX | 0.10 |
| Agnique DFM 111S | 0.50 |
| Acti-Gel 208 | 0.50 |
| Rhodopol 23 | 0.10 |
| Water | 31.00 |
| Spontaneity of Bloom | Good |
| Air Entrapment | Acceptable |

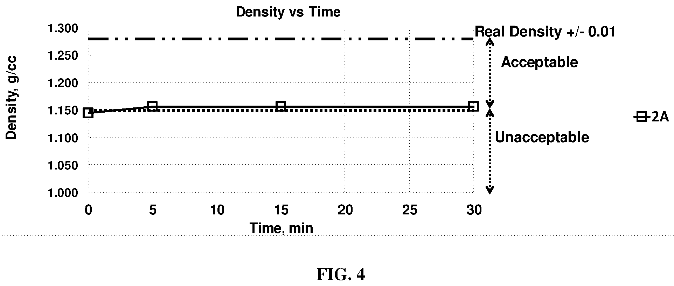

Composition 2A was made with a mixture of Chlorantraniliprole and Indoxacarb using the same type and amount for the non-active ingredients as in composition 1B. The air entrapment results are presented in Figure 4. Similar to composition 1B, 6 wt% of Morwet D425 reduced the air entrapment of the formulated product to acceptable levels. The acceptable range in Figure 4 is chosen to be within less than 10% of the real density.

### Efficacy Evaluations

### Example 4. Soybean/tomato potency and rainfastness.

The efficacy and rainfastness on beet armyworm (BAW) *Spodoptera exigua* of the formulation composition 5E were evaluated according to the following method compared to a commercially available Chlorantraniliprole SC formulation which neither contained Morwet D-425 nor Surfynol 104PG-50. Both formulations were applied at the same rate. The results are provided in Table 5.

Soybean or tomato plants were grown in a growth chamber until the appropriate size was reached. Formulations were applied with the active ingredient diluted to the test concentration. Two hours later, the plants were exposed to 75 mm of simulated rain in one hour. After plants dried, leaf material was collected for bioassaying. Leaf pieces were exposed to neonate fall armyworm larvae Spodoptera frugiperda (Spodoptera exigua with tomato) and larval mortality was determined 96 hours after infestation.

**Table 5. Tomato BAW potency and rainfastness evaluation.**

| Composition | Washoff | EC50, ppm | EC50 lower, ppm | EC50 upper, ppm |
|---|---|---|---|---|
| 5E | No | 1.6 | 0.5 | 8.5 |
| Commercial Chlorantraniliprole SC formulation | No | 1.1 | 0.6 | 2.2 |
| 5E | Yes | 4.2 | 1.5 | 12.0 |
| Commercial Chlorantraniliprole SC formulation | Yes | 4.3 | 2.2 | 8.5 |

Composition 5E had similar mortality before and after washoff on *Spodoptera exigua* as the commercial Chlorantraniliprole SC formulation (overlapping confidence intervals).

### Example 5. Phytotoxicity.

Tomato response to the chlorantraniliprole compositions 5C-5G was evaluated according to the following method. All formulations were applied at the same rate. The results are provided in Table 6. No phytotoxicity was observed after either 7 DAT or 14 DAT.

Plants of the crop of interest were grown in a greenhouse until the appropriate size was reached. Plants were sprayed using a belt sprayer at 50 gal/ac or other rates if necessary. After 7 and 14 days, phytotoxicity (%) was evaluated based on whole-plant assessment taking into account area damaged and intensity.

**Table 6. Phytotoxicity evaluation.**

| Composition | Crop Response after 7 DAT | Crop response after 14 DAT |
|---|---|---|
| 5C | 0.0 | 0.0 |
| 5D | 0.0 | 0.0 |
| 5E | 0.0 | 0.0 |
| 5F | 0.0 | 0.0 |
| 5G | 0.0 | 0.0 |

### Example 6. Tomato Systemic Potency.

Systemic potency on beet armyworm (BAW) *Spodoptera exigua* larvae of chlorantraniliprole composition 5E was evaluated according to the following method compared to a commercially available Chlorantraniliprole SC formulation which neither contained Morwet D-425 nor Surfynol 104PG-50. Both formulations were applied to the soil surface at the same rate. The results are provided in Table 7.

Tomato plants were transplanted into 4" pots 1 week prior to treatment and held in a greenhouse. Soil surface was drenched with 50 ml of formulation dilution per pot and pots were placed in 8 oz lids. There were 5 pots per treatment. Plants were held in a growth chamber at constant temperature and relative humidity (RH). Plants were watered gently at the soil surface as needed. One week after treatment, leaves were cut bioassayed with beet armyworm Spodoptera exigua larvae. Larval mortality was determined 96 hours post infestation

**Table 7. Tomato BAW systemic potency test.**

| Composition | Formulation Type | % Mortality |
|---|---|---|
| 5E | SC with Morwet D-425 and Surfynol 104PG-50 | 75 |
| Commercial Chlorantraniliprole SC formulation | SC without Morwet D-425 and without Surfynol 104PG-50 | 64 |
| Untreated Check | n/a | 0 |

### Composition 5E had similar mortality on Spodoptera exigua larvae as the commercial Chlorantraniliprole SC formulation.

### Example 7. Zucchini/Cabbage looper Laboratory-Field bioassay.

The efficacy on cabbage looper larvae *Trichoplusia ni* of formulation composition 5E was evaluated according to the following method compared to a commercially available Chlorantraniliprole SC formulation which neither contained Morwet D-425 nor Surfynol 104PG-50. Both formulations were applied at the same rate. The results are provided in Table 8.

Zucchini plants were grown in the field to the appropriate size and sprayed with test materials diluted in water at the desired concentrations. Treated leaves were collected for bioassaying at 7DAT. Leaf pieces were infested with cabbage looper larvae *Trichoplusia ni* and larval mortality was determined 96 hours after infestation.

**Table 8. Zucchini/Cabbage looper Laboratory-Field bioassay.**

| Composition | Formulation Type | % Mortality |
|---|---|---|
| 5E | SC with Morwet D-425 and Surfynol 104PG-50 | 75 |
| Commercial Chlorantraniliprole SC formulation | SC without Morwet D-425 and without Surfynol 104PG-50 | 71 |
| Untreated Check | n/a | 0 |

Composition 5E had similar mortality on *Trichoplusia ni* as the commercial Chlorantraniliprole SC formulation.

### Example 8. Application of an SC Formulation to Rice via Unmanned Drone.

A SC formulation described herein was applied to an Indica inbred rice variety transplanted, in West Java, Indonesia during a rice yellow stem borer *Scirpophaga incertulas* infestation. Application timing occurred at peak egg hatch and performed using an unmanned drone aircraft from DJI manufacturer, model Agras MG 1-P. The drone applied SC formulations and control treatment of Prevathon^{®} insect control, at the rates indicated. The unmanned drone was flown at a speed of 25.1 km/hour, at a height of 1.5m, and applied the products within a 4m swath at a flowrate of 1.04 L/minute. Only one application was made using a spray volume of approximately 30.3 L/ha that included a tank mix of water and the respectively identified products. Nothing else was added to the tank. The experiment used a single 150 m² large plot design. Evaluations of treatment efficacy were made at 3, 7,10,14, 21, and 28 days after application. At each evaluation date the % of "dead heart*" damage (larval feeding damage causing death of the central leaf whorl at the vegetative stage) was assessed in all treatments including the untreated check (UTC). The results are reported in Table 9 and 10 below.

SC formulation composition 5E (see, Table 2) comprising chlorantraniliprole was prepared, wherein all amounts are reported as percent of the total formulation (% w/w). A transplanted rice crop was treated as described above in [0234]. A control treatment comprising Prevathon^{®} 50SC insect control was also included in the studies. The results are reported in Tables 9 and 10 below. (*"gah"* means *"grams of active ingredient per hectare"*)

**Table 9**

| Days after application | % Deadheart Evaluation | | | |
|---|---|---|---|---|
| | Composition 5E 15 gah | Composition 5E 30 gah | Prevathon^{®} 50SC insect control 30 gah | UTC |
| 3 | 8.9 | 6.1 | 4.5 | 11.1 |
| 7 | 15.5 | 12.7 | 12.6 | 25.2 |
| 10 | 17.4 | 15.0 | 14.6 | 31.3 |
| 14 | 18.9 | 13.8 | 16.0 | 35.8 |
| 21 | 14.1 | 14.1 | 14.5 | 33.5 |
| 28 | 11.8 | 11.8 | 12.5 | 29.2 |

**Table 10 (% of Control)**

| Days after application | % Deadheart Evaluation | | |
|---|---|---|---|
| | Composition 5E 15 gah | Composition 5E 30 gah | Prevathon^{®} 50SC insect control 30 gah |
| 7 | 38.4 | 49.4 | 50.1 |
| 10 | 44.2 | 52.1 | 53.4 |
| 14 | 47.1 | 61.6 | 55.4 |
| 21 | 48.5 | 59.0 | 56.0 |
| 28 | 44.3 | 59.5 | 57.2 |

The results indicate that there was no significant difference in the efficacy of the composition 5E treatment, compared with the control treatment., applied at 30 grams of active per hectare.

This written description uses examples to illustrate the present disclosure, including the best mode, and also to enable any person skilled in the art to practice the disclosure, including making and using any devices or systems and performing any incorporated methods.

## Claims

1. An agrochemical suspension concentrate composition comprising:
(i) a pesticidal active ingredient at a concentration from about 10 wt% to about 60 wt% selected from the group consisting of chlorantraniliprole, cyantraniliprole, tetrachlorantraniliprole, bromoantraniliprole, dichlorantraniliprole, tetraniliprole, cyclaniliprole, cyhalodiamide, flubendiamide, and combinations thereof, or selected from indoxacarb, N-(1-methylcyclopropyl)-2-(3-pyridinyl)-2H-indazole-4-carboxamide, Fluindapyr, Flutriafol, Tetflupyrolimet, 5-chloro-2-[3-chloro-2-[3-(difluoromethyl)-5-isoxazolyl]phenoxy]-pyrimidine, Beflubutamide-M, Bixlozone, Sulfentrazone, and combinations thereof;
(ii) at least one dispersant at a concentration from about 0.1 wt% to about 2 wt% selected from sulfonated aromatic polymer sodium salts, alkyl naphthalene sulfonate condensate sodium salts, alkyl naphthalene sulfonates, alkyl naphthalene sulfonate salts, naphthalene sulfonate salts, naphthalene sulfonate condensates, naphthalene sulfonate-formaldehyde condensates, naphthalenesulfonic acid polymers with formaldehyde and sodium, naphthalene sulfonate condensate sodium salts, alkyl naphthalene sulfonate-formaldehyde condensates, alkyl naphthalene sulfonate-formaldehyde condensate salts, and combinations thereof, or selected from sodium lignosulfonate, calcium lignosulfonate, lignosulfonic acid sodium salt, lignosulfonic acid, and combinations thereof;
(iii) a gemini surfactant, wherein the gemini surfactant comprises two polar groups selected from alcohols, halogens, amines, phosphates, sulfates, sulfonates, and carboxylates and two hydrophobic chains selected from branched or unbranched C₁-C₁₂ alkyl, branched or unbranched C₂-C₁₂ alkenyl, and branched or unbranched C₂-C₁₂ alkynyl; and
(iv) optionally at least one adjuvant;
wherein the weight ratio of the dispersant to the gemini surfactant is from about 1:1 to about 20:1 or from about 1:2 to about 1:20,
and wherein the term "about" in claims means plus or minus 10 % of the stated value.

2. The composition of claim 1 wherein the concentration of the pesticidal active ingredient is from about 30 wt% to about 60 wt%, or from about 45 wt% to about 55 wt%.

3. The composition of claim 1 wherein the weight ratio of the dispersant to the gemini surfactant is from about 4:1 to about 15:1, or from about 1:4 to about 1:15.

4. The composition of claim 1, wherein the pesticidal active ingredient is selected from chlorantraniliprole, cyantraniliprole, tetrachlorantraniliprole, bromoantraniliprole, dichlorantraniliprole, tetraniliprole, cyclaniliprole, cyhalodiamide, flubendiamide, and combinations thereof.

5. The composition of claim 4, wherein the pesticidal active ingredient is chlorantraniliprole, or wherein the pesticidal active ingredient is cyantraniliprole.

6. The composition of any of claims 1 to 5, wherein the composition further comprises an additional pesticidal active ingredient selected from abamectin, acephate, acequinocyl, acetamiprid, acrinathrin, acynonapyr, afidopyropen, ([(3S,4R,4aR,6S,6aS,12R,12aS,12bS)-3-[(cyclopropylcarbonyl)oxy]-1,3,4,4a,5,6,6a,12,12a,12b-decahydro-6,12-dihydroxy-4,6a,12b-trimethyl-11-oxo-9-(3-pyridinyl)-2H,11H-naphtho[2,1-b]pyrano[3,4-e]pyran-4-yl]methyl cyclopropanecarboxylate), amidoflumet, amitraz, avermectin, azadirachtin, azinphos methyl, benfuracarb, bensultap, benzpyrimoxan, bifenthrin, kappa-bifenthrin, bifenazate, bistrifluron, borate, broflanilide, buprofezin, cadusafos, carbaryl, carbofuran, cartap, carzol, chlorantraniliprole, chlorfenapyr, chlorfluazuron, chloroprallethrin, chlorpyrifos, chlorpyrifos-e, chlorpyrifos-methyl, chromafenozide, clofentezin, chloroprallethrin, clothianidin, cyantraniliprole, (3-bromo-1-(3-chloro-2-pyridinyl)-N-[4-cyano-2-methyl-6-[(methylamino)carbonyl]phenyl]-1H-pyrazole-5-carboxamide), cyclaniliprole (3-bromo-N-[2-bromo-4-chloro-6-[[(1-cyclopropylethyl)amino]carbonyl]phenyl]-1-(3-chloro-2-pyridinyl)-1H-pyrazole-5-carboxamide), cycloprothrin, cycloxaprid ((5S,8R)-1-[(6-chloro-3-pyridinyl)methyl]-2,3,5,6,7,8-hexahydro-9-nitro-5,8-Epoxy-1H-imidazo[1,2-a]azepine), cyenopyrafen, cyflumetofen, cyfluthrin, beta cyfluthrin, cyhalodiamide, cyhalothrin, gamma-cyhalothrin, lambda-cyhalothrin, cypermethrin, alpha-cypermethrin, zeta-cypermethrin, cyromazine, deltamethrin, diafenthiuron, diazinon, dicloromezotiaz, dieldrin, diflubenzuron, dimefluthrin, dimehypo, dimethoate, dimpropyridaz, dinotefuran, diofenolan, emamectin, emamectin benzoate, endosulfan, esfenvalerate, ethiprole, etofenprox, epsilon-metofluthrin, etoxazole, fenbutatin oxide, fenitrothion, fenothiocarb, fenoxycarb, fenpropathrin, fenvalerate, fipronil, flometoquin (2-ethyl-3,7-dimethyl-6-[4-(trifluoromethoxy)phenoxy]-4-quinolinyl methyl carbonate), flonicamid, fluazaindolizine, flubendiamide, flucythrinate, flufenerim, flufenoxuron, flufenoxystrobin (methyl (αE)-2-[[2-chloro-4-(trifluoromethyl)phenoxy]methyl]-α-(methoxymethylene)benzeneacetate), fluensulfone (5-chloro-2-[(3,4,4-trifluoro-3-buten-1-yl)sulfonyl]thiazole), fluhexafon, fluopyram, flupiprole (1-[2,6-dichloro-4-(trifluoromethyl)phenyl]-5-[(2-methyl-2-propen-1-yl)amino]-4-[(trifluoromethyl)sulfinyl]-1H-pyrazole-3-carbonitrile), flupyradifurone (4-[[(6-chloro-3-pyridinyl)methyl](2,2-difluoroethyl)amino]-2(5H)-furanone), flupyrimin, fluvalinate, tau fluvalinate, fluxametamide, fonophos, formetanate, fosthiazate, gamma-cyhalothrin, halofenozide, heptafluthrin ([2,3,5,6-tetrafluoro-4-(methoxymethyl)phenyl]methyl 2,2-dimethyl-3-[(1Z)-3,3,3-trifluoro-1-propen-1-yl]cyclopropanecarboxylate), hexaflumuron, hexythiazox, hydramethylnon, imidacloprid, indoxacarb, insecticidal soaps, isofenphos, isocycloseram, kappa-tefluthrin, lambda-cyhalothrin, lufenuron, malathion, meperfluthrin ([2,3,5,6-tetrafluoro-4-(methoxymethyl)phenyl]methyl (1R,3S)-3-(2,2-dichloroethenyl)-2,2-dimethylcyclopropanecarboxylate), metaflumizone, metaldehyde, methamidophos, methidathion, methiocarb, methomyl, methoprene, methoxychlor, metofluthrin, methoxyfenozide, epsilon-metofluthrin, epsilon-momfluorothrin, monocrotophos, monofluorothrin ([2,3,5,6-tetrafluoro-4-(methoxymethyl)phenyl]methyl 3-(2-cyano-1-propen-1-yl)-2,2-dimethylcyclopropanecarboxylate), nicotine, nitenpyram, nithiazine, novaluron, noviflumuron, *N*-[1,1-dimethyl-2-(methylthio)ethyl]-7-fluoro-2-(3-pyridinyl)-2*H*-indazole-4-carboxamide, N-[1,1-dimethyl-2-(methylsulfinyl)ethyl]-7-fluoro-2-(3-pyridinyl)-2*H*-indazole-4-carboxamide, *N*-[1,1-dimethyl-2-(methylsulfonyl)ethyl]-7-fluoro-2-(3-pyridinyl)-2H-indazole-4-carboxamide, *N*-(1-methylcyclopropyl)-2-(3-pyridinyl)-2H-indazole-4-carboxamide, and*N*-[1-(difluoromethyl)cyclopropyl]-2-(3-pyridinyl)-2*H*-indazole-4-carboxamide, oxamyl, oxazosulfyl, parathion, parathion methyl, permethrin, phorate, phosalone, phosmet, phosphamidon, pirimicarb, profenofos, profluthrin, propargite, protrifenbute, pyflubumide (1,3,5-trimethyl-N-(2-methyl-1-oxopropyl)-N-[3-(2-methylpropyl)-4-[2,2,2-trifluoro-1-methoxy-1-(trifluoromethyl)ethyl]phenyl]-1H-pyrazole-4-carboxamide), pymetrozine, pyrafluprole, pyrethrin, pyridaben, pyridalyl, pyrifluquinazon, pyriminostrobin (methyl (αE)-2-[[[2-[(2,4-dichlorophenyl)amino]-6-(trifluoromethyl)-4-pyrimidinyl]oxy]methyl]-α-(methoxymethylene)benzeneacetate), pydiflumetofen, pyriprole, pyriproxyfen, rotenone, ryanodine, silafluofen, spinetoram, spinosad, spirodiclofen, spiromesifen, spiropidion, spirotetramat, sulprofos, sulfoxaflor (N-[methyloxido[1-[6-(trifluoromethyl)-3-pyridinyl]ethyl]-λ4-sulfanylidene]cyanamide), tebufenozide, tebufenpyrad, teflubenzuron, tefluthrin, kappa-tefluthrin, terbufos, tetrachlorantraniliprole, tetrachlorvinphos, tetramethrin, tetramethylfluthrin ([2,3,5,6-tetrafluoro-4-(methoxymethyl)phenyl]methyl 2,2,3,3-tetramethylcyclopropanecarboxylate), tetraniliprole, thiacloprid, thiamethoxam, thiodicarb, thiosultap-sodium, tioxazafen (3-phenyl-5-(2-thienyl)-1,2,4-oxadiazole), tolfenpyrad, tralomethrin, triazamate, trichlorfon, triflumezopyrim (2,4-dioxo-1-(5-pyrimidinylmethyl)-3-[3-(trifluoromethyl)phenyl]-2H- pyrido[1,2-a]pyrimidinium inner salt), triflumuron, tyclopyrazoflor, zeta-cypermethrin, Bacillus thuringiensis delta-endotoxins, entomopathogenic bacteria, entomopathogenic viruses, entomopathogenic fungi, and combinations thereof.

7. The composition of any of claims 1 to 6, wherein the dispersant is selected from sulfonated aromatic polymer sodium salts, alkyl naphthalene sulfonate condensate sodium salts, alkyl naphthalene sulfonates, alkyl naphthalene sulfonate salts, naphthalene sulfonate salts, naphthalene sulfonate condensates, naphthalene sulfonate-formaldehyde condensates, naphthalenesulfonic acid polymers with formaldehyde and sodium, naphthalene sulfonate condensate sodium salts, alkyl naphthalene sulfonate-formaldehyde condensates, alkyl naphthalene sulfonate-formaldehyde condensate salts, and combinations thereof.

8. The composition of claim 7, wherein the dispersant is a sodium alkyl naphthalene sulfonate-formaldehyde condensate.

9. The composition of any of claims 1 to 6, wherein the dispersant is selected from sodium lignosulfonate, calcium lignosulfonate, lignosulfonic acid sodium salt, lignosulfonic acid, and combinations thereof.

10. The composition of claim 1, wherein the weight ratio of the pesticidal active ingredient to the dispersant is from about 1:1 to about 25:1.

11. The composition of any of claims 1 to 10 wherein the gemini surfactant is 2, 5, 8,11 tetramethyl 6 dodecyn-5,8 diol ethoxylate or 2,4,7,9-tetramethyldec-5-yne-4,7-diol.

12. Use of a composition according to any preceding claim for the treatment of seeds.

13. Use according to claim 12, wherein the treatment involves applying a layer of a coating comprising the composition to the seeds.

14. A seed which comprises a composition according to any of claims 1 to 11.

15. The seed according to claim 14, wherein the seed comprises a layer of a coating comprising the composition, and optionally additional layers.

## Patentansprüche

1. Agrochemische Suspensionskonzentratzusammensetzung, umfassend:
(i) einen pestiziden Wirkstoff in einer Konzentration von etwa 10 Gew.-% bis etwa 60 Gew.-%, ausgewählt aus der Gruppe bestehend aus Chlorantraniliprol, Cyantraniliprol, Tetrachlorantraniliprol, Bromantraniliprol, Dichlorantraniliprol, Tetraniliprol, Cylaniliprol, Cyhalodiamid, Flubendiamid und Kombinationen davon oder ausgewählt aus Indoxacarb, N-(1-Methylcyclopropyl)-2-(3-pyridinyl)-2H-indazol-4-carboxamid, Fluindapyr, Flutriafol, Tetflupyrolimet, 5-Chlor-2-[3-chlor-2-[3-(difluormethyl)-5-isoxazolyl]phenoxy]pyrimidin, Beflubutamid-M, Bixlozon, Sulfentrazon und Kombinationen davon;
(ii) mindestens ein Dispergiermittel in einer Konzentration von etwa 0,1 Gew.-% bis etwa 2 Gew.-%, ausgewählt aus Natriumsalzen von sulfonierten aromatischen Polymeren, Natriumsalzen von Alkylnaphthalinsulfonatkondensaten, Alkylnaphthalinsulfonaten, Alkylnaphthalinsulfonatsalzen, Naphthalinsulfonatsalzen, Naphthalinsulfonatkondensaten, Naphthalinsulfonat-Formaledhyd-Kondensaten, Naphthalinsulfonsäurepolymeren mit Formaldehyd und Natrium, Natriumsalzen von Naphthalinsulfonatkondensaten, Alkylnaphthalinsulfonat-Formaldehyd-Kondensaten, Salzen von Alkylnaphthalinsulfonat-Formaldehyd-Kondensaten und Kombinationen davon oder ausgewählt aus Natriumlignosulfonat, Calciumlignosulfonat, Lignosulfonsäure-Natriumsalz, Lignosulfonsäure und Kombinationen davon;
(iii) ein Gemini-Tensid, wobei das Gemini-Tensid zwei polare Gruppen, die aus Alkoholen, Halogenen, Aminen, Phosphaten, Sulfaten, Sulfonaten und Carboxylaten ausgewählt sind, und zwei hydrophobe Ketten, die aus verzweigtem oder unverzweigtem C₁-C₁₂-Alkyl, verzweigtem oder unverzweigtem C₂-C₁₂-Alkenyl und verzweigtem oder unverzweigtem C₂-C₁₂-Alkinyl ausgewählt sind, umfasst; und
(iv) gegebenenfalls mindestens ein Adjuvans;
wobei das Gewichtsverhältnis von Dispergiermittel zu gemini-Tensid etwa 1:1 bis etwa 20:1 oder etwa 1:2 bis etwa 1:20 beträgt und wobei der Begriff "etwa" in den Ansprüchen plus oder minus 10 % des angegebenen Werts bedeutet.

2. Zusammensetzung nach Anspruch 1, wobei die Konzentration des pestiziden Wirkstoffs etwa 30 Gew.-% bis etwa 60 Gew.-% oder etwa 45 Gew.-% bis etwa 55 Gew.-% beträgt.

3. Zusammensetzung nach Anspruch 1, wobei das Gewichtsverhältnis von Dispergiermittel zu gemini-Tensid etwa 4:1 bis etwa 15:1 oder etwa 1:4 bis etwa 1:15 beträgt.

4. Zusammensetzung nach Anspruch 1, wobei der pestizide Wirkstoff aus Chlorantraniliprol, Cyantraniliprol, Tetrachlorantraniliprol, Bromantraniliprol, Dichlorantraniliprol, Tetraniliprol, Cylaniliprol, Cyhalodiamid, Flubendiamid und Kombinationen davon ausgewählt ist.

5. Zusammensetzung nach Anspruch 4, wobei es sich bei dem pestiziden Wirkstoff um Chlorantraniliprol handelt oder wobei es sich bei dem pestiziden Wirkstoff um Cyantraniliprol handelt.

6. Zusammensetzung nach einem der Ansprüche 1 bis 5, wobei die Zusammensetzung ferner einen zusätzlichen pestiziden Wirkstoff umfasst, der aus Abamectin, Acephat, Acequinocyl, Acetamiprid, Acrinathrin, Acynonapyr, Afidopyropen, (Cyclopropancarbonsäure[(3S,4R,4aR,6S,6aS,12R,12aS,12bS )-3-[(cyclopropylcarbonyl)oxy]-1,3,4,4a,5,6,6a,12,12a,12b-decahydro-6,12-dihydroxy-4,6a,12b-trimethyl-11-oxo-9-(3-pyridinyl)-2H,11H-naphtho[2,1-b]pyrano[3,4-e]pyran-4-yl]methylester), Amidoflumet, Amitraz, Avermectin, Azadirachtin, Azinphos-methyl, Benfuracarb, Bensultap, Benzpyrimoxan, Bifenthrin, kappa-Bifenthrin, Bifenazat, Bistrifluron, Borat, Broflanilid, Buprofezin, Cadusafos, Carbaryl, Carbofuran, Cartap, Carzol, Chlorantraniliprol, Chlorfenapyr, Chlorfluazuron, Chloroprallethrin, Chlorpyrifos, Chlorpyrifos-e, Chlorpyrifos-methyl, Chromafenozid, Clofentezin, Chloroprallethrin, Clothianidin, Cyantraniliprol, (3-Brom-1-(3-chlor-2-pyridinyl)-N-[4-cyano-2-methyl-6-[(methylamino)carbonyl]phenyl]-1H-pyrazol-5-carboxamid), Cyclaniliprol (3-Brom-N-[2-brom-4-chlor-6-[[(1-cyclopropylethyl)amino]carbonyl]phenyl]-1-(3-chlor-2-pyridinyl)-1H-pyrazol-5-carboxamid), Cycloprothrin, Cycloxaprid ((5S,8R)-1-[(6-Chlor-3-pyridinyl)methyl]-2,3,5,6,7,8-hexahydro-9-nitro-5,8-epoxy-1H-imidazo[1,2-a]azepin), Cyenopyrafen, Cyflumetofen, Cyfluthrin, beta-Cyfluthrin, Cyhalodiamid, Cyhalothrin, gamma-Cyhalothrin, lambda-Cyhalothrin, Cypermethrin, alpha-Cypermethrin, zeta-Cypermethrin, Cyromazin, Deltamethrin, Diafenthiuron, Diazinon, Dicloromezotiaz, Dieldrin, Diflubenzuron, Dimefluthrin, Dimehypo, Dimethoat, Dimpropyridaz, Dinotefuran, Diofenolan, Emamectin, Emamectin-benzoat, Endosulfan, Esfenvalerat, Ethiprol, Etofenprox, epsilon-Metofluthrin, Etoxazol, Fenbutatinoxid, Fenitrothion, Fenothiocarb, Fenoxycarb, Fenpropathrin, Fenvalerat, Fipronil, Flometoquin (Kohlensäure-2-ethyl-3,7-dimethyl-6-[4-(trifluormethoxy)phenoxy]-4-chinolinylestermethylester), Flonicamid, Fluazaindolizin, Flubendiamid, Flucythrinat, Flufenerim, Flufenoxuron, Flufenoxystrobin ((αE)-2-[[2-Chlor-4-(trifluormethyl)phenoxy]methyl]-α-(methoxymethylen)benzolessigsäuremethylester), Fluensulfon (5-Chlor-2-[(3,4,4-trifluor-3-buten-1-yl)sulfonyl]thiazol), Fluhexafon, Fluopyram, Flupiprol (1-[2,6-Dichlor-4-(trifluormethyl)phenyl]-5-[(2-methyl-2-propen-1-yl)amino]-4-[(trifluormethyl)sulfinyl]-1H-pyrazol-3-carbonitril), Flupyradifuron (4-[[(6-Chlor-3-pyridinyl)methyl] (2,2-difluorethyl)amino]-2(5H)-furanon), Flupyrimin, Fluvalinat, tau-Fluvalinat, Fluxametamid, Fonophos, Formetanat, Fosthiazat, gamma-Cyhalothrin, Halofenozid, Heptafluthrin (2,2-Dimethyl-3-[(1Z)-3,3,3-trifluor-1-propen-1-yl]cyclopropanecarbonsäure[2,3,5,6-Tetrafluor-4-(methoxymethyl)phenyl]methylester), Hexaflumuron, Hexythiazox, Hydramethylnon, Imidacloprid, Indoxacarb, insektiziden Seifen, Isofenphos, Isocycloseram, kappa-Tefluthrin, lambda-Cyhalothrin, Lufenuron, Malathion, Meperfluthrin ((1R,3S)-3-(2,2-Dichlorethenyl)-2,2-dimethylcyclopropancarbonsäure[2,3,5,6-tetrafluor-4-(methoxymethyl)phenyl]methylester), Metaflumizon, Metaldehyd, Methamidophos, Methidathion, Methiocarb, Methomyl, Methopren, Methoxychlor, Metofluthrin, Methoxyfenozid, epsilon-Metofluthrin, epsilon-Momfluorothrin, Monocrotophos, Monofluorothrin (3-(2-Cyano-1-propen-1-yl)-2,2-dimethylcyclopropancarbonsäure[2,3,5,6-tetrafluor-4-(methoxymethyl)phenyl]methylester), Nicotin, Nitenpyram, Nithiazin, Novaluron, Noviflumuron, N-[1,1-Dimethyl-2-(methylthio)ethyl]-7-fluor-2-(3-pyridinyl)-2H-indazol-4-carboxamid, N-[1,1-Dimethyl-2-(methylsulfinyl)ethyl]-7-fluor-2-(3-pyridinyl)-2H-indazol-4-carboxamid, N-[1,1-Dimethyl-2-(methylsulfonyl)ethyl]-7-fluor-2-(3-pyridinyl)-2H-indazol-4-carboxamid, N-(1-Methylcyclopropyl)-2-(3-pyridinyl)-2H-indazol-4-carboxamid und N-[1-(Difluormethyl)cyclopropyl]-2-(3-pyridinyl)-2H-indazol-4-carboxamid, Oxamyl, Oxazosulfyl, Parathion, Parathion-methyl, Permethrin, Phorat, Phosalon, Phosmet, Phosphamidon, Pirimicarb, Profenofos, Profluthrin, Propargit, Protrifenbut, Pyflubumid (1,3,5-Trimethyl-N-(2-methyl-1-oxopropyl)-N-[3-(2-methylpropyl)-4-[2,2,2-trifluor-1-methoxy-1-(trifluormethyl)ethyl]phenyl]-1H-pyrazol-4-carboxamid), Pymetrozin, Pyrafluprol, Pyrethrin, Pyridaben, Pyridalyl, Pyrifluquinazon, Pyriminostrobin ((αE)-2-[[[2-[(2,4-Dichlorphenyl)amino]-6-(trifluormethyl)-4-pyrimidinyl]oxy]methyl]-α-(methoxymethylen)benzolessigsäuremethylester), Pydiflumetofen, Pyriprol, Pyriproxyfen, Rotenon, Ryanodin, Silafluofen, Spinetoram, Spinosad, Spirodiclofen, Spiromesifen, Spiropidion, Spirotetramat, Sulprofos, Sulfoxaflor (N-[Methyloxido[1-[6-(trifluormethyl)-3-pyridinyl]ethyl]-λ4-sulfanyliden]cyanamid), Tebufenozid, Tebufenpyrad, Teflubenzuron, Tefluthrin, kappa-Tefluthrin, Terbufos, Tetrachlorantraniliprol, Tetrachlorvinphos, Tetramethrin, Tetramethylfluthrin (2,2,3,3-Tetramethylcyclopropancarbonsäure[2,3,5,6-tetrafluor-4-(methoxymethyl)phenyl]methylester), Tetraniliprol, Thiacloprid, Thiamethoxam, Thiodicarb, Thiosultap-Natrium, Tioxazafen (3-Phenyl-5-(2-thienyl)-1,2,4-oxadiazol), Tolfenpyrad, Tralomethrin, Triazamat, Trichlorfon, Triflumezopyrim (inneres 2,4-Dioxo-1-(5-pyrimidinylmethyl)-3-[3-(trifluormethyl)phenyl]-2H-pyrido[1,2-a]pyrimidinium-Salz), Triflumuron, Tyclopyrazoflor, zeta-Cypermethrin, Bacillusthuringiensis-Delta-Endotoxinen, entomopathogenen Bakterien, entomopathogenen Viren, entomopathogenen Pilzen und Kombinationen davon ausgewählt ist.

7. Zusammensetzung nach einem der Ansprüche 1 bis 6, wobei das Dispergiermittel aus Natriumsalzen von sulfonierten aromatischen Polymeren, Natriumsalzen von Alkylnaphthalinsulfonatkondensaten, Alkylnaphthalinsulfonaten, Alkylnaphthalinsulfonatsalzen, Naphthalinsulfonatsalzen, Naphthalinsulfonatkondensaten, Naphthalinsulfonat-Formaledhyd-Kondensaten, Naphthalinsulfonsäurepolymeren mit Formaldehyd und Natrium, Natriumsalzen von Naphthalinsulfonatkondensaten, Salzen von Alkylnaphthalinsulfonat-Formaldehyd-Kondensaten und Kombinationen davon ausgewählt ist.

8. Zusammensetzung nach Anspruch 7, wobei es sich bei dem Dispergiermittel um ein Natriumalkylnaphthalinsulfonat-Formaldehyd-Kondensat handelt.

9. Zusammensetzung nach einem der Ansprüche 1 bis 6, wobei das Dispergiermittel aus Natriumlignosulfonat, Calciumlignosulfonat, Lignosulfonsäurenatriumsalz, Lignosulfonsäure und Kombinationen davon ausgewählt ist.

10. Zusammensetzung nach Anspruch 1, wobei das Gewichtsverhältnis von pestizidem Wirkstoffs zu Dispergiermittel etwa 1:1 bis etwa 25:1 beträgt.

11. Zusammensetzung nach einem der Ansprüche 1 bis 10, wobei es sich bei dem Gemini-Tensid um 2,5,8,11-Tetramethyl-6-dodecin-5,8-diolethoxylat oder 2,4,7,9-Tetramethyldec-5-in-4,7-diol handelt.

12. Verwendung einer Zusammensetzung nach einem der vorhergehenden Ansprüche zur Behandlung von Samen.

13. Verwendung nach Anspruch 12, wobei die Behandlung das Aufbringen einer Schicht eines Überzugs, der die Zusammensetzung umfasst, auf die Samen umfasst.

14. Samen, der eine Zusammensetzung nach einem der Ansprüche 1 bis 11 umfasst.

15. Samen nach Anspruch 14, wobei der Samen eine Schicht eines Überzugs, der die Zusammensetzung umfasst, und gegebenenfalls zusätzliche Schichten umfasst.

## Revendications

1. Composition de concentré en suspension agrochimique comprenant :
(i) un principe actif pesticide à une concentration d'environ 10 % en poids à environ 60 % en poids choisi dans le groupe constitué par le chlorantraniliprole, le cyantraniliprole, le tétrachlorantraniliprole, le bromoantraniliprole, le dichlorantraniliprole, le tétraniliprole, le cyclaniliprole, le cyhalodiamide, le flubendiamide, et des combinaisons de ceux-ci, ou choisi parmi l'indoxacarb, le N-(1-méthylcyclopropyl)-2-(3-pyridinyl)-2H-indazole-4-carboxamide, le fluindapyr, le flutriafol, le tetflupyrolimet, la 5-chloro-2-[3-chloro-2-[3-(difluorométhyl)-5-isoxazolyl]phénoxy]-pyrimidine, le béflubutamide-M, la bixlozone, la sulfentrazone, et des combinaisons de ceux-ci ;
(ii) au moins un dispersant à une concentration d'environ 0,1 % en poids à environ 2 % en poids choisi parmi les sels de sodium de polymères aromatiques sulfonés, les sels de sodium de condensats d'alkylnaphtalènesulfonate, les alkylnaphtalènesulfonates, les sels d'alkylnaphtalènesulfonate, les condensats de naphtalènesulfonate, les condensats de naphtalènesulfonate-formaldéhyde, les polymères d'acide naphtalènesulfonique avec du formaldéhyde et du sodium, les sels de sodium de condensats de naphtalènesulfonate, les condensats d'alkylnaphtalènesulfonate-formaldéhyde, les sels de condensats d'alkylnaphtalènesulfonate-formaldéhyde et des combinaisons de ceux-ci, ou choisis parmi le lignosulfonate de sodium, le lignosulfonate de calcium, le sel de sodium d'acide lignosulfonique, l'acide lignosulfonique, et des combinaisons de ceux-ci ;
(iii) un tensioactif géminé, le tensioactif géminé comprenant deux groupes polaires choisis parmi des alcools, des halogènes, des amines, des phosphates, des sulfates, des sulfonates et des carboxylates et deux chaînes hydrophobes choisies parmi un groupe alkyle en C₁-C₁₂ ramifié ou non ramifié, alcényle en C₂-C₁₂ ramifié ou non ramifié et alcynyle en C₂-C₁₂ ramifié ou non ramifié ; et
(iv) facultativement au moins un adjuvant ;
dans laquelle le rapport pondéral du dispersant au tensioactif géminé est d'environ 1:1 à environ 20:1 ou d'environ 1:2 à environ 1:20, et le terme « environ » dans les revendications signifie plus ou moins 10 % de la valeur indiquée.

2. Composition selon la revendication 1, dans laquelle la concentration du principe actif pesticide est d'environ 30 % en poids à environ 60 % en poids, ou d'environ 45 % en poids à environ 55 % en poids.

3. Composition selon la revendication 1, dans laquelle le rapport pondéral du dispersant au tensioactif géminé est d'environ 4:1 à environ 15:1, ou d'environ 1:4 à environ 1:15.

4. Composition selon la revendication 1, dans laquelle le principe actif pesticide est choisi parmi le chlorantraniliprole, le cyantraniliprole, le tétrachlorantraniliprole, le bromoantraniliprole, le dichlorantraniliprole, le tétraniliprole, le cyclaniliprole, le cyhalodiamide, le flubendiamide, et des combinaisons de ceux-ci.

5. Composition selon la revendication 4, dans laquelle le principe actif pesticide est le chlorantraniliprole, ou dans laquelle le principe actif pesticide est le cyantraniliprole.

6. Composition selon l'une quelconque des revendications 1 à 5, la composition comprenant en outre un principe actif pesticide supplémentaire choisi parmi les suivants : abamectine, acéphate, acéquinocyl, acétamipride, acrinathrine, acynonapyr, afidopyropène, cyclopropanecarboxylate de ([(3S,4R,4aR,6S,6aS,12R,12aS,12bS)-3-[(cyclopropylcarbonyl)oxy]-1,3,4,4a,5,6,6a,12,12a,12b-décahydro-6,12-dihydroxy-4,6a,12b-triméthyl-11-oxo-9-(3-pyridinyl)-2H,11H-naphto[2,1-b]pyrano[3,4-e]pyran-4-yl]méthyle), amidoflumet, amitraz, avermectine, azadirachtine, azinphos-méthyl, benfuracarbe, bensultap, benzpyrimoxan, bifenthrine, kappa-bifenthrine, bifénazate, bistrifluron, borate, broflanilide, buprofézine, cadusafos, carbaryl, carbofuran, cartap, carzol, chlorantraniliprole, chlorfénapyr, chlorfluazuron, chloropralléthrine, chlorpyrifos, chlorpyrifos-e, chlorpyrifos-méthyl, chromafénozide, clofentézine, chloropralléthrine, clothianidine, cyantraniliprole, (3-bromo-1-(3-chloro-2-pyridinyl)-N-[4-cyano-2-méthyl-6-[(methylamino)carbonyl]phényl]-1H-pyrazole-5-carboxamide), cyclaniliprole (3-bromo-N-[2-bromo-4-chloro-6-[[(1-cyclopropylethyl)amino]carbonyl]phenyl]-1-(3-chloro-2-pyridinyl)-1H-pyrazole-5-carboxamide), cycloprothrine, cycloxaprid ((5S,8R)-1-[(6-chloro-3-pyridinyl)méthyl]-2,3,5,6,7,8-hexahydro-9-nitro-5,8-Epoxy-1H-imidazo[1,2-a]azepine), cyénopyrafène, cyflumétofène, cyfluthrine, bêta-cyfluthrine, cyhalodiamide, cyhalothrine, gamma-cyhalothrine, lambda-cyhalothrine, cyperméthrine, alpha-cyperméthrine, zêta-cyperméthrine, cyromazine, deltaméthrine, diafenthiuron, diazinon, dicloromézotiaz, dieldrine, diflubenzuron, diméfluthrine, diméhypo, diméthoate, dimpropyridaz, dinotéfurane, diofénolane, émamectine, émamectine benzoate, endosulfane, esfenvalérate, éthiprole, étofenprox, epsilon-métofluthrine, étoxazole, oxyde de fenbutatine, fénitrothion, fénothiocarbe, fénoxycarbe, fenpropathrine, fenvalérate, fipronil, flométoquine (2-éthyl-3,7-diméthyl-6-[4-(trifluorométhoxy)phénoxy]-4-quinoléinylméthylcarbonate), flonicamide, fluazaindolizine, flubendiamide, flucythrinate, flufénérime, flufénoxuron, flufénoxystrobine ((αE)-2-[[2-chloro-4-(trifluorométhyl)phénoxy]méthyl]-α-(méthoxyméthylène)benzèneacétate de méthyle), fluensulfone (5-chloro-2-[(3,4,4-trifluoro-3-butén-1-yl)sulfonyl]thiazole), fluhexafon, fluopyram, flupiprole (1-[2,6-dichloro-4-(trifluorométhyl)phényl]-5-[(2-méthyl-2-propén-1-yl)amino]-4-[(trifluorométhyl)sulfinyl]-1H-pyrazole-3-carbonitrile), flupyradifurone (4-[[(6-chloro-3-pyridinyl)méthyl] (2,2-difluoroéthyl)amino]-2(5H)-furanone), flupyrimine, fluvalinate, tau-fluvalinate, fluxamétamide, fonophos, formétanate, fosthiazate, gamma-cyhalothrine, halofénozide, heptafluthrine (2,2-diméthyl-3-[(1Z)-3,3,3-trifluoro-1-propén-1-yl]cyclopropanecarboxylate de [2,3,5,6-tétrafluoro-4-(méthoxyméthyl)phényl]méthyle), hexaflumuron, hexythiazox, hydraméthylnon, imidaclopride, indoxacarbe, savons insecticides, isofenphos, isocycloséram, kappa-téfluthrine, lambda-cyhalothrine, lufénuron, malathion, méperfluthrine ((1R,3S)-3-(2,2-dichloroéthényl)-2,2-diméthylcyclopropanecarboxylate de [2,3,5,6-tétrafluoro-4-(méthoxyméthyl)phényl]méthyle), métaflumizone, métaldéhyde, méthamidophos, méthidathion, méthiocarbe, méthomyle, méthoprène, méthoxychlore, métofluthrine, méthoxyfénozide, epsilon-métofluthrine, epsilon-momfluorothrine, monocrotophos, monofluorothrine (3-(2-cyano-1-propén-1-yl)-2,2-diméthylcyclopropanecarboxylate de [2,3,5,6-tétrafluoro-4-(méthoxyméthyl)phényl]méthyle), nicotine, nitenpyram, nithiazine, novaluron, noviflumuron, *N*-[1,1-diméthyl-2-(méthylthio)éthyl]-7-fluoro-2-(3-pyridinyl)-2*H-*indazole-4-carboxamide, *N*-[1,1-diméthyl-2-(méthylsulfinyl)éthyl]-7-fluoro-2-(3-pyridinyl)-2*H-*indazole-4-carboxamide, *N*-[1,1-diméthyl-2-(méthylsulfonyl)éthyl]-7-fluoro-2-(3-pyridinyl)-2*H-*indazole-4-carboxamide, N-(1-méthylcyclopropyl)-2-(3-pyridinyl)-2H-indazole-4-carboxamide et *N*-[1-(difluorométhyl)cyclopropyl]-2-(3-pyridinyl)-2*H-*indazole-4-carboxamide, oxamyl, oxazosulfyl, parathion, parathion-méthyl, perméthrine, phorate, phosalone, phosmet, phosphamidon, pirimicarbe, profénofos, profluthrine, propargite, protrifenbute, pyflubumide (1,3,5-triméthyl-N-(2-méthyl-1-oxopropyl)-N-[3-(2-méthylpropyl)-4-[2,2,2-trifluoro-1-méthoxy-1-(trifluorométhyl)éthyl]phényl]-1H-pyrazole-4-carboxamide), pymétrozine, pyrafluprole, pyréthrine, pyridabène, pyridalyl, pyrifluquinazone, pyriminostrobine (acétate de (αE)-2-[[[[2-[(2,4-dichlorophényl)amino]-6-(trifluorométhyl)-4-pyrimidinyl]oxy]méthyl]-α-(méthoxyméthylène)benzène), pydiflumétofène, pyriprole, pyriproxyfène, roténone, ryanodine, silafluofène, spinétoram, spinosad, spirodiclofène, spiromésifène, spiropidion, spirotétramat, sulprofos, sulfoxaflor (N-[méthyloxido[1-[6-(trifluoromethyl)-3-pyridinyl]ethyl]-λ4-sulfanylidene]cyanamide), tébufénozide, tébufenpyrad, téflubenzuron, téfluthrine, kappa-téfluthrine, terbufos, tétrachlorantraniliprole, tétrachlorvinphos, tétraméthrine, tétraméthylfluthrine (2,2,3,3-tétraméthylcyclopropanecarboxylate de [2,3,5,6-tétrafluoro-4-(méthoxyméthyl)phényl]méthyle), tétraniliprole, thiacloprid, thiaméthoxame, thiodicarbe, thiosultap-sodium, tioxazafène (3-phényl-5-(2-thiényl)-1,2,4-oxadiazole), tolfenpyrad, tralométhrine, triazamate, trichlorfon, triflumezopyrim (sel interne de 2,4-dioxo-1-(5-pyrimidinylméthyl)-3-[3-(trifluorométhyl)phényl]-2H-pyrido[1,2-a]pyrimidinium), triflumuron, tyclopyrazoflor, zêta-cyperméthrine, delta-endotoxines de Bacillus thuringiensis, bactéries entomopathogènes, virus entomopathogènes, champignons entomopathogènes, et des combinaisons de ceux-ci.

7. Composition selon l'une quelconque des revendications 1 à 6, dans laquelle le dispersant est choisi parmi les sels de sodium de polymères aromatiques sulfonés, les sels de sodium de condensats d'alkylnaphtalènesulfonate, les alkylnaphtalènesulfonates, les sels d'alkylnaphtalènesulfonate, les condensats de naphtalènesulfonate, les condensats de naphtalènesulfonate-formaldéhyde, les polymères d'acide naphtalènesulfonique avec du formaldéhyde et du sodium, les sels de sodium de condensats de naphtalènesulfonate, les condensats d'alkylnaphtalènesulfonate-formaldéhyde, les sels de condensats d'alkylnaphtalènesulfonate-formaldéhyde et des combinaisons de ceux-ci.

8. Composition selon la revendication 7, dans laquelle le dispersant est un condensat d'alkylnaphtalènesulfonate de sodium-formaldéhyde.

9. Composition selon l'une quelconque des revendications 1 à 6, dans laquelle le dispersant est choisi parmi le lignosulfonate de sodium, le lignosulfonate de calcium, le sel de sodium d'acide lignosulfonique, l'acide lignosulfonique et des combinaisons de ceux-ci.

10. Composition selon la revendication 1, dans laquelle le rapport pondéral du principe actif pesticide au dispersant est d'environ 1:1 à environ 25:1.

11. Composition selon l'une quelconque des revendications 1 à 10, dans laquelle le tensioactif géminé est l'éthoxylate de 2,5,8,11-tétraméthyl-6-dodécyne-5,8-diol éthoxylate ou le 2,4,7,9-tétraméthyldéc-5-yne-4,7-diol.

12. Utilisation d'une composition selon l'une quelconque des revendications précédentes pour le traitement de semences.

13. Utilisation selon la revendication 12, dans laquelle le traitement implique l'application d'une couche d'un enrobage comprenant la composition sur les semences.

14. Semence comprenant une composition selon l'une quelconque des revendications 1 à 11.

15. Semence selon la revendication 14, la semence comprenant une couche d'un enrobage comprenant la composition et facultativement des couches supplémentaires.
